(19) Europäisches Patentamt
European Patent Office
Office européen des brevets

(11) EP 4 171 149 A1

(12) # EUROPEAN PATENT APPLICATION
published in accordance with Art. 153(4) EPC

(43) Date of publication:
**26.04.2023 Bulletin 2023/17**

(21) Application number: **20945022.0**

(22) Date of filing: **17.07.2020**

(51) International Patent Classification (IPC):
***H04W 72/12*** *(2023.01)*

(52) Cooperative Patent Classification (CPC):
**H04W 72/12**

(86) International application number:
**PCT/CN2020/102819**

(87) International publication number:
**WO 2022/011715 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Longgang District,**
**Shenzhen,**
**Guangdong 518129 (CN)**

(72) Inventors:
- **ZHU, Huiying**
  **Shenzhen, Guangdong 518129 (CN)**
- **DONG, Pengpeng**
  **Shenzhen, Guangdong 518129 (CN)**
- **TAN, Zhiyuan**
  **Shenzhen, Guangdong 518129 (CN)**
- **DOU, Shengyue**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **DATA TRANSMISSION METHOD AND APPARATUS**

(57) This application provides a data transmission method and an apparatus. In the provided method, network coding-based data transmission is introduced, and adaptive adjustment is performed on HARQ retransmission and network coding-based transmission based on a data reception status or channel quality According to the method, when the data reception status is poor or the channel quality is poor, a combination gain of HARQ retransmission can be used to increase a probability of successful data reception, and when the data reception status is good or the channel quality is good, network coding-based transmission can be used to reduce excessive resource occupation in a HARQ retransmission process. This increases spectral efficiency in a data transmission process.

First communication device
Second communication device
T−t1
T
T+t2
FIG. 7



Processed by Luminess, 75001 PARIS (FR)

## Description

## TECHNICAL FIELD

This application relates to the field of communication technologies, and in particular, to a data transmission method and an apparatus.

## BACKGROUND

A hybrid automatic repeat request (hybrid automatic repeat request, HARQ) operation is a feedback-based retransmission request mechanism. In the HARQ operation, a receive end feeds back an acknowledgment (acknowledgment, ACK) or a negative acknowledgment (negative acknowledgment, NACK) to a transmit end based on a data reception status, where the acknowledgment and the negative acknowledgment are respectively used for requesting new HARQ transmission and HARQ retransmission from the transmit end.

HARQ retransmission is usually performed for a transport block (transport block, TB). One TB includes a plurality of code blocks (code blocks, CBs). To be specific, provided that one CB in one TB is not correctly received, the entire TB is to be retransmitted during HARQ retransmission. This increases resource overheads for retransmission, and reduces spectral efficiency of retransmission. Therefore, how to increase spectral efficiency in a data transmission process becomes an urgent problem to be resolved.

## SUMMARY

Embodiments of this application provide a data transmission method and an apparatus.

According to a first aspect, an embodiment of this application provides a data transmission method. The method may be performed by a terminal or a network device, or may be performed by a component (for example, a processor, a chip, or a chip system) of a terminal or a network device. The method includes: receiving first indication information from a first communication device; and when the first indication information indicates hybrid automatic repeat request (hybrid automatic repeat request, HARQ) retransmission, sending first data to the first communication device through a HARQ operation, where the first data includes HARQ retransmission data; or when the first indication information indicates network coding-based transmission, sending first data to the first communication device through network coding, where the first data includes network-coded data. Optionally, when the first indication information indicates HARQ retransmission and network coding-based transmission, first data is sent to the first communication device through a HARQ operation and network coding, where the first data includes HARQ retransmission data and network-coded data. Optionally, the network-coded data includes network-coded retransmission data and/or network-coded new transmission data.

According to the foregoing method, a transmit end can perform adaptive adjustment on HARQ retransmission and network coding-based transmission based on a feedback from a receive end. In this way, when a data reception status is poor, a combination gain of HARQ retransmission can be used to increase a probability of successful data reception, and when the data reception status is good, network coding-based transmission can be used to reduce excessive resource occupation in a HARQ retransmission process. This increases spectral efficiency in a data transmission process.

With reference to the first aspect, in some implementations of the first aspect, the first indication information is carried in one or more newly added indication fields. For example, one or more indication fields are newly added to a downlink control information (downlink control information, DCI), uplink control information (uplink control information, UCI), media access control (media access control, MAC) control element (control element, CE), or radio resource control (radio resource control, RRC) message, to carry the first indication information.

With reference to the first aspect, in some implementations of the first aspect, the first indication information may be implemented by using an acknowledgment (acknowledgment, ACK)/a negative acknowledgment (negative acknowledgment, NACK). The ACK/NACK may be transmitted on a control channel or a data channel. In this manner, an existing indication field can be reused to indicate HARQ retransmission or network coding-based transmission. This reduces overheads of an additional indication field. Optionally, the method further includes: receiving fourth indication information from the first communication device; and determining, based on the fourth indication information, a meaning indicated by the ACK/NACK in the first indication information. According to the method, new HARQ transmission and HARQ retransmission of an existing terminal are compatible, so that working performance of the existing terminal in a system is not affected while spectral efficiency is improved by using the method provided in this application.

According to a second aspect, an embodiment of this application provides a data transmission method. The method may be performed by a terminal or a network device, or may be performed by a component (for example, a processor, a chip, or a chip system) of a terminal or a network device. The method includes: receiving second data from a second communication device; sending, to the second communication device, first indication information used for transmitting first data; and receiving the first data from the second communication device. When a reception status of the second data meets a first condition, the first indication information indicates HARQ retransmission, and the first data includes HARQ retransmission data. When a reception status of the second data meets a second condition, the first indication information indicates network coding-based transmission, and the first data includes network-coded data. Optionally, the network-coded data includes network-coded retransmission data and/or network-coded new transmission data.

According to the foregoing method, a receive end may send, to a transmit end based on a data reception status, first indication information indicating HARQ retransmission or network coding-based transmission, to indicate the transmit end to perform adaptive adjustment on HARQ retransmission and network coding-based transmission. In this way, when the data reception status is poor, a combination gain of HARQ retransmission can be used to increase a probability of successful data reception, and when the data reception status is good, network coding-based transmission can be used to reduce excessive resource occupation in a HARQ retransmission process. This increases spectral efficiency in a data transmission process.

With reference to the second aspect, in some implementations of the second aspect, the first indication information is carried in one or more newly added indication fields. For example, one or more indication fields are newly added to a DCI, UCI, MAC CE, or RRC message, to carry the first indication information.

With reference to the second aspect, in some implementations of the second aspect, the first indication information may be implemented by using an ACK/a NACK. The ACK/NACK may be transmitted on a control channel or a data channel. In this manner, an existing indication field can be reused to indicate HARQ retransmission or network coding-based transmission. This reduces overheads of an additional indication field. Optionally, the method further includes: sending fourth indication information to the second communication device, where the fourth indication information is used for determining a meaning indicated by the ACK/NACK in the first indication information. According to the method, new HARQ transmission and HARQ retransmission of an existing terminal are compatible, so that working performance of the existing terminal in a system is not affected while spectral efficiency is improved by using the method provided in this application.

With reference to the second aspect, in an implementation 1-1 of the second aspect, all or a part of the second data is carried in a transport block (transmission block, TB), and the TB includes one or more code blocks (code blocks, CBs). That the reception status of the second data meets the first condition specifically includes: A ratio of a quantity of incorrectly received CBs in the TB to a quantity of all CBs in the TB is greater than (or greater than or equal to) a first threshold. That the reception status of the second data meets the second condition specifically includes: A ratio of a quantity of incorrectly received CBs in the TB to a quantity of all CBs in the TB is less than (or less than or equal to) a second threshold. According to this implementation, the receive end may send, to the transmit end based on a proportion of the incorrectly received CBs in the TB, the first indication information indicating HARQ retransmission or network coding-based transmission, to indicate the transmit end to perform adaptive adjustment on HARQ retransmission and network coding-based transmission. In this way, when the proportion of the incorrectly received CBs in the TB is high, a combination gain of HARQ retransmission can be used to increase a probability of successful data reception, and when the proportion of the incorrectly received CBs in the TB is low, network coding-based transmission can be used to reduce excessive resource occupation in a HARQ retransmission process. This increases spectral efficiency in a data transmission process.

With reference to the second aspect, in an implementation 1-2 of the second aspect, all or a part of the second data is carried in a TB, and the TB includes one or more code block groups (code block groups, CBGs). That the reception status of the second data meets the first condition specifically includes: A ratio of a quantity of incorrectly received CBGs in the TB to a quantity of all CBGs in the TB is greater than (or greater than or equal to) a third threshold. That the reception status of the second data meets the second condition specifically includes: A ratio of a quantity of incorrectly received CBGs in the TB to a quantity of all CBGs in the TB is less than (or less than or equal to) a fourth threshold. According to this implementation, the receive end may send, to the transmit end based on a proportion of the incorrectly received CBGs in the TB, the first indication information indicating HARQ retransmission or network coding-based transmission, to indicate the transmit end to perform adaptive adjustment on HARQ retransmission and network coding-based transmission. In this way, when the proportion of the incorrectly received CBGs in the TB is high, a combination gain of HARQ retransmission can be used to increase a probability of successful data reception, and when the proportion of the incorrectly received CBGs in the TB is low, network coding-based transmission can be used to reduce excessive resource occupation in a HARQ retransmission process. This increases spectral efficiency in a data transmission process.

With reference to the second aspect, in an implementation 1-3 of the second aspect, all or a part of the second data is carried in a TB, and the TB includes one or more CBs. That the reception status of the second data meets the first condition specifically includes: A ratio of a quantity of correctly received CBs in the TB to a quantity of all CBs in the TB is less than (or less than or equal to) a thirteenth threshold. That the reception status of the second data meets the second condition specifically includes: A ratio of a quantity of correctly received CBs in the TB to a quantity of all CBs in the TB is greater than (or greater than or equal to) a fourteenth threshold. According to this implementation, the receive end may send, to the transmit end based on a proportion of the correctly received CBs in the TB, the first indication information indicating HARQ retransmission or network coding-based transmission, to indicate the transmit end to perform adaptive adjustment on HARQ retransmission and network coding-based transmission. In this way, when the proportion of the correctly received CBs in the TB is low, a combination gain of HARQ retransmission can be used to increase a probability of successful data reception, and when the proportion of the correctly received CBs in the TB is high, network coding-based transmission can be used to reduce excessive resource occupation in a HARQ retransmission process. This increases spectral efficiency in a data transmission process.

With reference to the second aspect, in an implementation 1-4 of the second aspect, all or a part of the second data is carried in a TB, and the TB includes one or more CBGs. That the reception status of the second data meets the first condition specifically includes: A ratio of a quantity of correctly received CBGs in the TB to a quantity of all CBGs in the TB is less than (or less than or equal to) a fifteenth threshold. That the reception status of the second data meets the second condition specifically includes: A ratio of a quantity of correctly received CBGs in the TB to a quantity of all CBGs in the TB is greater than (or greater than or equal to) a sixteenth threshold. According to this implementation, the receive end may send, to the transmit end based on a proportion of the correctly received CBGs in the TB, the first indication information indicating HARQ retransmission or network coding-based transmission, to indicate the transmit end to perform adaptive adjustment on HARQ retransmission and network coding-based transmission. In this way, when the proportion of the correctly received CBGs in the TB is low, a combination gain of HARQ retransmission can be used to increase a probability of successful data reception, and when the proportion of the correctly received CBGs in the TB is high, network coding-based transmission can be used to reduce excessive resource occupation in a HARQ retransmission process. This increases spectral efficiency in a data transmission process.

With reference to the second aspect, in an implementation 1-5 of the second aspect, all or a part of the second data is carried in a TB, and the TB includes one or more CBs. That the reception status of the second data meets the first condition specifically includes: A quantity of incorrectly received CBs in the TB is greater than (or greater than or equal to) a seventeenth threshold. That the reception status of the second data meets the second condition specifically includes: A quantity of incorrectly received CBs in the TB is less than (or less than or equal to) an eighteenth threshold. According to this implementation, the receive end may send, to the transmit end based on the quantity of incorrectly received CBs in the TB, the first indication information indicating HARQ retransmission or network coding-based transmission, to indicate the transmit end to perform adaptive adjustment on HARQ retransmission and network coding-based transmission. In this way, when the quantity of incorrectly received CBs in the TB is large, a combination gain of HARQ retransmission can be used to increase a probability of successful data reception, and when the quantity of incorrectly received CBs in the TB is small, network coding-based transmission can be used to reduce excessive resource occupation in a HARQ retransmission process. This increases spectral efficiency in a data transmission process.

With reference to the second aspect, in an implementation 1-6 of the second aspect, all or a part of the second data is carried in a TB, and the TB includes one or more CBGs. That the reception status of the second data meets the first condition specifically includes: A quantity of incorrectly received CBGs in the TB is greater than (or greater than or equal to) a nineteenth threshold. That the reception status of the second data meets the second condition specifically includes: A quantity of incorrectly received CBGs in the TB is less than (or less than or equal to) a twentieth threshold. According to this implementation, the receive end may send, to the transmit end based on the quantity of incorrectly received CBGs in the TB, the first indication information indicating HARQ retransmission or network coding-based transmission, to indicate the transmit end to perform adaptive adjustment on HARQ retransmission and network coding-based transmission. In this way, when the quantity of incorrectly received CBGs in the TB is large, a combination gain of HARQ retransmission can be used to increase a probability of successful data reception, and when the quantity of incorrectly received CBGs in the TB is small, network coding-based transmission can be used to reduce excessive resource occupation in a HARQ retransmission process. This increases spectral efficiency in a data transmission process.

With reference to the second aspect, in an implementation 1-7 of the second aspect, all or a part of the second data is carried in a TB, and the TB includes one or more CBs. That the reception status of the second data meets the first condition specifically includes: A quantity of correctly received CBs in the TB is less than (or less than or equal to) a twenty-first threshold. That the reception status of the second data meets the second condition specifically includes: A quantity of correctly received CBs in the TB is greater than (or greater than or equal to) a twenty-second threshold. According to this implementation, the receive end may send, to the transmit end based on the quantity of correctly received CBs in the TB, the first indication information indicating HARQ retransmission or network coding-based transmission, to indicate the transmit end to perform adaptive adjustment on HARQ retransmission and network coding-based transmission. In this way, when the quantity of correctly received CBs in the TB is small, a combination gain of HARQ retransmission can be used to increase a probability of successful data reception, and when the quantity of correctly received CBs in the TB is large, network coding-based transmission can be used to reduce excessive resource occupation in a HARQ retransmission process. This increases spectral efficiency in a data transmission process.

With reference to the second aspect, in an implementation 1-8 of the second aspect, all or a part of the second data is carried in a TB, and the TB includes one or more CBGs. That the reception status of the second data meets the first condition specifically includes: A quantity of correctly received CBGs in the TB is less than (or less than or equal to) a twenty-third threshold. That the reception status of the second data meets the second condition specifically includes: A quantity of correctly received CBGs in the TB is greater than (or greater than or equal to) a twenty-fourth threshold. According to this implementation, the receive end may send, to the transmit end based on the quantity of correctly received CBGs in the TB, the first indication information indicating HARQ retransmission or network coding-based transmission, to indicate the transmit end to perform adaptive adjustment on HARQ retransmission and network coding-based transmission. In this way, when the quantity of correctly received CBGs in the TB is small, a combination gain of HARQ retransmission can be used to increase a probability of successful data reception, and when the quantity of correctly received CBGs in the TB is large, network coding-based transmission can be used to reduce excessive resource occupation in a HARQ retransmission process. This increases spectral efficiency in a data transmission process.

With reference to the second aspect, in an implementation 1-9 of the second aspect, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the first condition specifically includes: A ratio of a quantity of incorrectly received coded data units in the transmission opportunity to a quantity of all coded data units in the transmission opportunity is greater than (or greater than or equal to) a twenty-fifth threshold. That the reception status of the second data meets the second condition specifically includes: A ratio of a quantity of incorrectly received coded data units in the transmission opportunity to a quantity of all coded data units in the transmission opportunity is less than (or less than or equal to) a twenty-sixth threshold. According to this implementation, the receive end may send, to the transmit end based on a proportion of the incorrectly received coded data units in the transmission opportunity, the first indication information indicating HARQ retransmission or network coding-based transmission, to indicate the transmit end to perform adaptive adjustment on HARQ retransmission and network coding-based transmission. In this way, when the proportion of the incorrectly received coded data units in the transmission opportunity is high, a combination gain of HARQ retransmission can be used to increase a probability of successful data reception, and when the proportion of the incorrectly received coded data units in the transmission opportunity is low, network coding-based transmission can be used to reduce excessive resource occupation in a HARQ retransmission process. This increases spectral efficiency in a data transmission process.

With reference to the second aspect, in an implementation 1-10 of the second aspect, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the first condition specifically includes: A ratio of a quantity of correctly received coded data units in the transmission opportunity to a quantity of all coded data units in the transmission opportunity is less than (or less than or equal to) a twenty-seventh threshold. That the reception status of the second data meets the second condition specifically includes: A ratio of a quantity of correctly received coded data units in the transmission opportunity to a quantity of all coded data units in the transmission opportunity is greater than (or greater than or equal to) a twenty-eighth threshold. According to this implementation, the receive end may send, to the transmit end based on a proportion of the correctly received coded data units in the transmission opportunity, the first indication information indicating HARQ retransmission or network coding-based transmission, to indicate the transmit end to perform adaptive adjustment on HARQ retransmission and network coding-based transmission. In this way, when the proportion of the correctly received coded data units in the transmission opportunity is low, a combination gain of HARQ retransmission can be used to increase a probability of successful data reception, and when the proportion of the correctly received coded data units in the transmission opportunity is high, network coding-based transmission can be used to reduce excessive resource occupation in a HARQ retransmission process. This increases spectral efficiency in a data transmission process.

With reference to the second aspect, in an implementation 1-11 of the second aspect, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the first condition specifically includes: A quantity of incorrectly received coded data units in the transmission opportunity is greater than (or greater than or equal to) a twenty-ninth threshold. That the reception status of the second data meets the second condition specifically includes: A quantity of incorrectly received coded data units in the transmission opportunity is less than (or less than or equal to) a thirtieth threshold. According to this implementation, the receive end may send, to the transmit end based on the quantity of incorrectly received coded data units in the transmission opportunity, the first indication information indicating HARQ retransmission or network coding-based transmission, to indicate the transmit end to perform adaptive adjustment on HARQ retransmission and network coding-based transmission. In this way, when the quantity of incorrectly received coded data units in the transmission opportunity is large, a combination gain of HARQ retransmission can be used to increase a probability of successful data reception, and when the quantity of incorrectly received coded data units in the transmission opportunity is small, network coding-based transmission can be used to reduce excessive resource occupation in a HARQ retransmission process. This increases spectral efficiency in a data transmission process.

With reference to the second aspect, in an implementation 1-12 of the second aspect, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the first condition specifically includes: A quantity of correctly received coded data units in the transmission opportunity is less than (or less than or equal to) a thirty-first threshold. That the reception status of the second data meets the second condition specifically includes: A quantity of correctly received coded data units in the transmission opportunity is greater than (or greater than or equal to) a thirty-second threshold. According to this implementation, the receive end may send, to the transmit end based on the quantity of correctly received coded data units in the transmission opportunity, the first indication information indicating HARQ retransmission or network coding-based transmission, to indicate the transmit end to perform adaptive adjustment on HARQ retransmission and network coding-based transmission. In this way, when the quantity of correctly received coded data units in the transmission opportunity is small, a combination gain of HARQ retransmission can be used to increase a probability of successful data reception, and when the quantity of correctly received coded data units in the transmission opportunity is large, network coding-based transmission can be used to reduce excessive resource occupation in a HARQ retransmission process. This increases spectral efficiency in a data transmission process.

With reference to the second aspect, in an implementation 1-13 of the second aspect, the second data corresponds to one or more coded data units, and the coded data unit corresponds to a data block including one or more original data units. That the reception status of the second data meets the first condition specifically includes: A ratio of a rank of a matrix including a coding vector corresponding to a correctly received coded data unit corresponding to the data block to a quantity of original data units included in the data block is less than (or less than or equal to) a thirty-third threshold. That the reception status of the second data meets the second condition specifically includes: A ratio of a rank of a matrix including a coding vector corresponding to a correctly received coded data unit corresponding to the data block to a quantity of original data units included in the data block is greater than (or greater than or equal to) a thirty-fourth threshold. According to this implementation, the receive end may send, to the transmit end based on the ratio of the rank of the matrix including the coding vector corresponding to the correctly received coded data unit corresponding to the data block to the quantity of original data units included in the data block, the first indication information indicating HARQ retransmission or network coding-based transmission, to indicate the transmit end to perform adaptive adjustment on HARQ retransmission and network coding-based transmission. In this way, when the ratio is low, a combination gain of HARQ retransmission can be used to increase a probability of successful data reception, and when the ratio is high, network coding-based transmission can be used to reduce excessive resource occupation in a HARQ retransmission process. This increases spectral efficiency in a data transmission process.

With reference to the second aspect, in an implementation 1-14 of the second aspect, the second data corresponds to one or more coded data units, and the coded data unit corresponds to a data block including one or more original data units. That the reception status of the second data meets the first condition specifically includes: A difference between a rank of a matrix including a coding vector corresponding to a correctly received coded data unit corresponding to the data block and a quantity of original data units included in the data block is greater than (or greater than or equal to) a thirty -fifth threshold. That the reception status of the second data meets the second condition specifically includes: A difference between a rank of a matrix including a coding vector corresponding to a correctly received coded data unit corresponding to the data block and a quantity of original data units included in the data block is less than (or less than or equal to) a thirty-sixth threshold. According to this implementation, the receive end may send, to the transmit end based on the difference between the rank of the matrix including the coding vector corresponding to the correctly received coded data unit corresponding to the data block and the quantity of original data units included in the data block, the first indication information indicating HARQ retransmission or network coding-based transmission, to indicate the transmit end to perform adaptive adjustment on HARQ retransmission and network coding-based transmission. In this way, when the difference is large, a combination gain of HARQ retransmission can be used to increase a probability of successful data reception, and when the difference is small, network coding-based transmission can be used to reduce excessive resource occupation in a HARQ retransmission process. This increases spectral efficiency in a data transmission process.

With reference to the second aspect, in an implementation 1-15 of the second aspect, that the reception status of the second data meets the first condition specifically includes: meeting one first condition or a combination of a plurality of first conditions described in the foregoing implementations 1-1 to 1-14, and that the reception status of the second data meets the second condition specifically includes: meeting one second condition or a combination of a plurality of second conditions described in the foregoing implementations 1-1 to 1-14.

According to a third aspect, an embodiment of this application provides a data transmission method. The method may be performed by a terminal or a network device, or may be performed by a component (for example, a processor, a chip, or a chip system) of a terminal or a network device. The method includes: receiving second data from a second communication device; sending, to the second communication device, first indication information used for transmitting first data; and receiving the first data from the second communication device. When a reception status of the second data meets a third condition, the first indication information indicates HARQ retransmission and network coding-based transmission, and the first data includes HARQ retransmission data and network-coded data. When a reception status of the second data meets a fourth condition, the first indication information indicates HARQ retransmission, and the first data includes HARQ retransmission data. When a reception status of the second data meets a fifth condition, the first indication information indicates network coding-based transmission, and the first data includes network-coded data. Optionally, the network-coded data includes network-coded retransmission data and/or network-coded new transmission data.

According to the foregoing method, a receive end may send, to a transmit end based on a data reception status, first indication information indicating HARQ retransmission and/or network coding-based transmission, to indicate the transmit end to perform adaptive adjustment on HARQ retransmission and network coding-based transmission. In this way, when the data reception status is poor, a combination gain of HARQ retransmission can be used to increase a probability of successful data reception, and when the data reception status is good, network coding-based transmission can be used to reduce excessive resource occupation in a HARQ retransmission process. This increases spectral efficiency in a data transmission process.

With reference to the third aspect, in some implementations of the third aspect, the first indication information is carried in one or more newly added indication fields. For example, one or more indication fields are newly added to a DCI, UCI, MAC CE, or RRC message, to carry the first indication information.

With reference to the third aspect, in some implementations of the third aspect, the first indication information may be implemented by using an ACK/a NACK. The ACK/NACK may be transmitted on a control channel or a data channel. In this manner, an existing indication field can be reused to indicate HARQ retransmission or network coding-based transmission. This reduces overheads of an additional indication field. Optionally, the method further includes: sending fourth indication information to the second communication device, where the fourth indication information is used for determining a meaning indicated by the ACK/NACK in the first indication information. According to the method, new HARQ transmission and HARQ retransmission of an existing terminal are compatible, so that working performance of the existing terminal in a system is not affected while spectral efficiency is improved by using the method provided in this application.

With reference to the third aspect, in an implementation 1-16 of the third aspect, all or a part of the second data is carried in a TB, and the TB includes one or more CBs. That the reception status of the second data meets the third condition specifically includes: A ratio of a quantity of incorrectly received CBs in the TB to a quantity of all CBs in the TB is greater than (or greater than or equal to) a fifth threshold. That the reception status of the second data meets the fourth condition specifically includes: A ratio of a quantity of incorrectly received CBs in the TB to a quantity of all CBs in the TB falls within a first value interval. That the reception status of the second data meets the fifth condition specifically includes: A ratio of a quantity of incorrectly received CBs in the TB to a quantity of all CBs in the TB is less than (or less than or equal to) a sixth threshold. According to this implementation, the receive end may send, to the transmit end based on a proportion of the incorrectly received CBs in the TB, the first indication information indicating HARQ retransmission and/or network coding-based transmission, to indicate the transmit end to perform adaptive adjustment on HARQ retransmission and network coding-based transmission. In this way, when the proportion of the incorrectly received CBs in the TB is high, a combination gain of HARQ retransmission and network coding-based transmission can be used to increase a probability of successful data reception and reduce excessive resource occupation, when the proportion of the incorrectly received CBs in the TB is moderate, the combination gain of HARQ retransmission can be used to further increase the probability of successful data reception, and when the proportion of the incorrectly received CBs in the TB is low, network coding-based transmission can be used to reduce excessive resource occupation in a HARQ retransmission process. This increases spectral efficiency in a data transmission process.

With reference to the third aspect, in an implementation 1-17 of the third aspect, all or a part of the second data is carried in a TB, and the TB includes one or more CBGs. That the reception status of the second data meets the third condition specifically includes: A ratio of a quantity of incorrectly received CBGs in the TB to a quantity of all CBGs in the TB is greater than (or greater than or equal to) a seventh threshold. That the reception status of the second data meets the fourth condition specifically includes: A ratio of a quantity of incorrectly received CBGs in the TB to a quantity of all CBGs in the TB falls within a second value interval. That the reception status of the second data meets the fifth condition specifically includes: A ratio of a quantity of incorrectly received CBGs in the TB to a quantity of all CBGs in the TB is less than (or less than or equal to) an eighth threshold. According to this implementation, the receive end may send, to the transmit end based on a proportion of the incorrectly received CBGs in the TB, the first indication information indicating HARQ retransmission and/or network coding-based transmission, to indicate the transmit end to perform adaptive adjustment on HARQ retransmission and network coding-based transmission. In this way, when the proportion of the incorrectly received CBGs in the TB is high, a combination gain of HARQ retransmission and network coding-based transmission can be used to increase a probability of successful data reception and reduce excessive resource occupation, when the proportion of the incorrectly received CBGs in the TB is moderate, the combination gain of HARQ retransmission can be used to further increase the probability of successful data reception, and when the proportion of the incorrectly received CBGs in the TB is low, network coding-based transmission can be used to reduce excessive resource occupation in a HARQ retransmission process. This increases spectral efficiency in a data transmission process.

With reference to the third aspect, in an implementation 1-18 of the third aspect, all or a part of the second data is carried in a TB, and the TB includes one or more CBs. That the reception status of the second data meets the third condition specifically includes: A ratio of a quantity of correctly received CBs in the TB to a quantity of all CBs in the TB is less than (or less than or equal to) a thirty-seventh threshold. That the reception status of the second data meets the fourth condition specifically includes: A ratio of a quantity of correctly received CBs in the TB to a quantity of all CBs in the TB falls within a fourth value interval. That the reception status of the second data meets the fifth condition specifically includes: A ratio of a quantity of correctly received CBs in the TB to a quantity of all CBs in the TB is greater than (or greater than or equal to) a thirty-eighth threshold. According to this implementation, the receive end may send, to the transmit end based on a proportion of the correctly received CBs in the TB, the first indication information indicating HARQ retransmission and/or network coding-based transmission, to indicate the transmit end to perform adaptive adjustment on HARQ retransmission and network coding-based transmission. In this way, when the proportion of the correctly received CBs in the TB is low, a combination gain of HARQ retransmission and network coding-based transmission can be used to increase a probability of successful data reception and reduce excessive resource occupation, when the proportion of the correctly received CBs in the TB is moderate, the combination gain of HARQ retransmission can be used to further increase the probability of successful data reception, and when the proportion of the correctly received CBs in the TB is high, network coding-based transmission can be used to reduce excessive resource occupation in a HARQ retransmission process. This increases spectral efficiency in a data transmission process.

With reference to the third aspect, in an implementation 1-19 of the third aspect, all or a part of the second data is carried in a TB, and the TB includes one or more CBGs. That the reception status of the second data meets the third condition specifically includes: A ratio of a quantity of correctly received CBGs in the TB to a quantity of all CBGs in the TB is less than (or less than or equal to) a thirty-ninth threshold. That the reception status of the second data meets the fourth condition specifically includes: A ratio of a quantity of correctly received CBGs in the TB to a quantity of all CBGs in the TB falls within a fifth value interval. That the reception status of the second data meets the fifth condition specifically includes: A ratio of a quantity of correctly received CBGs in the TB to a quantity of all CBGs in the TB is greater than (or greater than or equal to) a fortieth threshold. According to this implementation, the receive end may send, to the transmit end based on a proportion of the correctly received CBGs in the TB, the first indication information indicating HARQ retransmission and/or network coding-based transmission, to indicate the transmit end to perform adaptive adjustment on HARQ retransmission and network coding-based transmission. In this way, when the proportion of the correctly received CBGs in the TB is low, a combination gain of HARQ retransmission and network coding-based transmission can be used to increase a probability of successful data reception and reduce excessive resource occupation, when the proportion of the correctly received CBGs in the TB is moderate, the combination gain of HARQ retransmission can be used to further increase the probability of successful data reception, and when the proportion of the correctly received CBGs in the TB is high, network coding-based transmission can be used to reduce excessive resource occupation in a HARQ retransmission process. This increases spectral efficiency in a data transmission process.

With reference to the third aspect, in an implementation 1-20 of the third aspect, all or a part of the second data is carried in a TB, and the TB includes one or more CBs. That the reception status of the second data meets the third condition specifically includes: A quantity of incorrectly received CBs in the TB is greater than (or greater than or equal to) a forty-first threshold. That the reception status of the second data meets the fourth condition specifically includes: A quantity of incorrectly received CBs in the TB falls within a sixth value interval. That the reception status of the second data meets the fifth condition specifically includes: A quantity of incorrectly received CBs in the TB is less than (or less than or equal to) a forty-second threshold. According to this implementation, the receive end may send, to the transmit end based on the quantity of incorrectly received CBs in the TB, the first indication information indicating HARQ retransmission and/or network coding-based transmission, to indicate the transmit end to perform adaptive adjustment on HARQ retransmission and network coding-based transmission. In this way, when the quantity of incorrectly received CBs in the TB is large, a combination gain of HARQ retransmission and network coding-based transmission can be used to increase a probability of successful data reception and reduce excessive resource occupation, when the quantity of incorrectly received CBs in the TB is moderate, the combination gain of HARQ retransmission can be used to further increase the probability of successful data reception, and when the quantity of incorrectly received CBs in the TB is small, network coding-based transmission can be used to reduce excessive resource occupation in a HARQ retransmission process. This increases spectral efficiency in a data transmission process.

With reference to the third aspect, in an implementation 1-21 of the third aspect, all or a part of the second data is carried in a TB, and the TB includes one or more CBGs. That the reception status of the second data meets the third condition specifically includes: A quantity of incorrectly received CBGs in the TB is greater than (or greater than or equal to) a forty-third threshold. That the reception status of the second data meets the fourth condition specifically includes: A quantity of incorrectly received CBGs in the TB falls within a seventh value interval. That the reception status of the second data meets the fifth condition specifically includes: A quantity of incorrectly received CBGs in the TB is less than (or less than or equal to) a forty-fourth threshold. According to this implementation, the receive end may send, to the transmit end based on the quantity of incorrectly received CBGs in the TB, the first indication information indicating HARQ retransmission and/or network coding-based transmission, to indicate the transmit end to perform adaptive adjustment on HARQ retransmission and network coding-based transmission. In this way, when the quantity of incorrectly received CBGs in the TB is large, a combination gain of HARQ retransmission and network coding-based transmission can be used to increase a probability of successful data reception and reduce excessive resource occupation, when the quantity of incorrectly received CBGs in the TB is moderate, the combination gain of HARQ retransmission can be used to further increase the probability of successful data reception, and when the quantity of incorrectly received CBGs in the TB is small, network coding-based transmission can be used to reduce excessive resource occupation in a HARQ retransmission process. This increases spectral efficiency in a data transmission process.

With reference to the third aspect, in an implementation 1-22 of the third aspect, all or a part of the second data is carried in a TB, and the TB includes one or more CBs. That the reception status of the second data meets the third condition specifically includes: A quantity of correctly received CBs in the TB is less than (or less than or equal to) a forty-fifth threshold. That the reception status of the second data meets the fourth condition specifically includes: A quantity of correctly received CBs in the TB falls within an eighth value interval. That the reception status of the second data meets the fifth condition specifically includes: A quantity of correctly received CBs in the TB is greater than (or greater than or equal to) a forty-sixth threshold. According to this implementation, the receive end may send, to the transmit end based on the quantity of correctly received CBs in the TB, the first indication information indicating HARQ retransmission and/or network coding-based transmission, to indicate the transmit end to perform adaptive adjustment on HARQ retransmission and network coding-based transmission. In this way, when the quantity of correctly received CBs in the TB is small, a combination gain of HARQ retransmission and network coding-based transmission can be used to increase a probability of successful data reception and reduce excessive resource occupation, when the quantity of correctly received CBs in the TB is moderate, the combination gain of HARQ retransmission can be used to further increase the probability of successful data reception, and when the quantity of correctly received CBs in the TB is large, network coding-based transmission can be used to reduce excessive resource occupation in a HARQ retransmission process. This increases spectral efficiency in a data transmission process.

With reference to the third aspect, in an implementation 1-23 of the third aspect, all or a part of the second data is carried in a TB, and the TB includes one or more CBGs. That the reception status of the second data meets the third condition specifically includes: A quantity of correctly received CBGs in the TB is less than (or less than or equal to) a forty-seventh threshold. That the reception status of the second data meets the fourth condition specifically includes: A quantity of correctly received CBGs in the TB falls within a ninth value interval. That the reception status of the second data meets the fifth condition specifically includes: A quantity of correctly received CBGs in the TB is greater than (or greater than or equal to) a forty-eighth threshold. According to this implementation, the receive end may send, to the transmit end based on the quantity of correctly received CBGs in the TB, the first indication information indicating HARQ retransmission and/or network coding-based transmission, to indicate the transmit end to perform adaptive adjustment on HARQ retransmission and network coding-based transmission. In this way, when the quantity of correctly received CBGs in the TB is small, a combination gain of HARQ retransmission and network coding-based transmission can be used to increase a probability of successful data reception and reduce excessive resource occupation, when the quantity of correctly received CBGs in the TB is moderate, the combination gain of HARQ retransmission can be used to further increase the probability of successful data reception, and when the quantity of correctly received CBGs in the TB is large, network coding-based transmission can be used to reduce excessive resource occupation in a HARQ retransmission process. This increases spectral efficiency in a data transmission process.

With reference to the third aspect, in an implementation 1-24 of the third aspect, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the third condition specifically includes: A ratio of a quantity of incorrectly received coded data units in the transmission opportunity to a quantity of all coded data units in the transmission opportunity is greater than (or greater than or equal to) a forty-ninth threshold. That the reception status of the second data meets the fourth condition specifically includes: A ratio of a quantity of incorrectly received coded data units in the transmission opportunity to a quantity of all coded data units in the transmission opportunity falls within a tenth value interval. That the reception status of the second data meets the fifth condition specifically includes: A ratio of a quantity of incorrectly received coded data units in the transmission opportunity to a quantity of all coded data units in the transmission opportunity is less than (or less than or equal to) a fiftieth threshold. According to this implementation, the receive end may send, to the transmit end based on a proportion of the incorrectly received coded data units in the transmission opportunity, the first indication information indicating HARQ retransmission and/or network coding-based transmission, to indicate the transmit end to perform adaptive adjustment on HARQ retransmission and network coding-based transmission. In this way, when the proportion of the incorrectly received coded data units in the transmission opportunity is high, a combination gain of HARQ retransmission and network coding-based transmission can be used to increase a probability of successful data reception and reduce excessive resource occupation, when the proportion of the incorrectly received coded data units in the transmission opportunity is moderate, the combination gain of HARQ retransmission can be used to further increase the probability of successful data reception, and when the proportion of the incorrectly received coded data units in the transmission opportunity is low, network coding-based transmission can be used to reduce excessive resource occupation in a HARQ retransmission process. This increases spectral efficiency in a data transmission process.

With reference to the third aspect, in an implementation 1-25 of the third aspect, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the third condition specifically includes: A ratio of a quantity of correctly received coded data units in the transmission opportunity to a quantity of all coded data units in the transmission opportunity is less than (or less than or equal to) a fifty-first threshold. That the reception status of the second data meets the fourth condition specifically includes: A ratio of a quantity of correctly received coded data units in the transmission opportunity to a quantity of all coded data units in the transmission opportunity falls within an eleventh value interval. That the reception status of the second data meets the fifth condition specifically includes: A ratio of a quantity of correctly received coded data units in the transmission opportunity to a quantity of all coded data units in the transmission opportunity is greater than (or greater than or equal to) a fifty-second threshold. According to this implementation, the receive end may send, to the transmit end based on a proportion of the correctly received coded data units in the transmission opportunity, the first indication information indicating HARQ retransmission and/or network coding-based transmission, to indicate the transmit end to perform adaptive adjustment on HARQ retransmission and network coding-based transmission. In this way, when the proportion of the correctly received coded data units in the transmission opportunity is low, a combination gain of HARQ retransmission and network coding-based transmission can be used to increase a probability of successful data reception and reduce excessive resource occupation, when the proportion of the correctly received coded data units in the transmission opportunity is moderate, the combination gain of HARQ retransmission can be used to further increase the probability of successful data reception, and when the proportion of the correctly received coded data units in the transmission opportunity is high, network coding-based transmission can be used to reduce excessive resource occupation in a HARQ retransmission process. This increases spectral efficiency in a data transmission process.

With reference to the third aspect, in an implementation 1-26 of the third aspect, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the third condition specifically includes: A quantity of incorrectly received coded data units in the transmission opportunity is greater than (or greater than or equal to) a fifty-third threshold. That the reception status of the second data meets the fourth condition specifically includes: A quantity of incorrectly received coded data units in the transmission opportunity falls within a twelfth value interval. That the reception status of the second data meets the fifth condition specifically includes: A quantity of incorrectly received coded data units in the transmission opportunity is less than (or less than or equal to) a fifty-fourth threshold. According to this implementation, the receive end may send, to the transmit end based on the quantity of incorrectly received coded data units in the transmission opportunity, the first indication information indicating HARQ retransmission and/or network coding-based transmission, to indicate the transmit end to perform adaptive adjustment on HARQ retransmission and network coding-based transmission. In this way, when the quantity of incorrectly received coded data units in the transmission opportunity is large, a combination gain of HARQ retransmission and network coding-based transmission can be used to increase a probability of successful data reception and reduce excessive resource occupation, when the quantity of incorrectly received coded data units in the transmission opportunity is moderate, the combination gain of HARQ retransmission can be used to further increase the probability of successful data reception, and when the quantity of incorrectly received coded data units in the transmission opportunity is small, network coding-based transmission can be used to reduce excessive resource occupation in a HARQ retransmission process. This increases spectral efficiency in a data transmission process.

With reference to the third aspect, in an implementation 1-27 of the third aspect, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the third condition specifically includes: A quantity of correctly received coded data units in the transmission opportunity is less than (or less than or equal to) a fifty-fifth threshold. That the reception status of the second data meets the fourth condition specifically includes: A quantity of correctly received coded data units in the transmission opportunity falls within a thirteenth value interval. That the reception status of the second data meets the fifth condition specifically includes: A quantity of correctly received coded data units in the transmission opportunity is greater than (or greater than or equal to) a fifty-sixth threshold. According to this implementation, the receive end may send, to the transmit end based on the quantity of correctly received coded data units in the transmission opportunity, the first indication information indicating HARQ retransmission and/or network coding-based transmission, to indicate the transmit end to perform adaptive adjustment on HARQ retransmission and network coding-based transmission. In this way, when the quantity of correctly received coded data units in the transmission opportunity is small, a combination gain of HARQ retransmission and network coding-based transmission can be used to increase a probability of successful data reception and reduce excessive resource occupation, when the quantity of correctly received coded data units in the transmission opportunity is moderate, the combination gain of HARQ retransmission can be used to further increase the probability of successful data reception, and when the quantity of correctly received coded data units in the transmission opportunity is large, network coding-based transmission can be used to reduce excessive resource occupation in a HARQ retransmission process. This increases spectral efficiency in a data transmission process.

With reference to the third aspect, in an implementation 1-28 of the third aspect, the second data corresponds to one or more coded data units, and the coded data unit corresponds to a data block including one or more original data units. That the reception status of the second data meets the third condition specifically includes: A ratio of a rank of a matrix including a coding vector corresponding to a correctly received coded data unit corresponding to the data block to a quantity of original data units included in the data block is less than (or less than or equal to) a fifty-seventh threshold. That the reception status of the second data meets the fourth condition specifically includes: A ratio of a rank of a matrix including a coding vector corresponding to a correctly received coded data unit corresponding to the data block to a quantity of original data units included in the data block falls within a fourteenth value interval. That the reception status of the second data meets the fifth condition specifically includes: A ratio of a rank of a matrix including a coding vector corresponding to a correctly received coded data unit corresponding to the data block to a quantity of original data units included in the data block is greater than (or greater than or equal to) a fifty-eighth threshold. According to this implementation, the receive end may send, to the transmit end based on the ratio of the rank of the matrix including the coding vector corresponding to the correctly received coded data unit corresponding to the data block to the quantity of original data units included in the data block, the first indication information indicating HARQ retransmission and/or network coding-based transmission, to indicate the transmit end to perform adaptive adjustment on HARQ retransmission and network coding-based transmission. In this way, when the ratio is low, a combination gain of HARQ retransmission and network coding-based transmission can be used to increase a probability of successful data reception and reduce excessive resource occupation, when the ratio is moderate, the combination gain of HARQ retransmission can be used to further increase the probability of successful data reception, and when the ratio is high, network coding-based transmission can be used to reduce excessive resource occupation in a HARQ retransmission process. This increases spectral efficiency in a data transmission process.

With reference to the third aspect, in an implementation 1-29 of the third aspect, the second data corresponds to one or more coded data units, and the coded data unit corresponds to a data block including one or more original data units. That the reception status of the second data meets the third condition specifically includes: A difference between a rank of a matrix including a coding vector corresponding to a correctly received coded data unit corresponding to the data block and a quantity of original data units included in the data block is greater than (or greater than or equal to) a fifty-ninth threshold. That the reception status of the second data meets the fourth condition specifically includes: A difference between a rank of a matrix including a coding vector corresponding to a correctly received coded data unit corresponding to the data block and a quantity of original data units included in the data block falls within a fifteenth value interval. That the reception status of the second data meets the fifth condition specifically includes: A difference between a rank of a matrix including a coding vector corresponding to a correctly received coded data unit corresponding to the data block and a quantity of original data units included in the data block is less than (or less than or equal to) a sixtieth threshold. According to this implementation, the receive end may send, to the transmit end based on the difference between the rank of the matrix including the coding vector corresponding to the correctly received coded data unit corresponding to the data block and the quantity of original data units included in the data block, the first indication information indicating HARQ retransmission and/or network coding-based transmission, to indicate the transmit end to perform adaptive adjustment on HARQ retransmission and network coding-based transmission. In this way, when the difference is large, a combination gain of HARQ retransmission and network coding-based transmission can be used to increase a probability of successful data reception and reduce excessive resource occupation, when the difference is moderate, the combination gain of HARQ retransmission can be used to further increase the probability of successful data reception, and when the difference is small, network coding-based transmission can be used to reduce excessive resource occupation in a HARQ retransmission process. This increases spectral efficiency in a data transmission process.

With reference to the third aspect, in an implementation 1-30 of the third aspect, that the reception status of the second data meets the third condition specifically includes: meeting one third condition or a combination of a plurality of third conditions described in the foregoing implementations 1-16 to 1-29, that the reception status of the second data meets the fourth condition specifically includes: meeting one fourth condition or a combination of a plurality of fourth conditions described in the foregoing implementations 1-16 to 1-29, and that the reception status of the second data meets the fifth condition specifically includes: meeting one fifth condition or a combination of a plurality of fifth conditions described in the foregoing implementations 1-16 to 1-29.

According to a fourth aspect, an embodiment of this application provides a data transmission method. The method may be performed by a terminal or a network device, or may be performed by a component (for example, a processor, a chip, or a chip system) of a terminal or a network device. The method includes: sending second data to a first communication device; receiving second indication information from the first communication device, where the second indication information indicates a reception status of the second data; and when the reception status of the second data meets a first condition, sending first data to the first communication device through a HARQ operation, where the first data includes HARQ retransmission data; or when the reception status of the second data meets a second condition, sending first data to the first communication device through network coding, where the first data includes network-coded data. Optionally, the network-coded data includes network-coded retransmission data and/or network-coded new transmission data.

According to the foregoing method, a transmit end can perform adaptive adjustment on HARQ retransmission and network coding-based transmission based on a data reception status fed back by a receive end. In this way, when the data reception status is poor, a combination gain of HARQ retransmission can be used to increase a probability of successful data reception, and when the data reception status is good, network coding-based transmission can be used to reduce excessive resource occupation in a HARQ retransmission process. This increases spectral efficiency in a data transmission process.

With reference to the fourth aspect, in some implementations of the fourth aspect, there may be a plurality of different implementations in which the reception status of the second data meets the first condition or the second condition. For details, refer to the implementations 1-1 to 1-15 in the second aspect. Details are not described herein again.

According to a fifth aspect, an embodiment of this application provides a data transmission method. The method may be performed by a terminal or a network device, or may be performed by a component (for example, a processor, a chip, or a chip system) of a terminal or a network device. The method includes: sending second data to a first communication device; receiving second indication information from the first communication device, where the second indication information indicates a reception status of the second data; and when the reception status of the second data meets a third condition, sending first data to the first communication device through a HARQ operation and network coding, where the first data includes HARQ retransmission data and network-coded data; when the reception status of the second data meets a fourth condition, sending first data to the first communication device through a HARQ operation, where the first data includes HARQ retransmission data; or when the reception status of the second data meets a fifth condition, sending first data to the first communication device through network coding, where the first data includes network-coded data. Optionally, the network-coded data includes network-coded retransmission data and/or network-coded new transmission data.

According to the foregoing method, a transmit end can perform adaptive adjustment on HARQ retransmission and network coding-based transmission based on a data reception status fed back by a receive end. In this way, when the data reception status is poor, a combination gain of HARQ retransmission can be used to increase a probability of successful data reception, and when the data reception status is good, network coding-based transmission can be used to reduce excessive resource occupation in a HARQ retransmission process. This increases spectral efficiency in a data transmission process.

With reference to the fifth aspect, in some implementations of the fifth aspect, there may be a plurality of different implementations in which the reception status of the second data meets the third condition, the fourth condition, or the fifth condition. For details, refer to the implementations 1-16 to 1-30 in the second aspect. Details are not described herein again.

According to a sixth aspect, an embodiment of this application provides a data transmission method. The method may be performed by a terminal or a network device, or may be performed by a component (for example, a processor, a chip, or a chip system) of a terminal or a network device. The method includes: receiving second data from a second communication device; sending, to the second communication device, second indication information used for transmitting first data, where the second indication information indicates a reception status of the second data; and receiving the first data from the second communication device. When the reception status of the second data meets a first condition, the first data includes HARQ retransmission data. When the reception status of the second data meets a second condition, the first data includes network-coded data. Optionally, the network-coded data includes network-coded retransmission data and/or network-coded new transmission data.

According to the foregoing method, a receive end may feed back a data reception status to a transmit end, so that the transmit end can perform adaptive adjustment on HARQ retransmission and network coding-based transmission based on the data reception status of the receive end. In this way, when the data reception status is poor, a combination gain of HARQ retransmission can be used to increase a probability of successful data reception, and when the data reception status is good, network coding-based transmission can be used to reduce excessive resource occupation in a HARQ retransmission process. This increases spectral efficiency in a data transmission process.

With reference to the sixth aspect, in some implementations of the sixth aspect, there may be a plurality of different implementations in which the reception status of the second data meets the first condition or the second condition. For details, refer to the implementations 1-1 to 1-15 in the second aspect. Details are not described herein again.

According to a seventh aspect, an embodiment of this application provides a data transmission method. The method may be performed by a terminal or a network device, or may be performed by a component (for example, a processor, a chip, or a chip system) of a terminal or a network device. The method includes: receiving second data from a second communication device; sending, to the second communication device, second indication information used for transmitting first data, where the second indication information indicates a reception status of the second data; and receiving the first data from the second communication device. When the reception status of the second data meets a third condition, the first data includes HARQ retransmission data and network-coded data. When the reception status of the second data meets a fourth condition, the first data includes HARQ retransmission data. When the reception status of the second data meets a fifth condition, the first data includes network-coded data. Optionally, the network-coded data includes network-coded retransmission data and/or network-coded new transmission data.

According to the foregoing method, a receive end may feed back a data reception status to a transmit end, so that the transmit end can perform adaptive adjustment on HARQ retransmission and network coding-based transmission based on the data reception status of the receive end. In this way, when the data reception status is poor, a combination gain of HARQ retransmission can be used to increase a probability of successful data reception, and when the data reception status is good, network coding-based transmission can be used to reduce excessive resource occupation in a HARQ retransmission process. This increases spectral efficiency in a data transmission process.

With reference to the seventh aspect, in some implementations of the seventh aspect, there may be a plurality of different implementations in which the reception status of the second data meets the third condition, the fourth condition, or the fifth condition. For details, refer to the implementations 1-16 to 1-30 in the second aspect. Details are not described herein again.

According to an eighth aspect, an embodiment of this application provides a data transmission method. The method may be performed by a terminal or a network device, or may be performed by a component (for example, a processor, a chip, or a chip system) of a terminal or a network device. The method includes: receiving third indication information from a first communication device, where the third indication information indicates channel quality; and when the channel quality meets a sixth condition, sending first data to the first communication device through a HARQ operation, where the first data includes HARQ retransmission data; or when the channel quality meets a seventh condition, sending first data to the first communication device through network coding, where the first data includes network-coded data. Optionally, the network-coded data includes network-coded retransmission data and/or network-coded new transmission data.

According to the foregoing method, a transmit end can perform adaptive adjustment on HARQ retransmission and network coding-based transmission based on channel quality. In this way, when the channel quality is poor, a combination gain of HARQ retransmission can be used to increase a probability of successful data reception, and when the channel quality is good, network coding-based transmission can be used to reduce excessive resource occupation in a HARQ retransmission process. This increases spectral efficiency in a data transmission process.

With reference to the eighth aspect, in an implementation 2-1 of the eighth aspect, the channel quality may be represented by a signal to interference plus noise ratio (signal to interference plus noise ratio, SINR), a channel quality indicator (channel quality indicator, CQI), reference signal received power (reference signal received power, RSRP), a received signal strength indicator (received signal strength indicator, RSSI), or reference signal received quality (reference signal received quality, RSRQ). That the channel quality meets the sixth condition specifically includes: The SINR, the CQI, the RSRP, the RSSI, or the RSRQ is less than (or less than or equal to) a ninth threshold. That the channel quality meets the seventh condition specifically includes: The SINR, the CQI, the RSRP, the RSSI, or the RSRQ is greater than (or greater than or equal to) a tenth threshold. According to this implementation, the transmit end can perform adaptive adjustment on HARQ retransmission and network coding-based transmission based on channel quality fed back by a receive end. In this way, when the channel quality is poor, a combination gain of HARQ retransmission can be used to increase a probability of successful data reception, and when the channel quality is good, network coding-based transmission can be used to reduce excessive resource occupation in a HARQ retransmission process. This increases spectral efficiency in a data transmission process.

According to a ninth aspect, an embodiment of this application provides a data transmission method. The method may be performed by a terminal or a network device, or may be performed by a component (for example, a processor, a chip, or a chip system) of a terminal or a network device. The method includes: receiving third indication information from a first communication device, where the third indication information indicates channel quality; and when the channel quality meets an eighth condition, sending first data to the first communication device through a HARQ operation and network coding, where the first data includes HARQ retransmission data and network-coded data; when the channel quality meets a ninth condition, sending first data to the first communication device through a HARQ operation, where the first data includes HARQ retransmission data; or when the channel quality meets a tenth condition, sending first data to the first communication device through network coding, where the first data includes network-coded data. Optionally, the network-coded data includes network-coded retransmission data and/or network-coded new transmission data.

According to the foregoing method, a transmit end can perform adaptive adjustment on HARQ retransmission and network coding-based transmission based on channel quality. In this way, when the channel quality is poor, a combination gain of HARQ retransmission can be used to increase a probability of successful data reception, and when the channel quality is good, network coding-based transmission can be used to reduce excessive resource occupation in a HARQ retransmission process. This increases spectral efficiency in a data transmission process.

With reference to the ninth aspect, in an implementation 2-2 of the ninth aspect, the channel quality may be represented by an SINR, a CQI, RSRP, an RSSI, or RSRQ. That the channel quality meets the eighth condition specifically includes: The SINR, the CQI, the RSRP, the RSSI, or the RSRQ is less than (or less than or equal to) an eleventh threshold. That the channel quality meets the ninth condition specifically includes: The SINR, the CQI, the RSRP, the RSSI, or the RSRQ falls within a third value interval. That the channel quality meets the tenth condition specifically includes: The SINR, the CQI, the RSRP, the RSSI, or the RSRQ is greater than (or greater than or equal to) a twelfth threshold. According to this implementation, the transmit end can perform adaptive adjustment on HARQ retransmission and network coding-based transmission based on channel quality fed back by a receive end. In this way, when the channel quality is poor, a combination gain of HARQ retransmission and network coding-based transmission can be used to increase a probability of successful data reception and reduce excessive resource occupation, when the channel quality is moderate, the combination gain of HARQ retransmission can be used to increase the probability of successful data reception, and when the channel quality is good, network coding-based transmission can be used to reduce excessive resource occupation in a HARQ retransmission process. This increases spectral efficiency in a data transmission process.

According to a tenth aspect, an embodiment of this application provides a data transmission method. The method may be performed by a terminal or a network device, or may be performed by a component (for example, a processor, a chip, or a chip system) of a terminal or a network device. The method includes: obtaining channel quality; sending, to a second communication device, third indication information used for transmitting first data, where the third indication information indicates the channel quality; and receiving the first data from the second communication device. When the channel quality meets a sixth condition, the first data includes HARQ retransmission data. When the channel quality meets a seventh condition, the first data includes network-coded data. Optionally, the network-coded data includes network-coded retransmission data and/or network-coded new transmission data.

According to the foregoing method, a receive end may feed back channel quality to a transmit end, so that the transmit end can perform adaptive adjustment on HARQ retransmission and network coding-based transmission based on the channel quality. In this way, when the channel quality is poor, a combination gain of HARQ retransmission can be used to increase a probability of successful data reception, and when the channel quality is good, network coding-based transmission can be used to reduce excessive resource occupation in a HARQ retransmission process. This increases spectral efficiency in a data transmission process.

With reference to the tenth aspect, in some implementations of the tenth aspect, there may be a plurality of different implementations in which the channel quality meets the sixth condition or the seventh condition. For details, refer to the implementation 2-1 in the eighth aspect. Details are not described herein again.

According to an eleventh aspect, an embodiment of this application provides a data transmission method. The method may be performed by a terminal or a network device, or may be performed by a component (for example, a processor, a chip, or a chip system) of a terminal or a network device. The method includes: obtaining channel quality; sending, to a second communication device, third indication information used for transmitting first data, where the third indication information indicates the channel quality; and receiving the first data from the second communication device. When the channel quality meets an eighth condition, the first data includes HARQ retransmission data and network-coded data. When the channel quality meets a ninth condition, the first data includes HARQ retransmission data. When the channel quality meets a tenth condition, the first data includes network-coded data. Optionally, the network-coded data includes network-coded retransmission data and/or network-coded new transmission data.

According to the foregoing method, a receive end may feed back channel quality to a transmit end, so that the transmit end can perform adaptive adjustment on HARQ retransmission and network coding-based transmission based on the channel quality. In this way, when the channel quality is poor, a combination gain of HARQ retransmission can be used to increase a probability of successful data reception, and when the channel quality is good, network coding-based transmission can be used to reduce excessive resource occupation in a HARQ retransmission process. This increases spectral efficiency in a data transmission process.

With reference to the eleventh aspect, in some implementations of the eleventh aspect, there may be a plurality of different implementations in which the channel quality meets the eighth condition, the ninth condition, or the tenth condition. For details, refer to the implementation 2-2 in the ninth aspect. Details are not described herein again.

According to a twelfth aspect, an embodiment of this application provides an apparatus. The apparatus can implement the method in the first aspect, the fourth aspect, the fifth aspect, the eighth aspect, the ninth aspect, any one of the possible implementations of the first aspect, any one of the possible implementations of the fourth aspect, any one of the possible implementations of the fifth aspect, any one of the possible implementations of the eighth aspect, or any one of the possible implementations of the ninth aspect. The apparatus includes a corresponding unit or component configured to perform the foregoing method. The unit included in the apparatus may be implemented by software and/or hardware. The apparatus may be, for example, a terminal or a network device, or may be a chip, a chip system, or a processor that supports a terminal or a network device in implementing the foregoing method.

According to a thirteenth aspect, an embodiment of this application provides an apparatus. The apparatus can implement the method in the second aspect, the third aspect, the sixth aspect, the seventh aspect, the tenth aspect, the eleventh aspect, any one of the possible implementations of the second aspect, any one of the possible implementations of the third aspect, any one of the possible implementations of the sixth aspect, any one of the possible implementations of the seventh aspect, any one of the possible implementations of the tenth aspect, or any one of the possible implementations of the eleventh aspect. The apparatus includes a corresponding unit or component configured to perform the foregoing method. The unit included in the apparatus may be implemented by software and/or hardware. The apparatus may be, for example, a terminal or a network device, or may be a chip, a chip system, or a processor that supports a terminal or a network device in implementing the foregoing method.

According to a fourteenth aspect, an embodiment of this application provides an apparatus. The apparatus includes a processor. The processor is coupled to a memory. The memory is configured to store a program or instructions. When the program or the instructions is or are executed by the processor, the apparatus is enabled to implement the method in the first aspect, the fourth aspect, the fifth aspect, the eighth aspect, the ninth aspect, any one of the possible implementations of the first aspect, any one of the possible implementations of the fourth aspect, any one of the possible implementations of the fifth aspect, any one of the possible implementations of the eighth aspect, or any one of the possible implementations of the ninth aspect.

According to a fifteenth aspect, an embodiment of this application provides an apparatus. The apparatus includes a processor. The processor is coupled to a memory. The memory is configured to store a program or instructions. When the program or the instructions is or are executed by the processor, the apparatus is enabled to implement the method in the second aspect, the third aspect, the sixth aspect, the seventh aspect, the tenth aspect, the eleventh aspect, any one of the possible implementations of the second aspect, any one of the possible implementations of the third aspect, any one of the possible implementations of the sixth aspect, any one of the possible implementations of the seventh aspect, any one of the possible implementations of the tenth aspect, or any one of the possible implementations of the eleventh aspect.

According to a sixteenth aspect, an embodiment of this application provides a computer-readable storage medium. The computer-readable storage medium stores a computer program or instructions. When the computer program or the instructions is or are executed, a computer is enabled to perform the method in the first aspect, the fourth aspect, the fifth aspect, the eighth aspect, the ninth aspect, any one of the possible implementations of the first aspect, any one of the possible implementations of the fourth aspect, any one of the possible implementations of the fifth aspect, any one of the possible implementations of the eighth aspect, or any one of the possible implementations of the ninth aspect.

According to a seventeenth aspect, an embodiment of this application provides a computer-readable storage medium. The computer-readable storage medium stores a computer program or instructions. When the computer program or the instructions is or are executed, a computer is enabled to perform the method in the second aspect, the third aspect, the sixth aspect, the seventh aspect, the tenth aspect, the eleventh aspect, any one of the possible implementations of the second aspect, any one of the possible implementations of the third aspect, any one of the possible implementations of the sixth aspect, any one of the possible implementations of the seventh aspect, any one of the possible implementations of the tenth aspect, or any one of the possible implementations of the eleventh aspect.

According to an eighteenth aspect, an embodiment of this application provides a computer program product. The computer program product includes computer program code. When the computer program code is run on a computer, the computer is enabled to perform the method in the first aspect, the fourth aspect, the fifth aspect, the eighth aspect, the ninth aspect, any one of the possible implementations of the first aspect, any one of the possible implementations of the fourth aspect, any one of the possible implementations of the fifth aspect, any one of the possible implementations of the eighth aspect, or any one of the possible implementations of the ninth aspect.

According to a nineteenth aspect, an embodiment of this application provides a computer program product. The computer program product includes computer program code. When the computer program code is run on a computer, the computer is enabled to perform the method in the second aspect, the third aspect, the sixth aspect, the seventh aspect, the tenth aspect, the eleventh aspect, any one of the possible implementations of the second aspect, any one of the possible implementations of the third aspect, any one of the possible implementations of the sixth aspect, any one of the possible implementations of the seventh aspect, any one of the possible implementations of the tenth aspect, or any one of the possible implementations of the eleventh aspect.

According to a twentieth aspect, an embodiment of this application provides a chip. The chip includes a processor. The processor is coupled to a memory. The memory is configured to store a program or instructions. When the program or the instructions is or are executed by the processor, the chip is enabled to implement the method in the first aspect, the fourth aspect, the fifth aspect, the eighth aspect, the ninth aspect, any one of the possible implementations of the first aspect, any one of the possible implementations of the fourth aspect, any one of the possible implementations of the fifth aspect, any one of the possible implementations of the eighth aspect, or any one of the possible implementations of the ninth aspect.

According to a twenty-first aspect, an embodiment of this application provides a chip. The chip includes a processor. The processor is coupled to a memory. The memory is configured to store a program or instructions. When the program or the instructions is or are executed by the processor, the chip is enabled to implement the method in the second aspect, the third aspect, the sixth aspect, the seventh aspect, the tenth aspect, the eleventh aspect, any one of the possible implementations of the second aspect, any one of the possible implementations of the third aspect, any one of the possible implementations of the sixth aspect, any one of the possible implementations of the seventh aspect, any one of the possible implementations of the tenth aspect, or any one of the possible implementations of the eleventh aspect.

According to a twenty-second aspect, an embodiment of this application provides a communication system. The communication system includes the apparatus according to the twelfth aspect and the apparatus according to the thirteenth aspect.

According to a twenty-third aspect, an embodiment of this application provides a communication system. The communication system includes the apparatus according to the fourteenth aspect and the apparatus according to the fifteenth aspect.

## BRIEF DESCRIPTION OF DRAWINGS

FIG. 1 is a schematic diagram of a communication system to which an embodiment of this application is applied;

FIG. 2 is a schematic diagram of an example of an architecture of a communication system;

FIG. 3 is a schematic diagram of coding according to this application;

FIG. 4 to FIG. 6 are schematic diagrams of interaction of several communication methods according to this application;

FIG. 7 to FIG. 10 are schematic diagrams of several transmission processes according to this application;

FIG. 11 is a schematic diagram of a structure of a communication apparatus according to an embodiment of this application;

FIG. 12 is a schematic diagram of a structure of a terminal according to an embodiment of this application; and

FIG. 13 is a schematic diagram of another communication apparatus according to an embodiment of this application.

## DESCRIPTION OF EMBODIMENTS

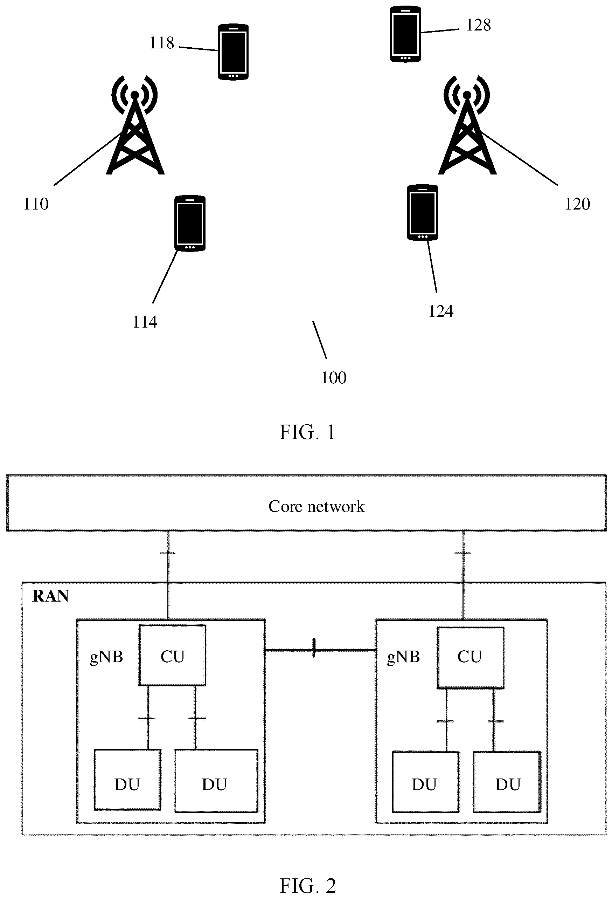

A method and an apparatus that are provided in embodiments of this application may be applied to a communication system. FIG. 1 is a schematic diagram of a structure of a communication system 100. The communication system 100 includes one or more network devices (a network device 110 and a network device 120 shown in the figure), and one or more terminals that communicate with the one or more network devices. A terminal 114 and a terminal 118 shown in FIG. 1 communicate with the network device 110, and a terminal 124 and a terminal 128 shown in FIG. 1 communicate with the network device 120. It may be understood that the network device and the terminal may also be referred to as communication devices.

The method and the apparatus that are provided in the embodiments of this application may be applied to various communication systems, for example, a 4th generation (4th generation, 4G) communication system, a 4.5G communication system, a 5G communication system, a system integrating a plurality of communication systems, or a future evolved communication system (for example, a 5.5G communication system or a 6G communication system). The communication systems include, for example, a long term evolution (long term evolution, LTE) system, a new radio (new radio, NR) system, a wireless fidelity (wireless fidelity, Wi-Fi) system, a communication system related to the 3rd generation partnership project (3rd generation partnership project, 3GPP), and another communication system of this type.

The method and the apparatus that are provided in the embodiments of this application may be applied to a plurality of communication scenarios, for example, a scenario of transmission between a network device and a terminal, a scenario of transmission between terminals, a scenario of transmission between a network device and a terminal through a relay, a scenario of dual connectivity (dual connectivity, DC) or multi-connectivity between a plurality of network devices and a terminal, and a multi-hop transmission scenario.

FIG. 2 is a schematic diagram of an example of a possible architecture of a communication system. As shown in FIG. 2, a network device in a radio access network (radio access network, RAN) is a base station (for example, a gNodeB or a gNB) with an architecture in which a centralized unit (centralized unit, CU) and a distributed unit (distributed unit, DU) are separated. The RAN may be connected to a core network (for example, the core network may be an LTE core network or a 5G core network). It may be understood that the base station is divided into the CU and the DU from the perspective of a logical function. The CU and the DU may be physically separated or deployed together. A plurality of DUs may share one CU. One DU may alternatively be connected to a plurality of CUs (not shown in the figure). The CU and the DU may be connected through an interface, for example, an Fl interface. The CU and the DU may be obtained through division based on protocol layers of a wireless network. For example, functions of a packet data convergence protocol (packet data convergence protocol, PDCP) layer and a radio resource control (radio resource control, RRC) layer are configured on the CU, but functions of a radio link control (radio link control, RLC) layer, a media access control (media access control, MAC) layer, a physical (physical, PHY) layer, and the like are configured on the DU. It may be understood that, division into processing functions of the CU and the DU based on the protocol layers is merely an example, and there may be other division. For example, the CU or the DU may have functions of more protocol layers through division. For example, the CU or the DU may alternatively have some processing functions of the protocol layers through division. In a design, some functions of the RLC layer and functions of protocol layers above the RLC layer are configured on the CU, and remaining functions of the RLC layer and functions of protocol layers below the RLC layer are configured on the DU. In another design, functions of the CU or the DU may alternatively be obtained through division based on a service type or another system requirement. For example, division is performed based on a latency, a function whose processing time needs to meet a latency requirement is configured on the DU, and a function whose processing time does not need to meet the latency requirement is configured on the CU. A network architecture shown in FIG. 2 may be applied to a 5G communication system, or may share one or more components or resources with an LTE system. In another design, the CU may alternatively have one or more functions of the core network. One or more CUs may be disposed together or separately. For example, the CUs may be disposed on a network side for ease of centralized management. The DU may have a plurality of radio frequency functions, or the radio frequency functions may be disposed remotely.

The functions of the CU may be implemented by one entity, or a control plane (control plane, CP) and a user plane (user plane, UP) may be further separated.

To be specific, the control plane of the CU (CU-CP) and the user plane of the CU (CU-UP) may be implemented by different function entities, and the CU-CP and the CU-UP may be coupled to the DU to jointly implement a function of the base station.

It may be understood that embodiments provided in this application are also applicable to an architecture in which the CU and the DU are not separated.

In this application, the network device may be any device having a wireless transceiver function. The network device includes but is not limited to: an evolved NodeB (NodeB or eNB or e-NodeB, evolved NodeB) in LTE, a base station (gNodeB or gNB) or a transmission reception point (transmission receiving point/transmission reception point, TRP) in NR, a base station that subsequently evolves in 3GPP, an access node in a Wi-Fi system, a wireless relay node, a wireless backhaul node, or the like. The base station may be a macro base station, a micro base station, a picocell base station, a small cell, a relay station, a balloon station, or the like. A plurality of base stations may support the foregoing networks using a same technology, or may support the foregoing networks using different technologies. The base station may include one or more co-site or non-co-site TRPs. The network device may alternatively be a radio controller, a CU, and/or a DU in a cloud radio access network (cloud radio access network, CRAN) scenario. The network device may alternatively be a server, a wearable device, a machine type communication device, a vehicle-mounted device, or the like. That the network device is a base station is used as an example for description below. The plurality of network devices may be base stations of a same type, or may be base stations of different types. The base station may communicate with a terminal device, or may communicate with a terminal device via a relay station. The terminal device may communicate with a plurality of base stations using different technologies. For example, the terminal device may communicate with a base station supporting an LTE network, or may communicate with a base station supporting a 5G network, or may support dual connectivity to a base station supporting an LTE network and a base station supporting a 5G network.

The terminal is a device having a wireless transceiver function. The terminal may be deployed on land, including indoors or outdoors, or may be hand-held, wearable, or vehicle-mounted; may be deployed on a water surface (for example, on a ship); or may be deployed in the air (for example, on an airplane, a balloon, or a satellite). The terminal may be a mobile phone (mobile phone), a tablet computer (Pad), a computer having a wireless transceiver function, a virtual reality (virtual reality, VR) terminal device, an augmented reality (augmented reality, AR) terminal device, a terminal in industrial control (industrial control), a vehicle-mounted terminal device, a terminal in self driving (self driving), a terminal in assisted driving, a terminal in telemedicine (remote medical), a terminal in a smart grid (smart grid), a terminal in transportation safety (transportation safety), a terminal in a smart city (smart city), a terminal in a smart home (smart home), or the like. An application scenario is not limited in embodiments of this application. Sometimes, the terminal may also be referred to as a terminal device, user equipment (user equipment, UE), an access terminal device, a vehicle-mounted terminal, an industrial control terminal, a UE unit, a UE station, a mobile station, a remote station, a remote terminal device, a mobile device, a UE terminal device, a wireless communication device, a machine terminal, a UE agent, a UE apparatus, or the like. The terminal may be fixed or movable.

By way of example and not limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a board sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

In this application, the terminal may be a terminal in an internet of things (internet of things, IoT) system. IoT is an important component in development of future information technologies. A main technical feature of the IoT is to connect an object to a network by using a communication technology, to implement an intelligent network of human-machine interconnection and thing-thing interconnection. The terminal in this application may be a terminal in machine type communication (machine type communication, MTC). The terminal in this application may be an in-vehicle module, an onboard component, an automotive chip, or an on board unit that is built in a vehicle as one or more components or units. The vehicle may implement a method in this application by using the in-vehicle module, the onboard component, the automotive chip, or the on board unit that is built in the vehicle. Therefore, embodiments of this application may be applied to an internet of vehicles, for example, vehicle to everything (vehicle to everything, V2X), long term evolution vehicle (long term evolution vehicle, LTE-V), and vehicle to vehicle (vehicle to vehicle, V2V).

A hybrid automatic repeat request (hybrid automatic repeat request, HARQ) operation is a feedback-based retransmission request mechanism. In the HARQ operation, a receive end feeds back an acknowledgment (acknowledgment, ACK) or a negative acknowledgment (negative acknowledgment, NACK) to a transmit end based on a data reception status, where the acknowledgment and the negative acknowledgment are respectively used for requesting new HARQ transmission and HARQ retransmission from the transmit end. For example, during HARQ retransmission, the receive end may perform HARQ combination, to increase a probability of successful data reception.

HARQ retransmission is usually performed for a transport block (transport block, TB) or a code block group (code block group, CBG). One TB or one CBG usually includes a plurality of code blocks (code blocks, CBs). When one or more CBs in one TB or one CBG are not correctly received, the entire TB or the entire CBG is to be retransmitted in HARQ retransmission. This increases resource overheads for retransmission, and reduces spectral efficiency of retransmission. Therefore, how to increase spectral efficiency in a data transmission process becomes an urgent problem to be resolved.

This application provides a data transmission method and an apparatus. In the provided method, network coding-based data transmission is introduced, so that a transmit end may perform adaptive adjustment on HARQ retransmission and network coding-based transmission based on a suggestion of a receive end for a transmission mode.

This application further provides another data transmission method and another apparatus. In the provided method, network coding-based data transmission is introduced, so that a transmit end may perform adaptive adjustment on HARQ retransmission and network coding-based transmission based on a data reception status or channel quality fed back by a receive end.

According to the method provided in this application, when the data reception status is poor or the channel quality is poor, a combination gain of HARQ retransmission can be used to increase a probability of successful data reception, and when the data reception status is good or the channel quality is good, network coding-based transmission can be used to reduce excessive resource occupation in a HARQ retransmission process. This increases spectral efficiency in a data transmission process.

The following describes the technical solutions of this application in detail by using specific embodiments with reference to the accompanying drawings. The following embodiments and implementations may be combined with each other, and same or similar concepts or processes may not be described again in some embodiments. It may be understood that a function explained in this application may be implemented by using an independent hardware circuit, software running in combination with a processor/microprocessor or a general-purpose computer, an application-specific integrated circuit, and/or one or more digital signal processors. When described as a method, this application may alternatively be implemented in a computer processor and/or a memory coupled to the processor

For ease of understanding of embodiments of this application, some concepts or terms used in this application are first briefly described.

1. Network coding

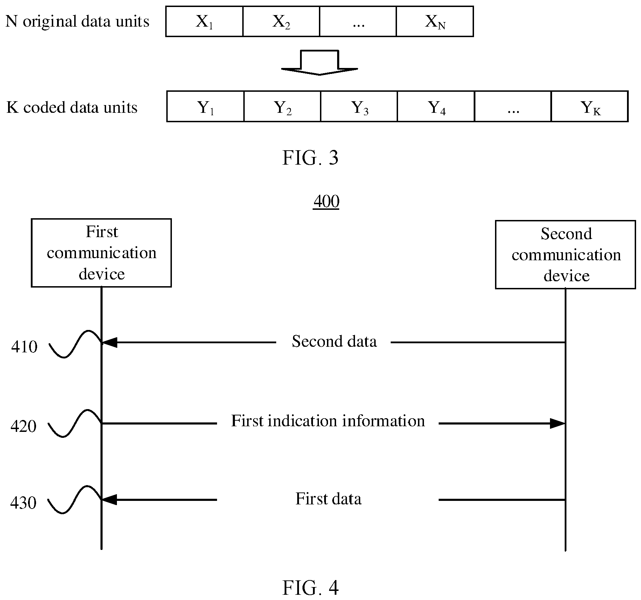

Network coding may also be referred to as network error correction coding, packet coding, or packet-level (packet-level) coding. Network coding have many types, such as packet network coding, convolutional network coding (convolutional network coding), random linear network coding (random linear network coding, RLNC), deterministic linear network coding (deterministic linear network coding, DLNC), batch sparse code (batch sparse code, BATS), erasure code (erasure code), fountain code (fountain code), maximum distance separable code (maximum distance separable code, MDS), and streaming code (streaming code). In these coding technologies, a coding operation is performed on an original data unit to obtain a corresponding coded data unit. FIG. 3 is used as an example. N original data units are encoded to obtain K coded data units. A bit rate of coding may be approximately represented as R = N/K. Because K is usually greater than or equal to N, R is usually greater than 0 and less than or equal to 1. The data unit in this application may also be referred to as a data packet or a data segment.

RLNC is used as an example. With reference to FIG. 3, the N original data units are respectively represented as $X_1, X_2, \cdots$, and $X_N$, and the N original data units may be included in one data block. In this application, the data block (block) may also be referred to as a data group (group), a data generation (generation), or a data batch (batch). In this application, the data block may also be referred to as a to-be-coded data block, a coded data block, or a network-coded data block. When the N original data units are encoded by using RLNC, the N original data units may be multiplied by K coding vectors to obtain K coded data units (which are respectively represented as $Y_1, Y_2, \cdots$, and $Y_K$). For example, the K coding vectors may be respectively represented as $[g_{1,1}, g_{1,2}, \cdots$, and $g_{1,N}]$, $[g_{2,1}, g_{2,2}, \cdots$, and $g_{2,N}]$, ..., and $[g_{K,1}, g_{K,2}, \cdots$, and $g_{K,N}]$, where each coding vector includes N coding coefficients, and an $n^{th}$ coding coefficient in a $k^{th}$ coding vector is represented as $g_{k,n}$. A coding coefficient in a coding vector may be randomly selected from a finite field or a Galois field (Galois field, GF), where the GF is a field including a finite quantity of elements, and GF(q) may be used to represent a GF including q elements. That the N original data units $X_1, X_2, \cdots$, and $X_N$ are multiplied by the K coding vectors to obtain the K coded data units $Y_1, Y_2, \cdots$, and $Y_K$ may satisfy:

$$Y_1 = g_{1,1} * X_1 + g_{1,2} * X_2 + \cdots + g_{1,N} * X_N$$

$$Y_2 = g_{2,1} * X_1 + g_{2,2} * X_2 + \cdots + g_{2,N} * X_N$$

...

$$Y_K = g_{K,1} * X_1 + g_{K,2} * X_2 + \cdots + g_{K,N} * X_N$$

A k<sup>th</sup> coded data unit $Y_k = g_{k,1} * X_1 + g_{k,2} * X_2 + \cdots + g_{k,N} * X_N$ may carry, in header information, information indicating a coding vector $[g_{k,1}, g_{k,2}, \ldots, \text{and } g_{k,N}]$, so that a receive end can decode received data based on the coding vector. It may be understood that the foregoing K coding vectors may be included in one coding matrix, and the coding matrix satisfies:

$$\begin{bmatrix} g_{1,1} & g_{1,2} & \cdots & g_{1,N} \\ g_{2,1} & g_{2,2} & \cdots & g_{2,N} \\ \vdots & \vdots & \ddots & \vdots \\ g_{K,1} & g_{K,2} & \cdots & g_{K,N} \end{bmatrix}$$

That the N original data units are multiplied by the K coding vectors to obtain the K coded data units may alternatively be understood as that the N original data units are multiplied by the coding matrix to obtain the K coded data units. It may be understood that the coding matrix may also be referred to as a generator matrix, a convolution generator matrix, or a coefficient matrix, and the coding vector may also be referred to as a coding core. For ease of description, vectors in this application are written in a form of row vectors, but the vectors may alternatively be represented in a form of column vectors. This is not limited in this application.

Optionally, a coded data unit corresponding to one data block may be transmitted in one transmission opportunity. The transmission opportunity in this application may be a scheduling occasion, a transmission occasion, or a transmission time interval. That the coded data unit corresponding to one data block is transmitted in one transmission opportunity may be understood as that all coded data units generated based on original data units in one data block are carried in one TB. Only a coded data unit corresponding to one data block may be transmitted in one transmission opportunity, or coded data units corresponding to a plurality of data blocks may be transmitted in one transmission opportunity. This is not limited in this application.

When network coding-based transmission is performed, a transmit end sends, to a receive end, data obtained through network coding processing, where the data may also be referred to as network-coded data. When receiving the data sent by the transmit end through network coding, the receive end can restore source data as long as sufficient network-coded data is received. Therefore, a burst data loss that occurs in a data transmission process does not significantly affect decoding performance of the receive end.

For example, when receiving the network-coded data from the transmit end, the receive end may determine, based on a check bit of a coded data unit, whether the coded data unit is correctly received. When the coded data unit is correctly received, the receive end may obtain, based on header information of the coded data unit, a data block corresponding to the coded data unit; obtain coding vectors respectively corresponding to correctly received coded data units corresponding to the data block; construct, based on the coding vectors, a system of linear equations in which N original data units $X_1$, $X_2$, $\cdots$, and $X_N$ are used as to-be-solved unknowns; and decode the N original data units $X_1$, $X_2$, $\cdots$, and $X_N$ in the data block by using a linear equation theory.

In this application, the foregoing operations related to network coding may be completed by a protocol layer having a network coding function. The protocol layer having the network coding function may be an RRC layer, a PDCP layer, a backhaul adaptation protocol (backhaul adaptation protocol, BAP) layer, an RLC layer, a MAC layer, or a PHY layer, or may be a new protocol layer other than the foregoing protocol layers. For example, the new protocol layer may be located above the PDCP layer, above the BAP layer, between the PDCP layer and the RLC layer, between the RLC layer and the MAC layer, or between the MAC layer and the PHY layer. The new protocol layer may also be referred to as a network coding layer, an encoding/decoding layer, a network encoding/decoding layer, a network encoding and decoding layer, or another name. This is not limited in this application.

2. Galois field (Galois field, GF) and operations in the GF

The GF is a field including a finite quantity of elements, and GF(q) may be used to represent a GF including q elements, where q is a positive integer. For example, GF(2) includes two elements: 0 and 1 (which may also be understood as that the element in GF(2) can be represented in binary), GF(4) includes four elements: 0, 1, 2, and 3, and GF(q) includes q elements: 0, 1, ..., and q-1.

In this application, if an element included in a coding matrix, a coding vector, or a coding core is an element in a GF, an operation related to coding may be understood as an operation in the GF.

- Multiplication in the GF An element in the GF may be generated by using a primitive polynomial P(x) in the GF. Polynomial multiplication in the GF may be performed by mapping the element in the GF to a form of a polynomial, mapping a multiplication operation in the GF to polynomial multiplication, and then performing a modulo operation on the primitive polynomial P(x). For example, when q = 4, a primitive polynomial of GF(4) is $P(x) = x^2+x+1$, and 2-bit data (for example, '10', whose corresponding polynomial form is x) is multiplied by 2-bit data (for example, ’11’, whose corresponding polynomial form is x+1) in GF(4) to satisfy $(x * (x+1)) \bmod P(x) = (x^2+x) \bmod (x^2+x+1) = 1$ (mod indicates modulo), corresponding to "01" in binary. For another example, when q = 4, 4-bit data (for example, ’1011’) and 2-bit data (for example, ’11’, whose corresponding polynomial form is x+1) are multiplied in GF(4). In this case, the first two bits ’10’ (whose corresponding polynomial form is x) and the last two bits ’11’ (whose corresponding polynomial form is x+1) in the 4-bit data ’1011’ each may be multiplied by the 2-bit data ’11’ (whose corresponding polynomial form is x+1) in GF(4), and then the separately obtained results are concatenated to obtain a result of multiplying ’1011’ and ’11’ in GF(4), that is:

- $(x * (x+1)) \bmod P(x) = (x^2+x) \bmod (x^2+x+1) = 1$, corresponding to ’01’ in binary;
- $((x+1) * (x+1)) \bmod P(x) = (x^2+2x+1) \bmod (x^2+x+1) = x$, corresponding to ’10’ in binary; and
- ’01’ and ’10’ are concatenated to obtain a result of multiplying ’1011’ and ’11’ in GF(4), corresponding to ’0110’ in binary.

● Addition in the GF Polynomial addition in the GF may be performed by mapping an element in the GF to a form of a polynomial, and mapping an addition operation in the GF to polynomial addition (for example, XOR of coefficients of similar terms). For example, XOR addition is performed on 2-bit data (for example, ’10’, whose corresponding polynomial form is x) and 2-bit data (for example, ’11’, whose corresponding polynomial form is x+1) in the GF to satisfy $x \oplus (x+1) = (x+0) \oplus (x+1) = (x \oplus x) + (0 \oplus 1) = 0 + 1 = 1$ ($\oplus$ indicates XOR addition), corresponding to "01" in binary.

3. HARQ operation

The HARQ operation has both advantages of forward error correction and an automatic repeat request, and can improve data transmission reliability and a system throughput. The HARQ operation is a feedback-based retransmission request mechanism. In the HARQ operation, a receive end feeds back an ACK or a NACK to a transmit end based on a data reception status, where the ACK or the NACK are respectively used for requesting new HARQ transmission and HARQ retransmission from the transmit end.

When receiving the ACK from the receive end, the transmit end sends new HARQ transmission data to the receive end in a next sending process.

When receiving the NACK from the receive end, the transmit end sends HARQ retransmission data to the receive end in a next sending process. When the transmit end does not receive an ACK corresponding to data, the transmit end may store HARQ retransmission data corresponding to the data into a buffer. When receiving a NACK, the transmit end may obtain, from the buffer, the HARQ retransmission data that needs to be retransmitted, and process and send the HARQ retransmission data. This process may also be referred to as HARQ retransmission. When receiving the ACK corresponding to the data, the transmit end may release or delete the HARQ retransmission data corresponding to the data from the buffer.

4. Hybrid transmission of HARQ retransmission and network coding-based transmission (which may also be referred to as HARQ retransmission and network coding-based transmission for short)

When hybrid transmission of HARQ retransmission and network coding-based transmission is performed, HARQ retransmission data and network-coded data may be simultaneously transmitted. For example, the transmit end may include, in one TB for sending, HARQ retransmission data and a coded data unit that is output by a protocol layer having a network coding function. A total size of the HARQ retransmission data and the coded data unit that is output by the protocol layer having the network coding function may be the same as a size of the TB, or may be different from a size of the TB. This is not limited in this application.

5. Physical resource

The physical resource (which may also be referred to as a resource for short) in this application may include one or more of a time domain resource, a frequency domain resource, a code domain resource, or a spatial domain resource. For example, the time domain resource included in the physical resource may include at least one frame, at least one subframe (sub-frame), at least one slot (slot), at least one mini-slot (mini-slot), at least one time unit, or at least one time domain symbol. For example, the frequency domain resource included in the physical resource may include at least one carrier (carrier), at least one component carrier (component carrier, CC), at least one bandwidth part (bandwidth part, BWP), at least one resource block group (resource block group, RBG), at least one physical resource block group (physical resource block group, PRG), at least one resource block (resource block, RB), or at least one subcarrier (sub-carrier, SC). For example, the spatial domain resource included in the physical resource may include at least one beam, at least one port, at least one antenna port, or at least one layer/space layer. For example, the code domain resource included in the physical resource may include at least one orthogonal cover code (orthogonal cover code, OCC) or at least one non-orthogonal multiple access (non-orthogonal multiple access, NOMA) code.

It may be understood that the physical resource may be a physical resource of a baseband, and the physical resource of the baseband may be used by a baseband chip. Alternatively, the physical resource may be a physical resource of an air interface. Alternatively, the physical resource may be a physical resource of an intermediate frequency or a radio frequency.

FIG. 4 is a schematic diagram of interaction of a communication method 400 according to an embodiment of this application. In FIG. 4, an example in which a first communication device and a second communication device are used as execution bodies of interaction in the schematic diagram is used to illustrate the communication method. For example, the first communication device is a network device, or is a chip, a chip system, or a processor in a network device; and the second communication device is a terminal, or is a chip, a chip system, or a processor in a terminal. For another example, the first communication device is a terminal, or is a chip, a chip system, or a processor in a terminal; and the second communication device is a network device, or is a chip, a chip system, or a processor in a network device. For another example, the first communication device is a terminal, or is a chip, a chip system, or a processor in a terminal; and the second communication device is another terminal, or is a chip, a chip system, or a processor in another terminal. The first communication device may be understood as a data receive end (which may be referred to as a receive end for short), and the second communication device may be understood as a data transmit end (which may be referred to as a transmit end for short). As shown in FIG. 4, the method 400 in this embodiment may include a part 410, a part 420, and a part 430.

Part 410: The second communication device sends second data to the first communication device. Correspondingly, the first communication device receives the second data from the second communication device.

Part 420: The first communication device sends, to the second communication device, first indication information used for transmitting first data. Correspondingly, the second communication device receives the first indication information from the first communication device. The first indication information indicates HARQ retransmission or network coding-based transmission. Optionally, the first indication information may alternatively indicate HARQ retransmission and network coding-based transmission. Specific content indicated by the first indication information is related to a status of receiving the second data by the first communication device.

In a possible implementation of the first indication information, the first indication information is carried in one or more newly added indication fields. For example, one or more indication fields are newly added to a downlink control information (downlink control information, DCI), uplink control information (uplink control information, UCI), MAC control element (control element, CE), or RRC message, to carry the first indication information.

In another possible implementation of the first indication information, the first indication information may be implemented by using an ACK/a NACK. The ACK/NACK may be transmitted on a control channel or a data channel. The control channel in this application may be a physical uplink control channel (physical uplink control channel, PUCCH), a physical downlink control channel (physical downlink control channel, PDCCH), a physical sidelink control channel (physical sidelink control channel, PSCCH), or a physical sidelink feedback channel (physical sidelink feedback channel, PSFCH). The data channel in this application may be a physical uplink shared channel (physical uplink shared channel, PUSCH), a physical downlink shared channel (physical downlink shared channel, PDSCH), a physical sidelink shared channel (physical sidelink shared channel, PSSCH), or a physical sidelink broadcast channel (physical sidelink broadcast channel, PSBCH). In this manner, an existing indication field can be reused to indicate HARQ retransmission or network coding-based transmission This reduces overheads of an additional indication field.

For example, when the first indication information indicates HARQ retransmission or network coding-based transmission, the ACK indicates network coding-based transmission, and the NACK indicates HARQ retransmission; or the NACK indicates network coding-based transmission, and the ACK indicates HARQ retransmission

For another example, when the first indication information indicates HARQ retransmission, network coding-based transmission, or HARQ retransmission and network coding-based transmission, (ACK, ACK) indicates network coding-based transmission, (NACK, NACK) indicates HARQ retransmission, and (ACK, NACK) indicates HARQ retransmission and network coding-based transmission (ACK, ACK) indicates that the first indication information indicates two ACKs, (NACK, NACK) indicates that the first indication information indicates two NACKs, and (ACK, NACK) indicates that the first indication information indicates one ACK and one NACK.

Optionally, before part 420, the method 400 may further include: The first communication device sends fourth indication information to the second communication device, and the second communication device receives the fourth indication information. In part 420, the second communication device determines, based on the fourth indication information, a meaning indicated by the ACK/NACK in the first indication information. According to the method, new HARQ transmission and HARQ retransmission of an existing terminal are compatible, so that working performance of the existing terminal in a system is not affected while spectral efficiency is improved by using the method provided in this application

When the first indication information indicates HARQ retransmission or network coding-based transmission, for example, when the fourth indication information indicates a first value, the ACK or the NACK in the first indication information respectively indicates new HARQ transmission or HARQ retransmission; or when the fourth indication information indicates a second value, the ACK or the NACK in the first indication information respectively indicates network coding-based transmission or HARQ retransmission, or the ACK or the NACK in the first indication information respectively indicates HARQ retransmission or network coding-based transmission. For another example, when the second communication device does not receive the fourth indication information, the ACK or the NACK in the first indication information respectively indicates new HARQ transmission or HARQ retransmission. When the second communication device receives the fourth indication information, the ACK or the NACK in the first indication information respectively indicates network coding-based transmission or HARQ retransmission, or the ACK or the NACK in the first indication information respectively indicates HARQ retransmission or network coding-based transmission. The first value and the second value may be predefined, or may be indicated or configured by the network device.

When the first indication information indicates HARQ retransmission, network coding-based transmission, or HARQ retransmission and network coding-based transmission, for example, when the fourth indication information indicates a third value, (ACK, ACK), (NACK, NACK), or (ACK, NACK) in the first indication information respectively indicates that new HARQ transmission is performed on two CBGs, HARQ retransmission is performed on two CBGs, or new HARQ transmission and HARQ retransmission are respectively performed on two CBGs; or when the fourth indication information indicates a fourth value, (ACK, ACK), (NACK, NACK), or (ACK, NACK) respectively indicates network coding-based transmission, HARQ retransmission, or HARQ retransmission and network coding-based transmission. For another example, when the second communication device does not receive the fourth indication information, (ACK, ACK), (NACK, NACK), or (ACK, NACK) in the first indication information respectively indicates that new HARQ transmission is performed on two CBGs, HARQ retransmission is performed on two CBGs, or new HARQ transmission and HARQ retransmission are respectively performed on two CBGs. When the second communication device receives the fourth indication information, (ACK, ACK), (NACK, NACK), or (ACK, NACK) in the first indication information respectively indicates network coding-based transmission, HARQ retransmission, or HARQ retransmission and network coding-based transmission. The third value and the fourth value may be predefined, or may be indicated or configured by the network device.

Part 430: The second communication device sends the first data to the first communication device based on content indicated by the first indication information. Correspondingly, the first communication device receives the first data from the second communication device. When the first indication information indicates HARQ retransmission, the second communication device sends, to the first communication device through a HARQ operation, the first data including HARQ retransmission data. When the first indication information indicates network coding-based transmission, the second communication device sends, to the first communication device through network coding, the first data including network-coded data. Optionally, when the first indication information indicates HARQ retransmission and network coding-based transmission, the second communication device sends, to the first communication device through a HARQ operation and network coding, the first data including HARQ retransmission data and network-coded data.

According to the foregoing method, the receive end may send, to the transmit end based on a data reception status, first indication information indicating HARQ retransmission and/or network coding-based transmission, to indicate the transmit end to perform adaptive adjustment on HARQ retransmission and network coding-based transmission. In this way, when the data reception status is poor, a combination gain of HARQ retransmission can be used to increase a probability of successful data reception, and when the data reception status is good, network coding-based transmission can be used to reduce excessive resource occupation in a HARQ retransmission process. This increases spectral efficiency in a data transmission process.

In the method 400, the specific content indicated by the first indication information is related to the status of receiving the second data by the first communication device.

In a possible implementation in which the first indication information indicates the specific content, when the reception status of the second data meets a first condition, the first indication information indicates HARQ retransmission; or when the reception status of the second data meets a second condition, the first indication information indicates network coding-based transmission. There are a plurality of different implementations in which the reception status of the second data meets the first condition or the second condition. The following describes, by using implementations 1-1 to 1-15, different implementations in which the reception status of the second data meets the first condition or the second condition.

Implementation 1-1

In the implementation 1-1, all or a part of the second data is carried in a TB, and the TB includes one or more CBs. That the reception status of the second data meets the first condition specifically includes: A ratio of a quantity of incorrectly received CBs in the TB to a quantity of all CBs in the TB is greater than (or greater than or equal to) a first threshold. That the reception status of the second data meets the second condition specifically includes: A ratio of a quantity of incorrectly received CBs in the TB to a quantity of all CBs in the TB is less than (or less than or equal to) a second threshold. It may be understood that the first threshold and the second threshold may be one threshold, or may be two different thresholds. For example, a value of the first threshold may be 0.2, and a value of the second threshold may be 0.2; or a value of the first threshold may be 0.25, and a value of the second threshold may be 0.15. According to this implementation, the receive end may send, to the transmit end based on a proportion of the incorrectly received CBs in the TB, the first indication information indicating HARQ retransmission or network coding-based transmission, to indicate the transmit end to perform adaptive adjustment on HARQ retransmission and network coding-based transmission. In this way, when the proportion of the incorrectly received CBs in the TB is high, a combination gain of HARQ retransmission can be used to increase a probability of successful data reception, and when the proportion of the incorrectly received CBs in the TB is low, network coding-based transmission can be used to reduce excessive resource occupation in a HARQ retransmission process. This increases spectral efficiency in a data transmission process.

Implementation 1-2

In the implementation 1-2, all or a part of the second data is carried in a TB, and the TB includes one or more CBGs. That the reception status of the second data meets the first condition specifically includes: A ratio of a quantity of incorrectly received CBGs in the TB to a quantity of all CBGs in the TB is greater than (or greater than or equal to) a third threshold. That the reception status of the second data meets the second condition specifically includes: A ratio of a quantity of incorrectly received CBGs in the TB to a quantity of all CBGs in the TB is less than (or less than or equal to) a fourth threshold. It may be understood that the third threshold and the fourth threshold may be one threshold, or may be two different thresholds. For example, a value of the third threshold may be 0.3, and a value of the fourth threshold may be 0.3; or a value of the third threshold may be 0.35, and a value of the fourth threshold may be 0.25. According to this implementation, the receive end may send, to the transmit end based on a proportion of the incorrectly received CBGs in the TB, the first indication information indicating HARQ retransmission or network coding-based transmission, to indicate the transmit end to perform adaptive adjustment on HARQ retransmission and network coding-based transmission. In this way, when the proportion of the incorrectly received CBGs in the TB is high, a combination gain of HARQ retransmission can be used to increase a probability of successful data reception, and when the proportion of the incorrectly received CBGs in the TB is low, network coding-based transmission can be used to reduce excessive resource occupation in a HARQ retransmission process. This increases spectral efficiency in a data transmission process.

Implementation 1-3

In the implementation 1-3, all or a part of the second data is carried in a TB, and the TB includes one or more CBs. That the reception status of the second data meets the first condition specifically includes: A ratio of a quantity of correctly received CBs in the TB to a quantity of all CBs in the TB is less than (or less than or equal to) a thirteenth threshold. That the reception status of the second data meets the second condition specifically includes: A ratio of a quantity of correctly received CBs in the TB to a quantity of all CBs in the TB is greater than (or greater than or equal to) a fourteenth threshold. It may be understood that the thirteenth threshold and the fourteenth threshold may be one threshold, or may be two different thresholds. For example, a value of the thirteenth threshold may be 0.8, and a value of the fourteenth threshold may be 0.8; or a value of the thirteenth threshold may be 0.75, and a value of the fourteenth threshold may be 0.85. According to this implementation, the receive end may send, to the transmit end based on a proportion of the correctly received CBs in the TB, the first indication information indicating HARQ retransmission or network coding-based transmission, to indicate the transmit end to perform adaptive adjustment on HARQ retransmission and network coding-based transmission. In this way, when the proportion of the correctly received CBs in the TB is low, a combination gain of HARQ retransmission can be used to increase a probability of successful data reception, and when the proportion of the correctly received CBs in the TB is high, network coding-based transmission can be used to reduce excessive resource occupation in a HARQ retransmission process. This increases spectral efficiency in a data transmission process.

Implementation 1-4

In the implementation 1-4, all or a part of the second data is carried in a TB, and the TB includes one or more CBGs. That the reception status of the second data meets the first condition specifically includes: A ratio of a quantity of correctly received CBGs in the TB to a quantity of all CBGs in the TB is less than (or less than or equal to) a fifteenth threshold. That the reception status of the second data meets the second condition specifically includes: A ratio of a quantity of correctly received CBGs in the TB to a quantity of all CBGs in the TB is greater than (or greater than or equal to) a sixteenth threshold. It may be understood that the fifteenth threshold and the sixteenth threshold may be one threshold, or may be two different thresholds. For example, a value of the fifteenth threshold may be 0.7, and a value of the sixteenth threshold may be 0.7; or a value of the fifteenth threshold may be 0.65, and a value of the sixteenth threshold may be 0.75. According to this implementation, the receive end may send, to the transmit end based on a proportion of the correctly received CBGs in the TB, the first indication information indicating HARQ retransmission or network coding-based transmission, to indicate the transmit end to perform adaptive adjustment on HARQ retransmission and network coding-based transmission. In this way, when the proportion of the correctly received CBGs in the TB is low, a combination gain of HARQ retransmission can be used to increase a probability of successful data reception, and when the proportion of the correctly received CBGs in the TB is high, network coding-based transmission can be used to reduce excessive resource occupation in a HARQ retransmission process. This increases spectral efficiency in a data transmission process.

Implementation 1-5

In the implementation 1-5, all or a part of the second data is carried in a TB, and the TB includes one or more CBs. That the reception status of the second data meets the first condition specifically includes: A quantity of incorrectly received CBs in the TB is greater than (or greater than or equal to) a seventeenth threshold. That the reception status of the second data meets the second condition specifically includes: A quantity of incorrectly received CBs in the TB is less than (or less than or equal to) an eighteenth threshold. It may be understood that the seventeenth threshold and the eighteenth threshold may be one threshold, or may be two different thresholds. For example, a value of the seventeenth threshold may be 3, and a value of the eighteenth threshold may be 3; or a value of the seventeenth threshold may be 4, and a value of the eighteenth threshold may be 2. According to this implementation, the receive end may send, to the transmit end based on the quantity of incorrectly received CBs in the TB, the first indication information indicating HARQ retransmission or network coding-based transmission, to indicate the transmit end to perform adaptive adjustment on HARQ retransmission and network coding-based transmission. In this way, when the quantity of incorrectly received CBs in the TB is large, a combination gain of HARQ retransmission can be used to increase a probability of successful data reception, and when the quantity of incorrectly received CBs in the TB is small, network coding-based transmission can be used to reduce excessive resource occupation in a HARQ retransmission process. This increases spectral efficiency in a data transmission process.

Implementation 1-6

In the implementation 1-6, all or a part of the second data is carried in a TB, and the TB includes one or more CBGs. That the reception status of the second data meets the first condition specifically includes: A quantity of incorrectly received CBGs in the TB is greater than (or greater than or equal to) a nineteenth threshold. That the reception status of the second data meets the second condition specifically includes: A quantity of incorrectly received CBGs in the TB is less than (or less than or equal to) a twentieth threshold. It may be understood that the nineteenth threshold and the twentieth threshold may be one threshold, or may be two different thresholds. For example, a value of the nineteenth threshold may be 2, and a value of the twentieth threshold may be 2; or a value of the nineteenth threshold may be 3, and a value of the twentieth threshold may be 1. According to this implementation, the receive end may send, to the transmit end based on the quantity of incorrectly received CBGs in the TB, the first indication information indicating HARQ retransmission or network coding-based transmission, to indicate the transmit end to perform adaptive adjustment on HARQ retransmission and network coding-based transmission. In this way, when the quantity of incorrectly received CBGs in the TB is large, a combination gain of HARQ retransmission can be used to increase a probability of successful data reception, and when the quantity of incorrectly received CBGs in the TB is small, network coding-based transmission can be used to reduce excessive resource occupation in a HARQ retransmission process. This increases spectral efficiency in a data transmission process.

Implementation 1-7

In the implementation 1-7, all or a part of the second data is carried in a TB, and the TB includes one or more CBs. That the reception status of the second data meets the first condition specifically includes: A quantity of correctly received CBs in the TB is less than (or less than or equal to) a twenty-first threshold. That the reception status of the second data meets the second condition specifically includes: A quantity of correctly received CBs in the TB is greater than (or greater than or equal to) a twenty-second threshold. It may be understood that the twenty-first threshold and the twenty-second threshold may be one threshold, or may be two different thresholds. For example, a value of the twenty-first threshold may be a smaller value between a value 4 and the quantity of all CBs in the TB, and a value of the twenty-second threshold may be a smaller value between the value 4 and the quantity of all CBs in the TB; or a value of the twenty-first threshold may be a smaller value between a value 3 and the quantity of all CBs in the TB, and a value of the twenty-second threshold may be a smaller value between a value 5 and the quantity of all CBs in the TB. According to this implementation, the receive end may send, to the transmit end based on the quantity of correctly received CBs in the TB, the first indication information indicating HARQ retransmission or network coding-based transmission, to indicate the transmit end to perform adaptive adjustment on HARQ retransmission and network coding-based transmission. In this way, when the quantity of correctly received CBs in the TB is small, a combination gain of HARQ retransmission can be used to increase a probability of successful data reception, and when the quantity of correctly received CBs in the TB is large, network coding-based transmission can be used to reduce excessive resource occupation in a HARQ retransmission process. This increases spectral efficiency in a data transmission process.

Implementation 1-8

In the implementation 1-8, all or a part of the second data is carried in a TB, and the TB includes one or more CBGs. That the reception status of the second data meets the first condition specifically includes: A quantity of correctly received CBGs in the TB is less than (or less than or equal to) a twenty-third threshold. That the reception status of the second data meets the second condition specifically includes: A quantity of correctly received CBGs in the TB is greater than (or greater than or equal to) a twenty-fourth threshold. It may be understood that the twenty-third threshold and the twenty-fourth threshold may be one threshold, or may be two different thresholds. For example, a value of the twenty-third threshold may be a smaller value between a value 3 and the quantity of all CBGs in the TB, and a value of the twenty-fourth threshold may be a smaller value between the value 3 and the quantity of all CBGs in the TB; or a value of the twenty-third threshold may be a smaller value between a value 4 and the quantity of all CBGs in the TB, and a value of the twenty-fourth threshold may be a smaller value between a value 2 and the quantity of all CBGs in the TB. According to this implementation, the receive end may send, to the transmit end based on the quantity of correctly received CBGs in the TB, the first indication information indicating HARQ retransmission or network coding-based transmission, to indicate the transmit end to perform adaptive adjustment on HARQ retransmission and network coding-based transmission. In this way, when the quantity of correctly received CBGs in the TB is small, a combination gain of HARQ retransmission can be used to increase a probability of successful data reception, and when the quantity of correctly received CBGs in the TB is large, network coding-based transmission can be used to reduce excessive resource occupation in a HARQ retransmission process. This increases spectral efficiency in a data transmission process.

Implementation 1-9

In the implementation 1-9, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the first condition specifically includes: A ratio of a quantity of incorrectly received coded data units in the transmission opportunity to a quantity of all coded data units in the transmission opportunity is greater than (or greater than or equal to) a twenty-fifth threshold. That the reception status of the second data meets the second condition specifically includes: A ratio of a quantity of incorrectly received coded data units in the transmission opportunity to a quantity of all coded data units in the transmission opportunity is less than (or less than or equal to) a twenty-sixth threshold. It may be understood that the twenty-fifth threshold and the twenty-sixth threshold may be one threshold, or may be two different thresholds. For example, a value of the twenty-fifth threshold may be 0.2, and a value of the twenty-sixth threshold may be 0.2; or a value of the twenty-fifth threshold may be 0.25, and a value of the twenty-sixth threshold may be 0.15. According to this implementation, the receive end may send, to the transmit end based on a proportion of the incorrectly received coded data units in the transmission opportunity, the first indication information indicating HARQ retransmission or network coding-based transmission, to indicate the transmit end to perform adaptive adjustment on HARQ retransmission and network coding-based transmission. In this way, when the proportion of the incorrectly received coded data units in the transmission opportunity is high, a combination gain of HARQ retransmission can be used to increase a probability of successful data reception, and when the proportion of the incorrectly received coded data units in the transmission opportunity is low, network coding-based transmission can be used to reduce excessive resource occupation in a HARQ retransmission process. This increases spectral efficiency in a data transmission process.

Implementation 1-10

In the implementation 1-10, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the first condition specifically includes: A ratio of a quantity of correctly received coded data units in the transmission opportunity to a quantity of all coded data units in the transmission opportunity is less than (or less than or equal to) a twenty-seventh threshold. That the reception status of the second data meets the second condition specifically includes: A ratio of a quantity of correctly received coded data units in the transmission opportunity to a quantity of all coded data units in the transmission opportunity is greater than (or greater than or equal to) a twenty-eighth threshold. It may be understood that the twenty-seventh threshold and the twenty-eighth threshold may be one threshold, or may be two different thresholds. For example, a value of the twenty-seventh threshold may be 0.8, and a value of the twenty-eighth threshold may be 0.8; or a value of the twenty-seventh threshold may be 0.75, and a value of the twenty-eighth threshold may be 0.85. According to this implementation, the receive end may send, to the transmit end based on a proportion of the correctly received coded data units in the transmission opportunity, the first indication information indicating HARQ retransmission or network coding-based transmission, to indicate the transmit end to perform adaptive adjustment on HARQ retransmission and network coding-based transmission. In this way, when the proportion of the correctly received coded data units in the transmission opportunity is low, a combination gain of HARQ retransmission can be used to increase a probability of successful data reception, and when the proportion of the correctly received coded data units in the transmission opportunity is high, network coding-based transmission can be used to reduce excessive resource occupation in a HARQ retransmission process. This increases spectral efficiency in a data transmission process.

Implementation 1-11

In the implementation 1-11, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the first condition specifically includes: A quantity of incorrectly received coded data units in the transmission opportunity is greater than (or greater than or equal to) a twenty-ninth threshold. That the reception status of the second data meets the second condition specifically includes: A quantity of incorrectly received coded data units in the transmission opportunity is less than (or less than or equal to) a thirtieth threshold. It may be understood that the twenty-ninth threshold and the thirtieth threshold may be one threshold, or may be two different thresholds. For example, a value of the twenty-ninth threshold may be 3, and a value of the thirtieth threshold may be 3; or a value of the twenty-ninth threshold may be 4, and a value of the thirtieth threshold may be 2. According to this implementation, the receive end may send, to the transmit end based on the quantity of incorrectly received coded data units in the transmission opportunity, the first indication information indicating HARQ retransmission or network coding-based transmission, to indicate the transmit end to perform adaptive adjustment on HARQ retransmission and network coding-based transmission. In this way, when the quantity of incorrectly received coded data units in the transmission opportunity is large, a combination gain of HARQ retransmission can be used to increase a probability of successful data reception, and when the quantity of incorrectly received coded data units in the transmission opportunity is small, network coding-based transmission can be used to reduce excessive resource occupation in a HARQ retransmission process. This increases spectral efficiency in a data transmission process.

Implementation 1-12

In the implementation 1-12, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the first condition specifically includes: A quantity of correctly received coded data units in the transmission opportunity is less than (or less than or equal to) a thirty-first threshold. That the reception status of the second data meets the second condition specifically includes: A quantity of correctly received coded data units in the transmission opportunity is greater than (or greater than or equal to) a thirty-second threshold. It may be understood that the thirty-first threshold and the thirty-second threshold may be one threshold, or may be two different thresholds. For example, a value of the thirty-first threshold may be a smaller value between a value 4 and the quantity of all coded data units in the transmission opportunity, and a value of the thirty-second threshold may be a smaller value between the value 4 and the quantity of all coded data units in the transmission opportunity; or a value of the thirty-first threshold may be a smaller value between a value 3 and the quantity of all coded data units in the transmission opportunity, and a value of the thirty-second threshold may be a smaller value between a value 5 and the quantity of all coded data units in the transmission opportunity. According to this implementation, the receive end may send, to the transmit end based on the quantity of correctly received coded data units in the transmission opportunity, the first indication information indicating HARQ retransmission or network coding-based transmission, to indicate the transmit end to perform adaptive adjustment on HARQ retransmission and network coding-based transmission. In this way, when the quantity of correctly received coded data units in the transmission opportunity is small, a combination gain of HARQ retransmission can be used to increase a probability of successful data reception, and when the quantity of correctly received coded data units in the transmission opportunity is large, network coding-based transmission can be used to reduce excessive resource occupation in a HARQ retransmission process. This increases spectral efficiency in a data transmission process.

Implementation 1-13

In the implementation 1-13, the second data corresponds to one or more coded data units, and the coded data unit corresponds to a data block including one or more original data units. That the reception status of the second data meets the first condition specifically includes: A ratio of a rank of a matrix including a coding vector corresponding to a correctly received coded data unit corresponding to the data block to a quantity of original data units included in the data block is less than (or less than or equal to) a thirty-third threshold. That the reception status of the second data meets the second condition specifically includes: A ratio of a rank of a matrix including a coding vector corresponding to a correctly received coded data unit corresponding to the data block to a quantity of original data units included in the data block is greater than (or greater than or equal to) a thirty-fourth threshold. It may be understood that the thirty-third threshold and the thirty-fourth threshold may be one threshold, or may be two different thresholds. For example, a value of the thirty-third threshold may be 0.8, and a value of the thirty-fourth threshold may be 0.8; or a value of the thirty-third threshold may be 0.75, and a value of the thirty-fourth threshold may be 0.85. According to this implementation, the receive end may send, to the transmit end based on the ratio of the rank of the matrix including the coding vector corresponding to the correctly received coded data unit corresponding to the data block to the quantity of original data units included in the data block, the first indication information indicating HARQ retransmission or network coding-based transmission, to indicate the transmit end to perform adaptive adjustment on HARQ retransmission and network coding-based transmission. In this way, when the ratio is low, a combination gain of HARQ retransmission can be used to increase a probability of successful data reception, and when the ratio is high, network coding-based transmission can be used to reduce excessive resource occupation in a HARQ retransmission process. This increases spectral efficiency in a data transmission process.

Implementation 1-14

In the implementation 1-14, the second data corresponds to one or more coded data units, and the coded data unit corresponds to a data block including one or more original data units. That the reception status of the second data meets the first condition specifically includes: A difference between a rank of a matrix including a coding vector corresponding to a correctly received coded data unit corresponding to the data block and a quantity of original data units included in the data block is greater than (or greater than or equal to) a thirty -fifth threshold. That the reception status of the second data meets the second condition specifically includes: A difference between a rank of a matrix including a coding vector corresponding to a correctly received coded data unit corresponding to the data block and a quantity of original data units included in the data block is less than (or less than or equal to) a thirty-sixth threshold. It may be understood that the thirty-fifth threshold and the thirty-sixth threshold may be one threshold, or may be two different thresholds. For example, a value of the thirty-fifth threshold may be 2, and a value of the thirty-sixth threshold may be 2; or a value of the thirty-fifth threshold may be 3, and a value of the thirty-sixth threshold may be 1. According to this implementation, the receive end may send, to the transmit end based on the difference between the rank of the matrix including the coding vector corresponding to the correctly received coded data unit corresponding to the data block and the quantity of original data units included in the data block, the first indication information indicating HARQ retransmission or network coding-based transmission, to indicate the transmit end to perform adaptive adjustment on HARQ retransmission and network coding-based transmission. In this way, when the difference is large, a combination gain of HARQ retransmission can be used to increase a probability of successful data reception, and when the difference is small, network coding-based transmission can be used to reduce excessive resource occupation in a HARQ retransmission process. This increases spectral efficiency in a data transmission process.

Implementation 1-15

In the implementation 1-15, that the reception status of the second data meets the first condition specifically includes: meeting one first condition or a combination of a plurality of first conditions described in the foregoing implementations 1-1 to 1-14, and that the reception status of the second data meets the second condition specifically includes: meeting one second condition or a combination of a plurality of second conditions described in the foregoing implementations 1-1 to 1-14.

In another possible implementation in which the first indication information indicates the specific content, when the reception status of the second data meets a third condition, the first indication information indicates HARQ retransmission and network coding-based transmission; when the reception status of the second data meets a fourth condition, the first indication information indicates HARQ retransmission; or when the reception status of the second data meets a fifth condition, the first indication information indicates network coding-based transmission. There are a plurality of different implementations in which the reception status of the second data meets the third condition, the fourth condition, or the fifth condition. The following describes, by using implementations 1-16 to 1-30, different implementations in which the reception status of the second data meets the third condition, the fourth condition, or the fifth condition.

Implementation 1-16

In the implementation 1-16, all or a part of the second data is carried in a TB, and the TB includes one or more CBs. That the reception status of the second data meets the third condition specifically includes: A ratio of a quantity of incorrectly received CBs in the TB to a quantity of all CBs in the TB is greater than (or greater than or equal to) a fifth threshold. That the reception status of the second data meets the fourth condition specifically includes: A ratio of a quantity of incorrectly received CBs in the TB to a quantity of all CBs in the TB falls within a first value interval. That the reception status of the second data meets the fifth condition specifically includes: A ratio of a quantity of incorrectly received CBs in the TB to a quantity of all CBs in the TB is less than (or less than or equal to) a sixth threshold. It may be understood that the fifth threshold and the sixth threshold may be one threshold, or may be two different thresholds. When the fifth threshold and the sixth threshold are two different thresholds, values of two endpoints of the first value interval may be the fifth threshold and the sixth threshold. For example, the fifth threshold may be 0.4, the sixth threshold may be 0.2, and the first value interval may be (0.2, 0.4); or the fifth threshold may be 0.5, the sixth threshold may be 0.3, and the first value interval may be (0.3, 0.5). According to this implementation, the receive end may send, to the transmit end based on a proportion of the incorrectly received CBs in the TB, the first indication information indicating HARQ retransmission and/or network coding-based transmission, to indicate the transmit end to perform adaptive adjustment on HARQ retransmission and network coding-based transmission. In this way, when the proportion of the incorrectly received CBs in the TB is high, a combination gain of HARQ retransmission and network coding-based transmission can be used to increase a probability of successful data reception and reduce excessive resource occupation, when the proportion of the incorrectly received CBs in the TB is moderate, the combination gain of HARQ retransmission can be used to further increase the probability of successful data reception, and when the proportion of the incorrectly received CBs in the TB is low, network coding-based transmission can be used to reduce excessive resource occupation in a HARQ retransmission process. This increases spectral efficiency in a data transmission process.

Implementation 1-17

In the implementation 1-17, all or a part of the second data is carried in a TB, and the TB includes one or more CBGs. That the reception status of the second data meets the third condition specifically includes: A ratio of a quantity of incorrectly received CBGs in the TB to a quantity of all CBGs in the TB is greater than (or greater than or equal to) a seventh threshold. That the reception status of the second data meets the fourth condition specifically includes: A ratio of a quantity of incorrectly received CBGs in the TB to a quantity of all CBGs in the TB falls within a second value interval. That the reception status of the second data meets the fifth condition specifically includes: A ratio of a quantity of incorrectly received CBGs in the TB to a quantity of all CBGs in the TB is less than (or less than or equal to) an eighth threshold. It may be understood that the seventh threshold and the eighth threshold may be one threshold, or may be two different thresholds. When the seventh threshold and the eighth threshold are two different thresholds, values of two endpoints of the second value interval may be the seventh threshold and the eighth threshold. For example, the seventh threshold may be 0.4, the eighth threshold may be 0.2, and the second value interval may be (0.2, 0.4); or the seventh threshold may be 0.5, the eighth threshold may be 0.3, and the second value interval may be (0.3, 0.5). According to this implementation, the receive end may send, to the transmit end based on a proportion of the incorrectly received CBGs in the TB, the first indication information indicating HARQ retransmission and/or network coding-based transmission, to indicate the transmit end to perform adaptive adjustment on HARQ retransmission and network coding-based transmission. In this way, when the proportion of the incorrectly received CBGs in the TB is high, a combination gain of HARQ retransmission and network coding-based transmission can be used to increase a probability of successful data reception and reduce excessive resource occupation, when the proportion of the incorrectly received CBGs in the TB is moderate, the combination gain of HARQ retransmission can be used to further increase the probability of successful data reception, and when the proportion of the incorrectly received CBGs in the TB is low, network coding-based transmission can be used to reduce excessive resource occupation in a HARQ retransmission process. This increases spectral efficiency in a data transmission process.

Implementation 1-18

In the implementation 1-18, all or a part of the second data is carried in a TB, and the TB includes one or more CBs. That the reception status of the second data meets the third condition specifically includes: A ratio of a quantity of correctly received CBs in the TB to a quantity of all CBs in the TB is less than (or less than or equal to) a thirty-seventh threshold. That the reception status of the second data meets the fourth condition specifically includes: A ratio of a quantity of correctly received CBs in the TB to a quantity of all CBs in the TB falls within a fourth value interval. That the reception status of the second data meets the fifth condition specifically includes: A ratio of a quantity of correctly received CBs in the TB to a quantity of all CBs in the TB is greater than (or greater than or equal to) a thirty-eighth threshold. It may be understood that the thirty-seventh threshold and the thirty-eighth threshold may be one threshold, or may be two different thresholds. When the thirty-seventh threshold and the thirty-eighth threshold are two different thresholds, values of two endpoints of the fourth value interval may be the thirty-seventh threshold and the thirty-eighth threshold. For example, the thirty-seventh threshold may be 0.6, the thirty-eighth threshold may be 0.8, and the fourth value interval may be (0.6, 0.8); or the thirty-seventh threshold may be 0.5, the thirty-eighth threshold may be 0.7, and the fourth value interval may be (0.5, 0.7). According to this implementation, the receive end may send, to the transmit end based on a proportion of the correctly received CBs in the TB, the first indication information indicating HARQ retransmission and/or network coding-based transmission, to indicate the transmit end to perform adaptive adjustment on HARQ retransmission and network coding-based transmission. In this way, when the proportion of the correctly received CBs in the TB is low, a combination gain of HARQ retransmission and network coding-based transmission can be used to increase a probability of successful data reception and reduce excessive resource occupation, when the proportion of the correctly received CBs in the TB is moderate, the combination gain of HARQ retransmission can be used to further increase the probability of successful data reception, and when the proportion of the correctly received CBs in the TB is high, network coding-based transmission can be used to reduce excessive resource occupation in a HARQ retransmission process. This increases spectral efficiency in a data transmission process.

Implementation 1-19

In the implementation 1-19, all or a part of the second data is carried in a TB, and the TB includes one or more CBGs. That the reception status of the second data meets the third condition specifically includes: A ratio of a quantity of correctly received CBGs in the TB to a quantity of all CBGs in the TB is less than (or less than or equal to) a thirty-ninth threshold. That the reception status of the second data meets the fourth condition specifically includes: A ratio of a quantity of correctly received CBGs in the TB to a quantity of all CBGs in the TB falls within a fifth value interval. That the reception status of the second data meets the fifth condition specifically includes: A ratio of a quantity of correctly received CBGs in the TB to a quantity of all CBGs in the TB is greater than (or greater than or equal to) a fortieth threshold. It may be understood that the thirty-ninth threshold and the fortieth threshold may be one threshold, or may be two different thresholds. When the thirty-ninth threshold and the fortieth threshold are two different thresholds, values of two endpoints of the fifth value interval may be the thirty-ninth threshold and the fortieth threshold. For example, the thirty-ninth threshold may be 0.6, the fortieth threshold may be 0.8, and the fifth value interval may be (0.6, 0.8); or the thirty-ninth threshold may be 0.5, the fortieth threshold may be 0.7, and the fifth value interval may be (0.5, 0.7). According to this implementation, the receive end may send, to the transmit end based on a proportion of the correctly received CBGs in the TB, the first indication information indicating HARQ retransmission and/or network coding-based transmission, to indicate the transmit end to perform adaptive adjustment on HARQ retransmission and network coding-based transmission. In this way, when the proportion of the correctly received CBGs in the TB is low, a combination gain of HARQ retransmission and network coding-based transmission can be used to increase a probability of successful data reception and reduce excessive resource occupation, when the proportion of the correctly received CBGs in the TB is moderate, the combination gain of HARQ retransmission can be used to further increase the probability of successful data reception, and when the proportion of the correctly received CBGs in the TB is high, network coding-based transmission can be used to reduce excessive resource occupation in a HARQ retransmission process. This increases spectral efficiency in a data transmission process.

Implementation 1-20

In the implementation 1-20, all or a part of the second data is carried in a TB, and the TB includes one or more CBs. That the reception status of the second data meets the third condition specifically includes: A quantity of incorrectly received CBs in the TB is greater than (or greater than or equal to) a forty-first threshold. That the reception status of the second data meets the fourth condition specifically includes: A quantity of incorrectly received CBs in the TB falls within a sixth value interval. That the reception status of the second data meets the fifth condition specifically includes: A quantity of incorrectly received CBs in the TB is less than (or less than or equal to) a forty-second threshold. It may be understood that the forty-first threshold and the forty-second threshold may be one threshold, or may be two different thresholds. When the forty-first threshold and the forty-second threshold are two different thresholds, values of two endpoints of the sixth value interval may be the forty-first threshold and the forty-second threshold. For example, the forty-first threshold may be 5, the forty-second threshold may be 2, and the sixth value interval may be (2, 5); or the forty-first threshold may be 10, the forty-second threshold may be 4, and the sixth value interval may be (4, 10). According to this implementation, the receive end may send, to the transmit end based on the quantity of incorrectly received CBs in the TB, the first indication information indicating HARQ retransmission and/or network coding-based transmission, to indicate the transmit end to perform adaptive adjustment on HARQ retransmission and network coding-based transmission. In this way, when the quantity of incorrectly received CBs in the TB is large, a combination gain of HARQ retransmission and network coding-based transmission can be used to increase a probability of successful data reception and reduce excessive resource occupation, when the quantity of incorrectly received CBs in the TB is moderate, the combination gain of HARQ retransmission can be used to further increase the probability of successful data reception, and when the quantity of incorrectly received CBs in the TB is small, network coding-based transmission can be used to reduce excessive resource occupation in a HARQ retransmission process. This increases spectral efficiency in a data transmission process.

Implementation 1-21

In the implementation 1-21, all or a part of the second data is carried in a TB, and the TB includes one or more CBGs. That the reception status of the second data meets the third condition specifically includes: A quantity of incorrectly received CBGs in the TB is greater than (or greater than or equal to) a forty-third threshold. That the reception status of the second data meets the fourth condition specifically includes: A quantity of incorrectly received CBGs in the TB falls within a seventh value interval. That the reception status of the second data meets the fifth condition specifically includes: A quantity of incorrectly received CBGs in the TB is less than (or less than or equal to) a forty-fourth threshold. It may be understood that the forty-third threshold and the forty-fourth threshold may be one threshold, or may be two different thresholds. When the forty-third threshold and the forty-fourth threshold are two different thresholds, values of two endpoints of the seventh value interval may be the forty-third threshold and the forty-fourth threshold. For example, the forty-third threshold may be 5, the forty-fourth threshold may be 2, and the seventh value interval may be (2, 5); or the forty-third threshold may be 10, the forty-fourth threshold may be 4, and the seventh value interval may be (4, 10). According to this implementation, the receive end may send, to the transmit end based on the quantity of incorrectly received CBGs in the TB, the first indication information indicating HARQ retransmission and/or network coding-based transmission, to indicate the transmit end to perform adaptive adjustment on HARQ retransmission and network coding-based transmission. In this way, when the quantity of incorrectly received CBGs in the TB is large, a combination gain of HARQ retransmission and network coding-based transmission can be used to increase a probability of successful data reception and reduce excessive resource occupation, when the quantity of incorrectly received CBGs in the TB is moderate, the combination gain of HARQ retransmission can be used to further increase the probability of successful data reception, and when the quantity of incorrectly received CBGs in the TB is small, network coding-based transmission can be used to reduce excessive resource occupation in a HARQ retransmission process. This increases spectral efficiency in a data transmission process.

Implementation 1-22

In the implementation 1-22, all or a part of the second data is carried in a TB, and the TB includes one or more CBs. That the reception status of the second data meets the third condition specifically includes: A quantity of correctly received CBs in the TB is less than (or less than or equal to) a forty-fifth threshold. That the reception status of the second data meets the fourth condition specifically includes: A quantity of correctly received CBs in the TB falls within an eighth value interval. That the reception status of the second data meets the fifth condition specifically includes: A quantity of correctly received CBs in the TB is greater than (or greater than or equal to) a forty-sixth threshold. It may be understood that the forty-fifth threshold and the forty-sixth threshold may be one threshold, or may be two different thresholds. When the forty-fifth threshold and the forty-sixth threshold are two different thresholds, values of two endpoints of the eighth value interval may be the forty-fifth threshold and the forty-sixth threshold. For example, the forty-fifth threshold may be a smaller value between a value 2 and the quantity of all CBs in the TB, the forty-sixth threshold may be a smaller value between a value 5 and the quantity of all CBs in the TB, and the eighth value interval may be (2, 5); or the forty-fifth threshold may be a smaller value between a value 4 and the quantity of all CBs in the TB, the forty-sixth threshold may be a smaller value between a value 10 and the quantity of all CBs in the TB, and the eighth value interval may be (4, 10). According to this implementation, the receive end may send, to the transmit end based on the quantity of correctly received CBs in the TB, the first indication information indicating HARQ retransmission and/or network coding-based transmission, to indicate the transmit end to perform adaptive adjustment on HARQ retransmission and network coding-based transmission. In this way, when the quantity of correctly received CBs in the TB is small, a combination gain of HARQ retransmission and network coding-based transmission can be used to increase a probability of successful data reception and reduce excessive resource occupation, when the quantity of correctly received CBs in the TB is moderate, the combination gain of HARQ retransmission can be used to further increase the probability of successful data reception, and when the quantity of correctly received CBs in the TB is large, network coding-based transmission can be used to reduce excessive resource occupation in a HARQ retransmission process. This increases spectral efficiency in a data transmission process.

Implementation 1-23

In the implementation 1-23, all or a part of the second data is carried in a TB, and the TB includes one or more CBGs. That the reception status of the second data meets the third condition specifically includes: A quantity of correctly received CBGs in the TB is less than (or less than or equal to) a forty-seventh threshold. That the reception status of the second data meets the fourth condition specifically includes: A quantity of correctly received CBGs in the TB falls within a ninth value interval.

That the reception status of the second data meets the fifth condition specifically includes: A quantity of correctly received CBGs in the TB is greater than (or greater than or equal to) a forty-eighth threshold. It may be understood that the forty-seventh threshold and the forty-eighth threshold may be one threshold, or may be two different thresholds. When the forty-seventh threshold and the forty-eighth threshold are two different thresholds, values of two endpoints of the ninth value interval may be the forty-seventh threshold and the forty-eighth threshold. For example, the forty-seventh threshold may be a smaller value between a value 2 and the quantity of all CBGs in the TB, the forty-eighth threshold may be a smaller value between a value 5 and the quantity of all CBGs in the TB, and the ninth value interval may be (2, 5); or the forty-seventh threshold may be a smaller value between a value 4 and the quantity of all CBGs in the TB, the forty-eighth threshold may be a smaller value between a value 10 and the quantity of all CBGs in the TB, and the ninth value interval may be (4, 10). According to this implementation, the receive end may send, to the transmit end based on the quantity of correctly received CBGs in the TB, the first indication information indicating HARQ retransmission and/or network coding-based transmission, to indicate the transmit end to perform adaptive adjustment on HARQ retransmission and network coding-based transmission. In this way, when the quantity of correctly received CBGs in the TB is small, a combination gain of HARQ retransmission and network coding-based transmission can be used to increase a probability of successful data reception and reduce excessive resource occupation, when the quantity of correctly received CBGs in the TB is moderate, the combination gain of HARQ retransmission can be used to further increase the probability of successful data reception, and when the quantity of correctly received CBGs in the TB is large, network coding-based transmission can be used to reduce excessive resource occupation in a HARQ retransmission process. This increases spectral efficiency in a data transmission process.

Implementation 1-24

In the implementation 1-24, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the third condition specifically includes: A ratio of a quantity of incorrectly received coded data units in the transmission opportunity to a quantity of all coded data units in the transmission opportunity is greater than (or greater than or equal to) a forty-ninth threshold. That the reception status of the second data meets the fourth condition specifically includes: A ratio of a quantity of incorrectly received coded data units in the transmission opportunity to a quantity of all coded data units in the transmission opportunity falls within a tenth value interval. That the reception status of the second data meets the fifth condition specifically includes: A ratio of a quantity of incorrectly received coded data units in the transmission opportunity to a quantity of all coded data units in the transmission opportunity is less than (or less than or equal to) a fiftieth threshold. It may be understood that the forty-ninth threshold and the fiftieth threshold may be one threshold, or may be two different thresholds. When the forty -ninth threshold and the fiftieth threshold are two different thresholds, values of two endpoints of the tenth value interval may be the forty-ninth threshold and the fiftieth threshold. For example, the forty-ninth threshold may be 0.4, the fiftieth threshold may be 0.2, and the tenth value interval may be (0.2, 0.4); or the forty-ninth threshold may be 0.5, the fiftieth threshold may be 0.3, and the tenth value interval may be (0.3, 0.5). According to this implementation, the receive end may send, to the transmit end based on a proportion of the incorrectly received coded data units in the transmission opportunity, the first indication information indicating HARQ retransmission and/or network coding-based transmission, to indicate the transmit end to perform adaptive adjustment on HARQ retransmission and network coding-based transmission. In this way, when the proportion of the incorrectly received coded data units in the transmission opportunity is high, a combination gain of HARQ retransmission and network coding-based transmission can be used to increase a probability of successful data reception and reduce excessive resource occupation, when the proportion of the incorrectly received coded data units in the transmission opportunity is moderate, the combination gain of HARQ retransmission can be used to further increase the probability of successful data reception, and when the proportion of the incorrectly received coded data units in the transmission opportunity is low, network coding-based transmission can be used to reduce excessive resource occupation in a HARQ retransmission process. This increases spectral efficiency in a data transmission process.

Implementation 1-25

In the implementation 1-25, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the third condition specifically includes: A ratio of a quantity of correctly received coded data units in the transmission opportunity to a quantity of all coded data units in the transmission opportunity is less than (or less than or equal to) a fifty-first threshold. That the reception status of the second data meets the fourth condition specifically includes: A ratio of a quantity of correctly received coded data units in the transmission opportunity to a quantity of all coded data units in the transmission opportunity falls within an eleventh value interval. That the reception status of the second data meets the fifth condition specifically includes: A ratio of a quantity of correctly received coded data units in the transmission opportunity to a quantity of all coded data units in the transmission opportunity is greater than (or greater than or equal to) a fifty-second threshold. It may be understood that the fifty-first threshold and the fifty-second threshold may be one threshold, or may be two different thresholds. When the fifty-first threshold and the fifty-second threshold are two different thresholds, values of two endpoints of the eleventh value interval may be the fifty-first threshold and the fifty-second threshold. For example, the fifty-first threshold may be 0.6, the fifty-second threshold may be 0.8, and the eleventh value interval may be (0.6, 0.8); or the fifty-first threshold may be 0.5, the fifty-second threshold may be 0.9, and the eleventh value interval may be (0.5, 0.9). According to this implementation, the receive end may send, to the transmit end based on a proportion of the correctly received coded data units in the transmission opportunity, the first indication information indicating HARQ retransmission and/or network coding-based transmission, to indicate the transmit end to perform adaptive adjustment on HARQ retransmission and network coding-based transmission. In this way, when the proportion of the correctly received coded data units in the transmission opportunity is low, a combination gain of HARQ retransmission and network coding-based transmission can be used to increase a probability of successful data reception and reduce excessive resource occupation, when the proportion of the correctly received coded data units in the transmission opportunity is moderate, the combination gain of HARQ retransmission can be used to further increase the probability of successful data reception, and when the proportion of the correctly received coded data units in the transmission opportunity is high, network coding-based transmission can be used to reduce excessive resource occupation in a HARQ retransmission process. This increases spectral efficiency in a data transmission process.

Implementation 1-26

In the implementation 1-26, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the third condition specifically includes: A quantity of incorrectly received coded data units in the transmission opportunity is greater than (or greater than or equal to) a fifty-third threshold. That the reception status of the second data meets the fourth condition specifically includes: A quantity of incorrectly received coded data units in the transmission opportunity falls within a twelfth value interval. That the reception status of the second data meets the fifth condition specifically includes: A quantity of incorrectly received coded data units in the transmission opportunity is less than (or less than or equal to) a fifty-fourth threshold. It may be understood that the fifty-third threshold and the fifty-fourth threshold may be one threshold, or may be two different thresholds. When the fifty-third threshold and the fifty-fourth threshold are two different thresholds, values of two endpoints of the twelfth value interval may be the fifty-third threshold and the fifty-fourth threshold. For example, the fifty-third threshold may be 5, the fifty-fourth threshold may be 2, and the twelfth value interval may be (2, 5); or the fifty-third threshold may be 10, the fifty-fourth threshold may be 4, and the twelfth value interval may be (4, 10). According to this implementation, the receive end may send, to the transmit end based on the quantity of incorrectly received coded data units in the transmission opportunity, the first indication information indicating HARQ retransmission and/or network coding-based transmission, to indicate the transmit end to perform adaptive adjustment on HARQ retransmission and network coding-based transmission. In this way, when the quantity of incorrectly received coded data units in the transmission opportunity is large, a combination gain of HARQ retransmission and network coding-based transmission can be used to increase a probability of successful data reception and reduce excessive resource occupation, when the quantity of incorrectly received coded data units in the transmission opportunity is moderate, the combination gain of HARQ retransmission can be used to further increase the probability of successful data reception, and when the quantity of incorrectly received coded data units in the transmission opportunity is small, network coding-based transmission can be used to reduce excessive resource occupation in a HARQ retransmission process. This increases spectral efficiency in a data transmission process.

Implementation 1-27

In the implementation 1-27, all or a part of the second data is transmitted in a transmission opportunity (for example, a scheduling occasion, a transmission occasion, or a transmission time interval), and one or more coded data units corresponding to the second data are carried in the transmission opportunity. That the reception status of the second data meets the third condition specifically includes: A quantity of correctly received coded data units in the transmission opportunity is less than (or less than or equal to) a fifty-fifth threshold. That the reception status of the second data meets the fourth condition specifically includes: A quantity of correctly received coded data units in the transmission opportunity falls within a thirteenth value interval. That the reception status of the second data meets the fifth condition specifically includes: A quantity of correctly received coded data units in the transmission opportunity is greater than (or greater than or equal to) a fifty-sixth threshold. It may be understood that the fifty-fifth threshold and the fifty-sixth threshold may be one threshold, or may be two different thresholds. When the fifty-fifth threshold and the fifty-sixth threshold are two different thresholds, values of two endpoints of the thirteenth value interval may be the fifty-fifth threshold and the fifty-sixth threshold. For example, the fifty-fifth threshold may be a smaller value between a value 4 and a quantity of all coded data units in the transmission opportunity, the fifty-sixth threshold may be a smaller value between a value 10 and the quantity of all coded data units in the transmission opportunity, and the thirteenth value interval may be (4, 10); or the fifty-fifth threshold may be a smaller value between a value 2 and a quantity of all coded data units in the transmission opportunity, the fifty-sixth threshold may be a smaller value between a value 5 and the quantity of all coded data units in the transmission opportunity, and the thirteenth value interval may be (2, 5). According to this implementation, the receive end may send, to the transmit end based on the quantity of correctly received coded data units in the transmission opportunity, the first indication information indicating HARQ retransmission and/or network coding-based transmission, to indicate the transmit end to perform adaptive adjustment on HARQ retransmission and network coding-based transmission. In this way, when the quantity of correctly received coded data units in the transmission opportunity is small, a combination gain of HARQ retransmission and network coding-based transmission can be used to increase a probability of successful data reception and reduce excessive resource occupation, when the quantity of correctly received coded data units in the transmission opportunity is moderate, the combination gain of HARQ retransmission can be used to further increase the probability of successful data reception, and when the quantity of correctly received coded data units in the transmission opportunity is large, network coding-based transmission can be used to reduce excessive resource occupation in a HARQ retransmission process. This increases spectral efficiency in a data transmission process.

Implementation 1-28

In the implementation 1-28, the second data corresponds to one or more coded data units, and the coded data unit corresponds to a data block including one or more original data units. That the reception status of the second data meets the third condition specifically includes: A ratio of a rank of a matrix including a coding vector corresponding to a correctly received coded data unit corresponding to the data block to a quantity of original data units included in the data block is less than (or less than or equal to) a fifty-seventh threshold. That the reception status of the second data meets the fourth condition specifically includes: A ratio of a rank of a matrix including a coding vector corresponding to a correctly received coded data unit corresponding to the data block to a quantity of original data units included in the data block falls within a fourteenth value interval. That the reception status of the second data meets the fifth condition specifically includes: A ratio of a rank of a matrix including a coding vector corresponding to a correctly received coded data unit corresponding to the data block to a quantity of original data units included in the data block is greater than (or greater than or equal to) a fifty-eighth threshold. It may be understood that the fifty-seventh threshold and the fifty-eighth threshold may be one threshold, or may be two different thresholds. When the fifty-seventh threshold and the fifty-eighth threshold are two different thresholds, values of two endpoints of the fourteenth value interval may be the fifty-seventh threshold and the fifty-eighth threshold. For example, the fifty-seventh threshold may be 0.6, the fifty-eighth threshold may be 0.8, and the fourteenth value interval may be (0.6, 0.8); or the fifty-seventh threshold may be 0.5, the fifty-eighth threshold may be 0.9, and the fourteenth value interval may be (0.5, 0.9). According to this implementation, the receive end may send, to the transmit end based on the ratio of the rank of the matrix including the coding vector corresponding to the correctly received coded data unit corresponding to the data block to the quantity of original data units included in the data block, the first indication information indicating HARQ retransmission and/or network coding-based transmission, to indicate the transmit end to perform adaptive adjustment on HARQ retransmission and network coding-based transmission. In this way, when the ratio is low, a combination gain of HARQ retransmission and network coding-based transmission can be used to increase a probability of successful data reception and reduce excessive resource occupation, when the ratio is moderate, the combination gain of HARQ retransmission can be used to further increase the probability of successful data reception, and when the ratio is high, network coding-based transmission can be used to reduce excessive resource occupation in a HARQ retransmission process. This increases spectral efficiency in a data transmission process.

Implementation 1-29

In the implementation 1-29, the second data corresponds to one or more coded data units, and the coded data unit corresponds to a data block including one or more original data units. That the reception status of the second data meets the third condition specifically includes: A difference between a rank of a matrix including a coding vector corresponding to a correctly received coded data unit corresponding to the data block and a quantity of original data units included in the data block is greater than (or greater than or equal to) a fifty-ninth threshold. That the reception status of the second data meets the fourth condition specifically includes: A difference between a rank of a matrix including a coding vector corresponding to a correctly received coded data unit corresponding to the data block and a quantity of original data units included in the data block falls within a fifteenth value interval. That the reception status of the second data meets the fifth condition specifically includes: A difference between a rank of a matrix including a coding vector corresponding to a correctly received coded data unit corresponding to the data block and a quantity of original data units included in the data block is less than (or less than or equal to) a sixtieth threshold. It may be understood that the fifty-ninth threshold and the sixtieth threshold may be one threshold, or may be two different thresholds. When the fifty-ninth threshold and the sixtieth threshold are two different thresholds, values of two endpoints of the fifteenth value interval may be the fifty-ninth threshold and the sixtieth threshold. For example, the fifty-ninth threshold may be 3, the sixtieth threshold may be 1, and the fifteenth value interval may be (1, 3); or the fifty-ninth threshold may be 5, the sixtieth threshold may be 2, and the fifteenth value interval may be (2, 5). According to this implementation, the receive end may send, to the transmit end based on the difference between the rank of the matrix including the coding vector corresponding to the correctly received coded data unit corresponding to the data block and the quantity of original data units included in the data block, the first indication information indicating HARQ retransmission and/or network coding-based transmission, to indicate the transmit end to perform adaptive adjustment on HARQ retransmission and network coding-based transmission. In this way, when the difference is large, a combination gain of HARQ retransmission and network coding-based transmission can be used to increase a probability of successful data reception and reduce excessive resource occupation, when the difference is moderate, the combination gain of HARQ retransmission can be used to further increase the probability of successful data reception, and when the difference is small, network coding-based transmission can be used to reduce excessive resource occupation in a HARQ retransmission process. This increases spectral efficiency in a data transmission process.

Implementation 1-30

In the implementation 1-30, that the reception status of the second data meets the third condition specifically includes: meeting one third condition or a combination of a plurality of third conditions described in the foregoing implementations 1-16 to 1-29, that the reception status of the second data meets the fourth condition specifically includes: meeting one fourth condition or a combination of a plurality of fourth conditions described in the foregoing implementations 1-16 to 1-29, and that the reception status of the second data meets the fifth condition specifically includes: meeting one fifth condition or a combination of a plurality of fifth conditions described in the foregoing implementations 1-16 to 1-29.

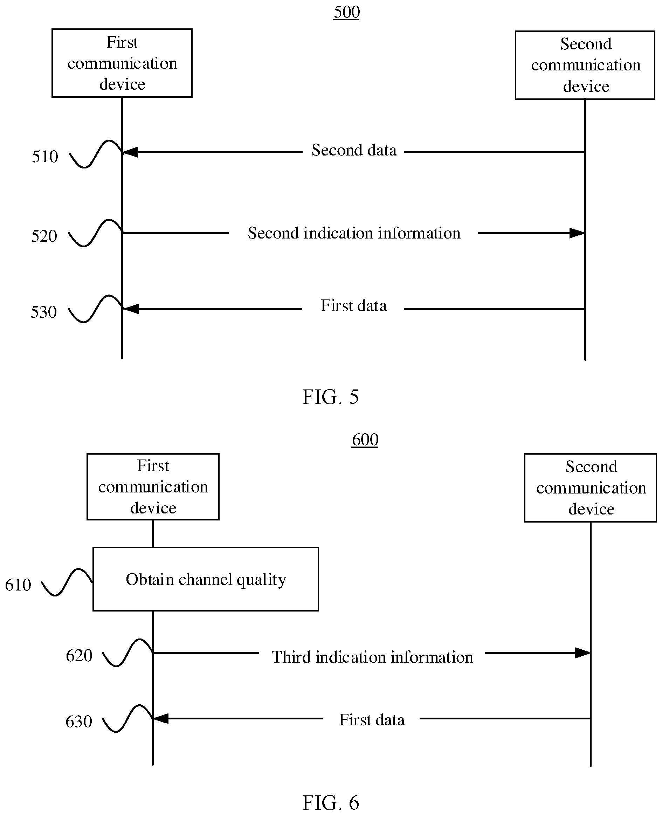

FIG. 5 is a schematic diagram of interaction of another communication method 500 according to an embodiment of this application. In FIG. 5, an example in which a first communication device and a second communication device are used as execution bodies of interaction in the schematic diagram is used to illustrate the communication method. For example, the first communication device is a network device, or is a chip, a chip system, or a processor in a network device; and the second communication device is a terminal, or is a chip, a chip system, or a processor in a terminal. For another example, the first communication device is a terminal, or is a chip, a chip system, or a processor in a terminal; and the second communication device is a network device, or is a chip, a chip system, or a processor in a network device. For another example, the first communication device is a terminal, or is a chip, a chip system, or a processor in a terminal; and the second communication device is another terminal, or is a chip, a chip system, or a processor in another terminal. The first communication device may be understood as a data receive end (which may be referred to as a receive end for short), and the second communication device may be understood as a data transmit end (which may be referred to as a transmit end for short). As shown in FIG. 5, the method 500 in this embodiment may include a part 510, a part 520, and a part 530.

Part 510: The second communication device sends second data to the first communication device. Correspondingly, the first communication device receives the second data from the second communication device.

Part 520: The first communication device sends, to the second communication device, second indication information used for transmitting first data. Correspondingly, the second communication device receives the second indication information from the first communication device. The second indication information indicates a reception status of the second data.

Part 530: The second communication device sends the first data to the first communication device based on content indicated by the second indication information. Correspondingly, the first communication device receives the first data from the second communication device. The second communication device may send, to the first communication device through a HARQ operation, the first data including HARQ retransmission data, or may send, to the first communication device through network coding, the first data including network-coded data. Optionally, the second communication device may alternatively send, to the first communication device through a HARQ operation and network coding, the first data including HARQ retransmission data and network-coded data. A manner in which the second communication device sends the first data to the first communication device depends on the reception status that is of the second data and that is indicated by the second indication information.

According to the foregoing method, the transmit end can perform adaptive adjustment on HARQ retransmission and network coding-based transmission based on a data reception status fed back by the receive end. In this way, when the data reception status is poor, a combination gain of HARQ retransmission can be used to increase a probability of successful data reception, and when the data reception status is good, network coding-based transmission can be used to reduce excessive resource occupation in a HARQ retransmission process. This increases spectral efficiency in a data transmission process.

In part 530 of the method 500, a manner in which the second communication device sends the first data to the first communication device depends on the reception status that is of the second data and that is indicated by the second indication information.

In a possible implementation of part 530, when the reception status of the second data meets a first condition, the second communication device sends, to the first communication device through a HARQ operation, the first data including HARQ retransmission data; or when the reception status of the second data meets a second condition, the second communication device sends, to the first communication device through network coding, the first data including network-coded data. There are a plurality of different implementations in which the reception status of the second data meets the first condition or the second condition. For details, refer to descriptions of the foregoing implementations 1-1 to 1-15. Details are not described herein again.

In another possible implementation of part 530, when the reception status of the second data meets a third condition, the second communication device sends, to the first communication device through a HARQ operation and network coding, the first data including HARQ retransmission data and network-coded data; when the reception status of the second data meets a fourth condition, the second communication device sends, to the first communication device through a HARQ operation, the first data including HARQ retransmission data; or when the reception status of the second data meets a fifth condition, the second communication device sends, to the first communication device through network coding, the first data including network-coded data. There are a plurality of different implementations in which the reception status of the second data meets the third condition, the fourth condition, or the fifth condition. For details, refer to descriptions of the foregoing implementations 1-16 to 1-30. Details are not described herein again.

FIG. 6 is a schematic diagram of interaction of another communication method 600 according to an embodiment of this application. In FIG. 6, an example in which a first communication device and a second communication device are used as execution bodies of interaction in the schematic diagram is used to illustrate the communication method. For example, the first communication device is a network device, or is a chip, a chip system, or a processor in a network device; and the second communication device is a terminal, or is a chip, a chip system, or a processor in a terminal. For another example, the first communication device is a terminal, or is a chip, a chip system, or a processor in a terminal; and the second communication device is a network device, or is a chip, a chip system, or a processor in a network device. For another example, the first communication device is a terminal, or is a chip, a chip system, or a processor in a terminal; and the second communication device is another terminal, or is a chip, a chip system, or a processor in another terminal. The first communication device may be understood as a data receive end (which may be referred to as a receive end for short), and the second communication device may be understood as a data transmit end (which may be referred to as a transmit end for short). As shown in FIG. 6, the method 600 in this embodiment may include a part 610, a part 620, and a part 630.

Part 610: The first communication device obtains channel quality. The channel quality may be channel quality between the first communication device and the second communication device. It may be understood that the first communication device may obtain the channel quality in a plurality of different manners. For example, the first communication device may obtain the channel quality by measuring a reference signal or another signal from the second communication device, or may obtain the channel quality by receiving channel quality indicator information from the second communication device or another communication device.

Optionally, before part 610, the method 600 may further include: The second communication device sends second data to the first communication device. Further, optionally, that the first communication device obtains the channel quality specifically includes: The first communication device obtains the channel quality by receiving the second data.

Part 620: The first communication device sends, to the second communication device, third indication information used for transmitting first data. Correspondingly, the second communication device receives the third indication information from the first communication device. The third indication information indicates the channel quality, the third indication information indicates HARQ retransmission or network coding-based transmission, or the third indication information indicates HARQ retransmission, network coding-based transmission, or HARQ retransmission and network coding-based transmission.

Part 630: The second communication device sends the first data to the first communication device based on content indicated by the third indication information. Correspondingly, the first communication device receives the first data from the second communication device. The second communication device may send, to the first communication device through a HARQ operation, the first data including HARQ retransmission data, or may send, to the first communication device through network coding, the first data including network-coded data. Optionally, the second communication device may alternatively send, to the first communication device through a HARQ operation and network coding, the first data including HARQ retransmission data and network-coded data. A manner in which the second communication device sends the first data to the first communication device depends on specific content indicated by the third indication information.

According to the foregoing method, the transmit end can perform adaptive adjustment on HARQ retransmission and network coding-based transmission based on channel quality. In this way, when the channel quality is poor, a combination gain of HARQ retransmission can be used to increase a probability of successful data reception, and when the channel quality is good, network coding-based transmission can be used to reduce excessive resource occupation in a HARQ retransmission process. This increases spectral efficiency in a data transmission process.

In the method 600, a manner in which the second communication device sends the first data to the first communication device depends on the specific content indicated by the third indication information.

In a possible implementation of the method 600, the third indication information indicates the channel quality. When the channel quality meets a sixth condition, the second communication device sends, to the first communication device through a HARQ operation, the first data including HARQ retransmission data. When the channel quality meets a seventh condition, the second communication device sends, to the first communication device through network coding, the first data including network-coded data. There are a plurality of different implementations in which the channel quality meets the sixth condition or the seventh condition. The following uses an implementation 2-1 as an example to describe that the channel quality meets the sixth condition or the seventh condition.

Implementation 2-1

In the implementation 2-1, the channel quality may be represented by a signal to interference plus noise ratio (signal to interference plus noise ratio, SINR), a channel quality indicator (channel quality indicator, CQI), reference signal received power (reference signal received power, RSRP), a received signal strength indicator (received signal strength indicator, RSSI), or reference signal received quality (reference signal received quality, RSRQ). That the channel quality meets the sixth condition specifically includes: The SINR, the CQI, the RSRP, the RSSI, or the RSRQ is less than (or less than or equal to) a ninth threshold. That the channel quality meets the seventh condition specifically includes: The SINR, the CQI, the RSRP, the RSSI, or the RSRQ is greater than (or greater than or equal to) a tenth threshold. It may be understood that the ninth threshold and the tenth threshold may be one threshold, or may be two different thresholds. For example, when the channel quality is represented by the SINR, a value of the ninth threshold may be 15 dB, and a value of the tenth threshold may be 15 dB; or a value of the ninth threshold may be 10 dB, and a value of the tenth threshold may be 11 dB. When the channel quality is represented by the CQI, a value of the ninth threshold may be 7, and a value of the tenth threshold may be 7; or a value of the ninth threshold may be 5, and a value of the tenth threshold may be 6. When the channel quality is represented by the RSRP, a value of the ninth threshold may be -105 dBm, and a value of the tenth threshold may be -105 dBm; or a value of the ninth threshold may be -115 dBm, and a value of the tenth threshold may be -114 dBm. When the channel quality is represented by the RSSI, a value of the ninth threshold may be -100 dBm, and a value of the tenth threshold may be -100 dBm; or a value of the ninth threshold may be -101 dBm, and a value of the tenth threshold may be -102 dBm. When the channel quality is represented by the RSRQ, a value of the ninth threshold may be -10 dB, and a value of the tenth threshold may be -10 dB; or a value of the ninth threshold may be -12 dB, and a value of the tenth threshold may be -11 dB.

According to this implementation, the transmit end can perform adaptive adjustment on HARQ retransmission and network coding-based transmission based on the channel quality fed back by the receive end. In this way, when the channel quality is poor, a combination gain of HARQ retransmission can be used to increase a probability of successful data reception, and when the channel quality is good, network coding-based transmission can be used to reduce excessive resource occupation in a HARQ retransmission process. This increases spectral efficiency in a data transmission process.

In another possible implementation of the method 600, the third indication information indicates the channel quality. When the channel quality meets an eighth condition, the second communication device sends, to the first communication device through a HARQ operation and network coding, the first data including HARQ retransmission data and network-coded data. When the channel quality meets a ninth condition, the second communication device sends, to the first communication device through a HARQ operation, the first data including HARQ retransmission data. When the channel quality meets a tenth condition, the second communication device sends, to the first communication device through network coding, the first data including network-coded data. There are a plurality of different implementations in which the channel quality meets the eighth condition, the ninth condition, or the tenth condition. The following uses an implementation 2-2 as an example to describe that the channel quality meets the eighth condition, the ninth condition, or the tenth condition.

Implementation 2-2

In the implementation 2-2, the channel quality may be represented by an SINR, a CQI, RSRP, an RSSI, or RSRQ. That the channel quality meets the eighth condition specifically includes: The SINR, the CQI, the RSRP, the RSSI, or the RSRQ is less than (or less than or equal to) an eleventh threshold. That the channel quality meets the ninth condition specifically includes: The SINR, the CQI, the RSRP, the RSSI, or the RSRQ falls within a third value interval. That the channel quality meets the tenth condition specifically includes: The SINR, the CQI, the RSRP, the RSSI, or the RSRQ is greater than (or greater than or equal to) a twelfth threshold. It may be understood that the eleventh threshold and the twelfth threshold may be one threshold, or may be two different thresholds. When the eleventh threshold and the twelfth threshold are two different thresholds, values of two endpoints of the third value interval may be the eleventh threshold and the twelfth threshold. For example, when the channel quality is represented by the SINR, a value of the eleventh threshold may be 11 dB, a value of the twelfth threshold may be 15 dB, and the third value interval may be (11 dB, 15 dB); or a value of the eleventh threshold may be 3 dB, a value of the twelfth threshold may be 10 dB, and the third value interval may be (3 dB, 10 dB). When the channel quality is represented by the CQI, a value of the eleventh threshold may be 4, a value of the twelfth threshold may be 7, and the third value interval may be (4, 7); or a value of the eleventh threshold may be 6, a value of the twelfth threshold may be 14, and the third value interval may be (6, 14). When the channel quality is represented by the RSRP, a value of the eleventh threshold may be -115 dBm, a value of the twelfth threshold may be -80 dBm, and the third value interval may be (-115 dBm, -80 dBm); or a value of the eleventh threshold may be -120 dBm, a value of the twelfth threshold may be -70 dBm, and the third value interval may be (-120 dBm, -70 dBm). When the channel quality is represented by the RSSI, a value of the eleventh threshold may be -100 dBm, a value of the twelfth threshold may be -80 dBm, and the third value interval may be (-100 dBm, -80 dBm); or a value of the eleventh threshold may be -90 dBm, a value of the twelfth threshold may be -70 dBm, and the third value interval may be (-90 dBm, -70 dBm). When the channel quality is represented by the RSRQ, a value of the eleventh threshold may be -15 dB, a value of the twelfth threshold may be -10 dB, and the third value interval may be (-15 dB, -10 dB); or a value of the eleventh threshold may be - 18 dB, a value of the twelfth threshold may be -12 dB, and the third value interval may be (-18 dB, -12 dB).

According to this implementation, the transmit end can perform adaptive adjustment on HARQ retransmission and network coding-based transmission based on the channel quality fed back by the receive end. In this way, when the channel quality is poor, a combination gain of HARQ retransmission and network coding-based transmission can be used to increase a probability of successful data reception and reduce excessive resource occupation, when the channel quality is moderate, the combination gain of HARQ retransmission can be used to increase the probability of successful data reception, and when the channel quality is good, network coding-based transmission can be used to reduce excessive resource occupation in a HARQ retransmission process. This increases spectral efficiency in a data transmission process.

In another possible implementation of the method 600, the third indication information indicates HARQ retransmission or network coding-based transmission. When the third indication information indicates HARQ retransmission, the second communication device sends, to the first communication device through a HARQ operation, the first data including HARQ retransmission data. When the third indication information indicates network coding-based transmission, the second communication device sends, to the first communication device through network coding, the first data including network-coded data. In this implementation, the first communication device determines, based on the obtained channel quality, whether the specific content indicated by the third indication information is HARQ retransmission or network coding-based transmission. When the channel quality meets a sixth condition, the first communication device sends, to the second communication device, the third indication information indicating HARQ retransmission. When the channel quality meets a seventh condition, the first communication device sends, to the second communication device, the third indication information indicating network coding-based transmission. There are a plurality of different implementations in which the channel quality meets the sixth condition or the seventh condition. For details, refer to description of the foregoing implementation 2-1. Details are not described herein again.

According to this implementation, the receive end may indicate, based on the channel quality, the transmit end to perform adaptive adjustment on HARQ retransmission and network coding-based transmission. In this way, when the channel quality is poor, a combination gain of HARQ retransmission can be used to increase a probability of successful data reception, and when the channel quality is good, network coding-based transmission can be used to reduce excessive resource occupation in a HARQ retransmission process. This increases spectral efficiency in a data transmission process.

In another possible implementation of the method 600, the third indication information indicates HARQ retransmission, network coding-based transmission, or HARQ retransmission and network coding-based transmission. When the third indication information indicates HARQ retransmission, the second communication device sends, to the first communication device through a HARQ operation, the first data including HARQ retransmission data. When the third indication information indicates network coding-based transmission, the second communication device sends, to the first communication device through network coding, the first data including network-coded data. When the third indication information indicates HARQ retransmission and network coding-based transmission, the second communication device sends, to the first communication device through a HARQ operation and network coding, the first data including HARQ retransmission data and network-coded data. In this implementation, the first communication device determines, based on the obtained channel quality, whether the specific content indicated by the third indication information is HARQ retransmission, network coding-based transmission, or HARQ retransmission and network coding-based transmission. When the channel quality meets an eighth condition, the first communication device sends, to the second communication device, the third indication information indicating HARQ retransmission and network coding-based transmission. When the channel quality meets a ninth condition, the first communication device sends, to the second communication device, the third indication information indicating HARQ retransmission. When the channel quality meets a tenth condition, the first communication device sends, to the second communication device, the third indication information indicating network coding-based transmission. There are a plurality of different implementations in which the channel quality meets the eighth condition, the ninth condition, or the tenth condition. For details, refer to description of the foregoing implementation 2-2. Details are not described herein again.

According to this implementation, the receive end may indicate, based on the channel quality, the transmit end to perform adaptive adjustment on HARQ retransmission and network coding-based transmission. In this way, when the channel quality is poor, a combination gain of HARQ retransmission and network coding-based transmission can be used to increase a probability of successful data reception and reduce excessive resource occupation, when the channel quality is moderate, the combination gain of HARQ retransmission can be used to increase the probability of successful data reception, and when the channel quality is good, network coding-based transmission can be used to reduce excessive resource occupation in a HARQ retransmission process. This increases spectral efficiency in a data transmission process.

It may be understood that the first threshold, the second threshold, ..., and the sixtieth threshold, and the first value interval, the second value interval, ..., and the fifteenth value interval in the foregoing implementations of this application may be predefined, or may be indicated or configured by the network device.

Optionally, in the method 400, the method 500, and the method 600, the network-coded data included in the first data includes network-coded retransmission data and/or network-coded new transmission data. To be specific, when the first data in the method 400, the method 500, or the method 600 includes network-coded data, the first data may include network-coded retransmission data, network-coded new transmission data, or network-coded retransmission data and network-coded new transmission data. This optional implementation may be understood as follows: When the transmit end sends, to the receive end through network coding, the first data including network-coded data, or when the transmit end sends, to the receive end through network coding and a HARQ operation, the first data including network-coded data and HARQ retransmission data, network coding-based retransmission and/or network coding-based new transmission may be performed. According to this implementation, transmission of the network-coded retransmission data can be used to increase a probability of successful decoding of an original data unit based on a data transmission requirement, and transmission of the network-coded new transmission data can be used to increase spectral efficiency based on the data transmission requirement.

When network coding-based retransmission is performed, for a data block on which network coding has been performed, the transmit end obtains a quantity of coded data units to be retransmitted for the data block. For example, the transmit end may obtain, based on a rank of a matrix including a coding vector corresponding to a correctly received coded data unit corresponding to the data block and a quantity of original data units included in the data block, the quantity of coded data units to be retransmitted for the data block. The transmit end obtains, based on the quantity of coded data units to be retransmitted for the data block, a corresponding quantity of coded data units to be retransmitted for the data block. These to-be-retransmitted coded data units may be understood as the foregoing network-coded retransmission data. For example, the transmit end may obtain, from a buffer, a coded data unit that corresponds to the data block and that has not been sent, and use the coded data unit as a coded data unit to be retransmitted for the data block. For another example, the transmit end may alternatively re-encode an original data unit in the data block to generate a coded data unit to be retransmitted for the data block.

When network coding-based retransmission is performed, the transmit end may further perform corresponding adjustment on data sending based on physical resources that can carry network-coded retransmission data. For example, when a quantity of physical resources that can carry network-coded retransmission data is greater than a quantity of physical resources required for to-be-transmitted network-coded retransmission data, the transmit end may also map, on the physical resources, data in a data block other than the data block for transmission. For another example, when a quantity of physical resources that can carry network-coded retransmission data is less than a quantity of physical resources required for to-be-transmitted network-coded retransmission data, a modulation and coding scheme (modulation and coding scheme, MCS) during data sending may be increased and/or a TB size may be increased, so that the quantity of physical resources that can carry network-coded retransmission data is greater than or equal to the quantity of physical resources required for to-be-transmitted network-coded retransmission data. For another example, when a quantity of physical resources that can carry network-coded retransmission data is less than a quantity of physical resources required for to-be-transmitted network-coded retransmission data, a part of the to-be-transmitted network-coded retransmission data may be sent, and the remaining to-be-transmitted network-coded retransmission data may be sent in a subsequent transmission opportunity.

When network coding-based new transmission is performed, the transmit end uses a coded data unit that has not been sent as a coded data unit to be newly transmitted, and/or the transmit end performs network coding on an original data unit in a data block that has not been coded, to obtain a coded data unit to be newly transmitted. These coded data units to be newly transmitted may be understood as the foregoing network-coded new transmission data.

When network coding-based retransmission and network coding-based new transmission are performed, the transmit end performs the foregoing network coding-based retransmission operation on a data block on which network coding has been performed (which may also be referred to as a to-be-retransmitted data block for short), and also performs the foregoing network coding-based new transmission operation based on the foregoing description of network coding-based new transmission. For example, the transmit end may separately encode an original data unit in the to-be-retransmitted data block and an original data unit in the data block to be newly transmitted, to obtain a coded data unit. For another example, the transmit end may alternatively perform joint coding (for example, convolutional network coding) on an original data unit in the to-be-retransmitted data block and an original data unit in the data block to be newly transmitted, to obtain a coded data unit.

Optionally, in the method 400, the second communication device may determine, in a plurality of different manners, that the network-coded data includes network-coded retransmission data and/or network-coded new transmission data.

In the method 400, in a possible implementation of determining that the network-coded data includes network-coded retransmission data and/or network-coded new transmission data, the first communication device sends fifth indication information to the second communication device. The fifth indication information indicates that the network-coded data includes network-coded retransmission data or network-coded new transmission data, or the fifth indication information indicates that the network-coded data includes network-coded retransmission data, network-coded new transmission data, or network-coded retransmission data and network-coded new transmission data. The second communication device receives the fifth indication information, and determines, based on the fifth indication information, that the network-coded data includes network-coded retransmission data and/or network-coded new transmission data. The fifth indication information may be another piece of information different from the first indication information, or may be the first indication information. According to this implementation, network coding-based retransmission can be used, based on a data transmission requirement, to increase a probability that the receive end successfully decodes an original data unit, and network coding-based new transmission can be used to increase spectral efficiency based on the data transmission requirement. For example, in the method 400, in a possible implementation in which the fifth indication information is the first indication information, the first indication information may indicate HARQ retransmission, network coding-based retransmission, or network coding-based new transmission.

For another example, in the method 400, in another possible implementation in which the fifth indication information is the first indication information, the first indication information may indicate HARQ retransmission, network coding-based retransmission, network coding-based new transmission, or HARQ retransmission and network coding-based retransmission.

For another example, in the method 400, in another possible implementation in which the fifth indication information is the first indication information, the first indication information may indicate HARQ retransmission, network coding-based retransmission, network coding-based new transmission, or HARQ retransmission and network coding-based new transmission.

For another example, in the method 400, in another possible implementation in which the fifth indication information is the first indication information, the first indication information may indicate HARQ retransmission, network coding-based retransmission, network coding-based new transmission, HARQ retransmission and network coding-based retransmission, HARQ retransmission and network coding-based new transmission, or network coding-based retransmission and network coding-based new transmission.

In the method 400, in another possible implementation of determining that the network-coded data includes network-coded retransmission data and/or network-coded new transmission data, the second communication device may determine, based on information related to a data block, that the network-coded data includes network-coded retransmission data and/or network-coded new transmission data. The information related to the data block includes one or more of the following: a rank of a matrix including a coding vector corresponding to a correctly received coded data unit corresponding to the data block, a quantity of original data units included in the data block, a quantity of correctly received coded data units corresponding to the data block, or a quantity of coded data units that need to be further received to decode the data block. The information related to the data block may be carried by the first indication information, or may be carried by another piece of information different from the first indication information. According to this implementation, network coding-based retransmission can be used, based on a data transmission requirement, to increase a probability that the receive end successfully decodes an original data unit, and network coding-based new transmission can be used to increase spectral efficiency based on the data transmission requirement.

Optionally, that the second communication device determines, based on the information related to the data block, that the network-coded data includes network-coded retransmission data and/or network-coded new transmission data specifically includes the following content.

When the rank of the matrix including the coding vector corresponding to the correctly received coded data unit corresponding to the data block is less than the quantity of original data units included in the data block, the second communication device determines that the network-coded data includes network-coded retransmission data, or includes network-coded retransmission data and network-coded new transmission data; or when the rank of the matrix including the coding vector corresponding to the correctly received coded data unit corresponding to the data block is greater than or equal to the quantity of original data units included in the data block, the second communication device determines that the network-coded data includes network-coded new transmission data.

Alternatively, when the quantity of correctly received coded data units corresponding to the data block is less than the quantity of original data units included in the data block, the second communication device determines that the network-coded data includes network-coded retransmission data, or includes network-coded retransmission data and network-coded new transmission data; or when the quantity of correctly received coded data units corresponding to the data block is greater than or equal to the quantity of original data units included in the data block, the second communication device determines that the network-coded data includes network-coded new transmission data.

Alternatively, when the quantity of coded data units that need to be further received to decode the data block is greater than 0, the second communication device determines that the network-coded data includes network-coded retransmission data, or includes network-coded retransmission data and network-coded new transmission data; or when the quantity of coded data units that need to be further received to decode the data block is less than or equal to 0, the second communication device determines that the network-coded data includes network-coded new transmission data.

Optionally, in the method 500, the second communication device may determine, in a plurality of different manners, that the network-coded data includes network-coded retransmission data and/or network-coded new transmission data.

In the method 500, in a possible implementation of determining that the network-coded data includes network-coded retransmission data and/or network-coded new transmission data, the second communication device may determine, based on the reception status that is of the second data and that is indicated by the second indication information, that the network-coded data includes network-coded retransmission data and/or network-coded new transmission data. For descriptions of the reception status of the second data, refer to descriptions of the implementations 1-1 to 1-28. Further or alternatively, the reception status of the second data may include one or more of the following: a rank of a matrix including a coding vector corresponding to a correctly received coded data unit corresponding to a data block, a quantity of original data units included in the data block, a quantity of correctly received coded data units corresponding to the data block, or a quantity of coded data units that need to be further received to decode the data block. According to this implementation, network coding-based retransmission can be used, based on a data transmission requirement, to increase a probability that the receive end successfully decodes an original data unit, and network coding-based new transmission can be used to increase spectral efficiency based on the data transmission requirement.

For an optional specific method for determining, by the second communication device based on the reception status of the second data, that the network-coded data includes network-coded retransmission data and/or network-coded new transmission data, refer to the description of determining, by the second communication device based on the information related to the data block, that the network-coded data includes network-coded retransmission data and/or network-coded new transmission data in the method 400. Details are not described herein again.

Optionally, in the method 600, the second communication device may determine, in a plurality of different manners, that the network-coded data includes network-coded retransmission data and/or network-coded new transmission data.

In the method 600, in a possible implementation of determining that the network-coded data includes network-coded retransmission data and/or network-coded new transmission data, the second communication device may determine, based on information related to a data block, that the network-coded data includes network-coded retransmission data and/or network-coded new transmission data. The information related to the data block includes one or more of the following: a rank of a matrix including a coding vector corresponding to a correctly received coded data unit corresponding to the data block, a quantity of original data units included in the data block, a quantity of correctly received coded data units corresponding to the data block, or a quantity of coded data units that need to be further received to decode the data block. The information related to the data block may be carried by the third indication information, or may be carried by another piece of information different from the third indication information. According to this implementation, network coding-based retransmission can be used, based on a data transmission requirement, to increase a probability that the receive end successfully decodes an original data unit, and network coding-based new transmission can be used to increase spectral efficiency based on the data transmission requirement.

For an optional specific method for determining, by the second communication device based on the information related to the data block, that the network-coded data includes network-coded retransmission data and/or network-coded new transmission data, refer to the description of determining, by the second communication device based on the information related to the data block, that the network-coded data includes network-coded retransmission data and/or network-coded new transmission data in the method 400. Details are not described herein again.

The following describes the communication method provided in this application with reference to several specific examples.

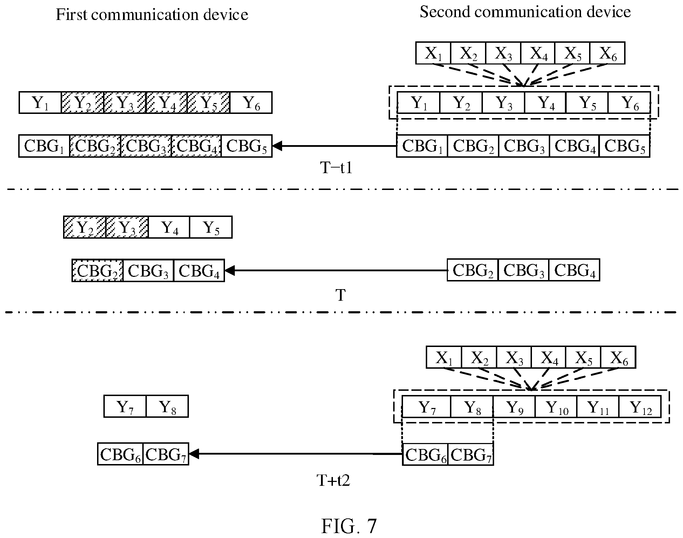

A possible implementation process in the method 400 is described by using a transmission process shown in FIG. 7 as an example.

In FIG. 7, the second communication device encodes six original data units $X_1, X_2, \cdots$, and $X_6$ to obtain six coded data units $Y_1, Y_2, \cdots$, *and* $Y_6$, and transmits the six coded data units by using five CBGs (a $CBG_1$, a $CBG_2$, a $CBG_3$, a $CBG_4$, and a $CBG_5$). The six original data units $X_1, X_2, \cdots$, *and* $X_6$ may be included in one data block, or may be included in a plurality of data blocks. In this example, that $X_1, X_2, \cdots$, and $X_6$ are included in one data block is used as an example.

At a moment T-t1, the second communication device sends, to the first communication device, the five CBGs carrying the coded data units $Y_1, Y_2, \cdots$, *and* $Y_6$. The five CBGs are included in a TB 1. When receiving the five CBGs, the first communication device finds that two CBGs (the $CBG_1$ and the $CBG_5$) are correctly received, and three CBGs (the $CBG_2$, the $CBG_3$, and the $CBG_4$) are incorrectly received (the part that is incorrectly received is shown in shadow in the figure). Because the $CBG_2$, the $CBG_3$, and the $CBG_4$ carry data of $Y_2$, $Y_3$, $Y_4$, *and* $Y_5$, the four coded data units $Y_2$, $Y_3$, $Y_4$, and $Y_5$ are incorrectly received at the first communication device. For example, a third threshold is 0.4. Because a ratio of a quantity of incorrectly received CBGs (that is, 3) in the TB 1 to a quantity of all CBGs (that is, 5) in the TB 1 is 3/5 = 0.6, and is greater than the third threshold (that is, 0.4), the first communication device sends, to the second communication device between the moment T-tl and a moment T, first indication information indicating HARQ retransmission, to indicate the first communication device to perform HARQ retransmission.

The second communication device performs HARQ retransmission on the $CBG_2$, the $CBG_3$, and the $CBG_4$ at the moment T based on content indicated by the first indication information. The three CBGs are included in a TB 2. For example, the second communication device may obtain the previously stored $CBG_2$, $CBG_3$, and $CBG_4$ from a buffer, and send the three CBGs to the first communication device. When receiving the three CBGs, the first communication device finds that two CBGs (the $CBG_3$ and the $CBG_4$) are correctly received, and one CBG (the $CBG_2$) is incorrectly received. Because the $CBG_2$ carries data of $Y_2$ and $Y_3$, the two coded data units $Y_2$ and $Y_3$ are still incorrectly received at the first communication device. For example, a fourth threshold is 0.4. Because a ratio of a quantity of incorrectly received CBGs (that is, 1) in the TB 2 to a quantity of all CBGs (that is, 3) in the TB 2 is $1/3 \approx 0.33$, and is less than the fourth threshold (that is, 0.4), the first communication device sends, to the second communication device between the moment T and a moment T+t2, first indication information indicating network coding-based transmission, to indicate the first communication device to perform network coding-based transmission. Further, because the first communication device has successfully received, at the moment T, a total of four coded data units $Y_1$, $Y_4$, $Y_5$, *and* $Y_6$ in the six coded data units corresponding to the data block, and a rank of a matrix including coding vectors corresponding to the correctly received coded data units corresponding to the data block is correspondingly 4 and is less than the quantity 6 of the original data units included in the data block, the first communication device may alternatively send, to the second communication device between the moment T and the moment T+t2, fifth indication information indicating network coding-based retransmission.

The second communication device performs network coding-based retransmission at the moment T+t2. For example, the second communication device may re-encode $X_1, X_2, \cdots$, *and* $X_6$ to obtain six coded data units $Y_7, Y_8, \cdots$, and $Y_{12}$, and send two coded data units $Y_7$ and $Y_8$ in the six coded data units to the first communication device by using two CBGs (a $CBG_6$ and a $CBG_7$). The first communication device successfully receives the $CBG_6$ and the $CBG_7$, and successfully obtains $Y_7$ and $Y_8$, so that the rank of the matrix including the coding vectors corresponding to the correctly received coded data units corresponding to the data block changes to 6 (2 is added on the basis of 4 at the moment T), and is equal to the quantity of original data units included in the data block. Therefore, the first communication device can successfully decode the original data units $X_1, X_2, \ldots$, *and* $X_6$ included in the data block.

A possible implementation process in the method 500 is described by using a transmission process shown in FIG. 7 as an example.

In FIG. 7, the second communication device encodes six original data units $X_1,X_2,\cdots$, and $X_6$ to obtain six coded data units $Y_1$, $Y_2$, $\cdots$ , and $Y_6$, and transmits the six coded data units by using five CBGs (a $CBG_1$, a $CBG_2$, a $CBG_3$, a $CBG_4$, and a $CBG_5$). The six original data units $X_1,X_2$, $\cdots$ , and $X_6$ may be included in one data block, or may be included in a plurality of data blocks. In this example, that $X_1$, $X_2$, ... , and $X_6$ are included in one data block is used as an example.

At a moment T-tl, the second communication device sends, to the first communication device, the five CBGs carrying the coded data units $Y_1$, $Y_2$, $\cdots$ , and $Y_6$. The five CBGs are included in a TB 1. When receiving the five CBGs, the first communication device finds that two CBGs (the $CBG_1$ and the $CBG_5$) are correctly received, and three CBGs (the $CBG_2$, the $CBG_3$, and the $CBG_4$) are incorrectly received (the part that is incorrectly received is shown in shadow in the figure). Because the $CBG_2$, the $CBG_3$, and the $CBG_4$ carry data of $Y_2$, $Y_3$, $Y_4$, and $Y_5$, the four coded data units $Y_2$, $Y_3$, $Y_4$, and $Y_5$ are incorrectly received at the first communication device. The first communication device sends second indication information to the second communication device between the moment T-tl and a moment T, where the second indication information indicates that a quantity of incorrectly received CBGs in the TB 1 is 3.

For example, a third threshold is 0.4. Because the second communication device determines, based on the second indication information, that a ratio of the quantity of incorrectly received CBGs (that is, 3) in the TB 1 to a quantity of all CBGs (that is, 5) in the TB 1 is 3/5 = 0.6, and is greater than the third threshold (that is, 0.4), the second communication device performs HARQ retransmission on the $CBG_2$, the $CBG_3$, and the $CBG_4$ at the moment T. The three CBGs are included in a TB 2. For example, the second communication device may obtain the previously stored $CBG_2$, $CBG_3$, and $CBG_4$ from a buffer, and send the three CBGs to the first communication device. When receiving the three CBGs, the first communication device finds that two CBGs (the $CBG_3$ and the $CBG_4$) are correctly received, and one CBG (the $CBG_2$) is incorrectly received. Because the $CBG_2$ carries data of $Y_2$ and $Y_3$, the two coded data units $Y_2$ and $Y_3$ are still incorrectly received at the first communication device. The first communication device sends second indication information to the second communication device between the moment T and a moment T+t2, where the second indication information indicates that a quantity of incorrectly received CBGs in the TB 2 is 1.

For example, a fourth threshold is 0.4. Because the second communication device determines, based on the second indication information, that a ratio of the quantity of incorrectly received CBGs (that is, 1) in the TB 2 to a quantity of all CBGs (that is, 3) in the TB 2 is 1/3 ≈ 0.33, and is less than the fourth threshold (that is, 0.4), the second communication device performs network coding-based transmission at the moment T+t2. Further, because the first communication device has successfully received, at the moment T, a total of four coded data units $Y_1$, $Y_4$, $Y_5$, and $Y_6$ in the six coded data units corresponding to the data block, and a rank of a matrix including coding vectors corresponding to the correctly received coded data units corresponding to the data block is correspondingly 4, the first communication device may send, to the second communication device between the moment T and the moment T+t2, indication information indicating the rank. After the second communication device obtains the rank, because the value 4 of the rank is less than the quantity 6 of original data units included in the data block, the second communication device determines to perform network coding-based retransmission at the moment T+t2. For example, the second communication device may re-encode $X_1$, $X_2$, $\cdots$ , *and* $X_6$ to obtain six coded data units $Y_7$, $Y_8$, ... , and $Y_{12}$, and send two coded data units $Y_7$ and $Y_8$ in the six coded data units to the first communication device by using two CBGs (a $CBG_6$ and a $CBG_7$). The first communication device successfully receives the $CBG_6$ and the $CBG_7$, and successfully obtains $Y_7$ and $Y_8$, so that the rank of the matrix including the coding vectors corresponding to the correctly received coded data units corresponding to the data block changes to 6 (2 is added on the basis of 4 at the moment T), and is equal to the quantity of original data units included in the data block. Therefore, the first communication device can successfully decode the original data units $X_1$, $X_2$, $\cdots$ , and $X_6$ included in the data block.

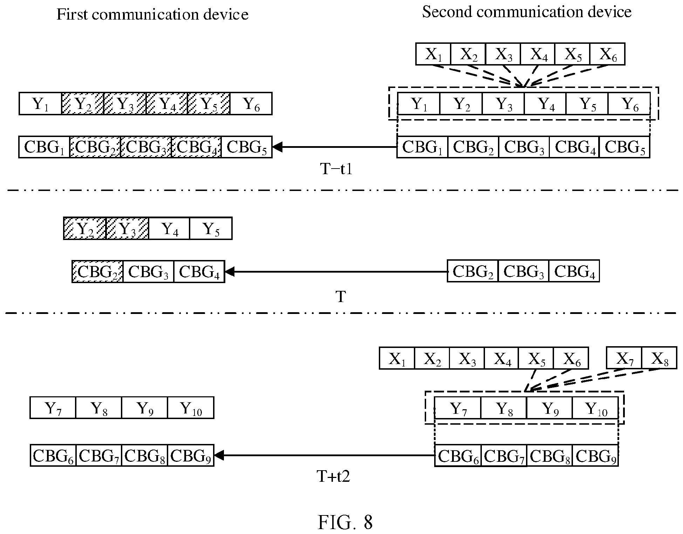

In comparison between a transmission process shown in FIG. 8 and the transmission process shown in FIG. 7, a difference lies in that when performing network coding-based retransmission at the moment T+t2, the second communication device can perform joint coding on original data units in new and old data blocks, so as to perform hybrid transmission of network coding-based retransmission and network coding-based new transmission.

A possible implementation process in the method 400 is described by using the transmission process shown in FIG. 8 as an example.

In FIG. 8, the second communication device encodes six original data units $X_1,X_2$, ... , *and* $X_6$ to obtain six coded data units $Y_1$, $Y_2$, $\cdots$ , and $Y_6$, and transmits the six coded data units by using five CBGs (a $CBG_1$, a $CBG_2$, a $CBG_3$, a $CBG_4$, and a $CBG_5$). The six original data units $X_1,X_2$, $\cdots$ , and $X_6$ may be included in one data block, or may be included in a plurality of data blocks. In this example, that $X_1$, $X_2$, ... , and $X_6$ are included in one data block Block 1 is used as an example.

At a moment T-tl, the second communication device sends, to the first communication device, the five CBGs carrying the coded data units $Y_1$, $Y_2$, $\cdots$ , and $Y_6$. The five CBGs are included in a TB 1. When receiving the five CBGs, the first communication device finds that two CBGs (the $CBG_1$ and the $CBG_5$) are correctly received, and three CBGs (the $CBG_2$, the $CBG_3$, and the $CBG_4$) are incorrectly received (the part that is incorrectly received is shown in shadow in the figure). Because the

$CBG_2$, the $CBG_3$, and the $CBG_4$ carry data of $Y_2$, $Y_3$, $Y_4$, and $Y_5$, the four coded data units $Y_2$, $Y_3$, $Y_4$, and $Y_5$ are incorrectly received at the first communication device. For example, a third threshold is 0.4. Because a ratio of a quantity of incorrectly received CBGs (that is, 3) in the TB 1 to a quantity of all CBGs (that is, 5) in the TB 1 is 3/5 = 0.6, and is greater than the third threshold (that is, 0.4), the first communication device sends, to the second communication device between the moment T-t1 and a moment T, first indication information indicating HARQ retransmission, to indicate the first communication device to perform HARQ retransmission.

The second communication device performs HARQ retransmission on the $CBG_2$, the $CBG_3$, and the $CBG_4$ at the moment T based on content indicated by the first indication information. The three CBGs are included in a TB 2. For example, the second communication device may obtain the previously stored $CBG_2$, $CBG_3$, and $CBG_4$ from a buffer, and send the three CBGs to the first communication device. When receiving the three CBGs, the first communication device finds that two CBGs (the CBGs and the $CBG_4$) are correctly received, and one CBG (the $CBG_2$) is incorrectly received. Because the $CBG_2$ carries data of $Y_2$ and $Y_3$, the two coded data units $Y_2$ and $Y_3$ are still incorrectly received at the first communication device. For example, a fourth threshold is 0.4. Because a ratio of a quantity of incorrectly received CBGs (that is, 1) in the TB 2 to a quantity of all CBGs (that is, 3) in the TB 2 is $1/3 \approx 0.33$, and is less than the fourth threshold (that is, 0.4), the first communication device sends, to the second communication device between the moment T and a moment T+t2, first indication information indicating network coding-based transmission, to indicate the first communication device to perform network coding-based transmission. Further, because the first communication device has successfully received, at the moment T, a total of four coded data units $Y_1$, $Y_4$, $Y_5$, and $Y_6$ in the six coded data units corresponding to the data block Block 1, and a rank of a matrix including coding vectors corresponding to the correctly received coded data units corresponding to the data block Block 1 is correspondingly 4 and is less than the quantity 6 of the original data units included in the data block Block 1, the first communication device may alternatively send, to the second communication device between the moment T and the moment T+t2, fifth indication information indicating network coding-based retransmission.

When preparing for network coding-based retransmission at the moment T+t2, the second communication device determines that a quantity of physical resources that can carry network-coded retransmission data is greater than a quantity of physical resources required for to-be-transmitted network-coded retransmission data. Therefore, the second communication device may determine to perform network coding-based retransmission and network coding-based new transmission at the moment T+t2, that is, on the basis of network coding-based retransmission, use a remaining physical resource to additionally carry network-coded new transmission data.

For example, the second communication device may perform joint coding (for example, convolutional network coding) on $X_5$ and $X_6$ in the old data block Block 1 and $X_7$ and $X_8$ in a new data block Block 2 (which may be understood as network-coded new transmission data) to obtain four coded data units $Y_7, Y_8, \ldots, and\ Y_{10}$, and send the four coded data units $Y_7, Y_8, \cdots, and\ Y_{10}$ to the first communication device by using four CBGs (a $CBG_6$, a $CBG_7$, a $CBG_8$, and a $CBG_9$). The coded data units $Y_7$ and $Y_8$ correspond to the network-coded retransmission data, and the coded data units $Y_9$ and $Y_{10}$ correspond to the network-coded new transmission data. The first communication device successfully receives the $CBG_6$, the $CBG_7$, the $CBG_8$, and the $CBG_9$, and successfully obtains the two coded data units $Y_7$ and $Y_8$ corresponding to the old data block Block 1 and the two coded data units $Y_9$ and $Y_{10}$ corresponding to the new data block Block 2, so that the rank of the matrix including the coding vectors corresponding to the correctly received coded data units corresponding to the old data block Block 1 changes to 6 (2 is added on the basis of 4 at the moment T), and is equal to the quantity 6 of original data units included in the old data block Block 1. Therefore, the first communication device can successfully decode the original data units $X_1, X_2, \cdots, and\ X_6$ included in the old data block Block 1.

A possible implementation process in the method 500 is described by using the transmission process shown in FIG. 8 as an example.

In FIG. 8, the second communication device encodes six original data units $X_1, X_2, \cdots$, and $X_6$ to obtain six coded data units $Y_1$, $Y_2$, $\cdots$, and $Y_6$, and transmits the six coded data units by using five CBGs (a $CBG_1$, a $CBG_2$, a $CBG_3$, a $CBG_4$, and a $CBG_5$). The six original data units $X_1, X_2, \cdots$, and $X_6$ may be included in one data block, or may be included in a plurality of data blocks. In this example, that $X_1$, $X_2$, ..., and $X_6$ are included in one data block Block 1 is used as an example.

At a moment T-tl, the second communication device sends, to the first communication device, the five CBGs carrying the coded data units $Y_1$, $Y_2$, $\cdots$, and $Y_6$. The five CBGs are included in a TB 1. When receiving the five CBGs, the first communication device finds that two CBGs (the $CBG_1$ and the $CBG_5$) are correctly received, and three CBGs (the $CBG_2$, the $CBG_3$, and the $CBG_4$) are incorrectly received (the part that is incorrectly received is shown in shadow in the figure). Because the $CBG_2$, the $CBG_3$, and the $CBG_4$ carry data of $Y_2, Y_3, Y_4$, and $Y_5$, the four coded data units $Y_2, Y_3, Y_4$, and $Y_5$ are incorrectly received at the first communication device. The first communication device sends second indication information to the second communication device between the moment T-tl and a moment T, where the second indication information indicates that a quantity of incorrectly received CBGs in the TB 1 is 3.

For example, a third threshold is 0.4. Because the second communication device determines, based on the second indication information, that a ratio of the quantity of incorrectly received CBGs (that is, 3) in the TB 1 to a quantity of all CBGs (that is, 5) in the TB 1 is 3/5 = 0.6, and is greater than the third threshold (that is, 0.4), the second communication device performs HARQ retransmission on the $CBG_2$, the $CBG_3$, and the $CBG_4$ at the moment T. The three CBGs are included in a TB 2. For example, the second communication device may obtain the previously stored $CBG_2$, $CBG_3$, and $CBG_4$ from a buffer, and send the three CBGs to the first communication device. When receiving the three CBGs, the first communication device finds that two CBGs (the $CBG_3$ and the $CBG_4$) are correctly received, and one CBG (the $CBG_2$) is incorrectly received. Because the $CBG_2$ carries data of $Y_2$ and $Y_3$, the two coded data units $Y_2$ and $Y_3$ are still incorrectly received at the first communication device. The first communication device sends second indication information to the second communication device between the moment T and a moment T+t2, where the second indication information indicates that a quantity of incorrectly received CBGs in the TB 2 is 1.

For example, a fourth threshold is 0.4. Because the second communication device determines, based on the second indication information, that a ratio of the quantity of incorrectly received CBGs (that is, 1) in the TB 2 to a quantity of all CBGs (that is, 3) in the TB 2 is 1/3 ≈ 0.33, and is less than the fourth threshold (that is, 0.4), the second communication device performs network coding-based transmission at the moment T+t2. Further, because the first communication device has successfully received, at the moment T, a total of four coded data units $Y_1$, $Y_4$, $Y_5$, and $Y_6$ in the six coded data units corresponding to the data block Block 1, and a rank of a matrix including coding vectors corresponding to the correctly received coded data units corresponding to the data block Block 1 is correspondingly 4, the first communication device may send, to the second communication device between the moment T and the moment T+t2, indication information indicating the rank. After the second communication device obtains the rank, because the value 4 of the rank is less than the quantity 6 of original data units included in the data block Block 1, the second communication device determines that at least network coding-based retransmission needs to be performed at the moment T+t2. In addition, when preparing for network coding-based retransmission at the moment T+t2, the second communication device determines that a quantity of physical resources that can carry network-coded retransmission data is greater than a quantity of physical resources required for to-be-transmitted network-coded retransmission data. Therefore, the second communication device may determine to perform network coding-based retransmission and network coding-based new transmission at the moment T+t2, that is, on the basis of network coding-based retransmission, use a remaining physical resource to additionally carry network-coded new transmission data.

For example, the second communication device may perform joint coding (for example, convolutional network coding) on $X_5$ and $X_6$ in the old data block Block 1 and $X_7$ and $X_8$ in a new data block Block 2 (which may be understood as network-coded new transmission data) to obtain four coded data units $Y_7$, $Y_8$, ... , and $Y_{10}$, and send the four coded data units $Y_7$, $Y_8$, ... , and $Y_{10}$ to the first communication device by using four CBGs (a $CBG_6$, a $CBG_7$, a $CBG_8$, and a $CBG_9$). The coded data units $Y_7$ and $Y_8$ correspond to the network-coded retransmission data, and the coded data units $Y_9$ and $Y_{10}$ correspond to the network-coded new transmission data. The first communication device successfully receives the $CBG_6$, the $CBG_7$, the $CBG_8$, and the $CBG_9$, and successfully obtains the two coded data units $Y_7$ and $Y_8$ corresponding to the old data block Block 1 and the two coded data units $Y_9$ and $Y_{10}$ corresponding to the new data block Block 2, so that the rank of the matrix including the coding vectors corresponding to the correctly received coded data units corresponding to the old data block Block 1 changes to 6 (2 is added on the basis of 4 at the moment T), and is equal to the quantity 6 of original data units included in the old data block Block 1. Therefore, the first communication device can successfully decode the original data units $X_1, X_2, \cdots$ , *and* $X_6$ included in the old data block Block 1.

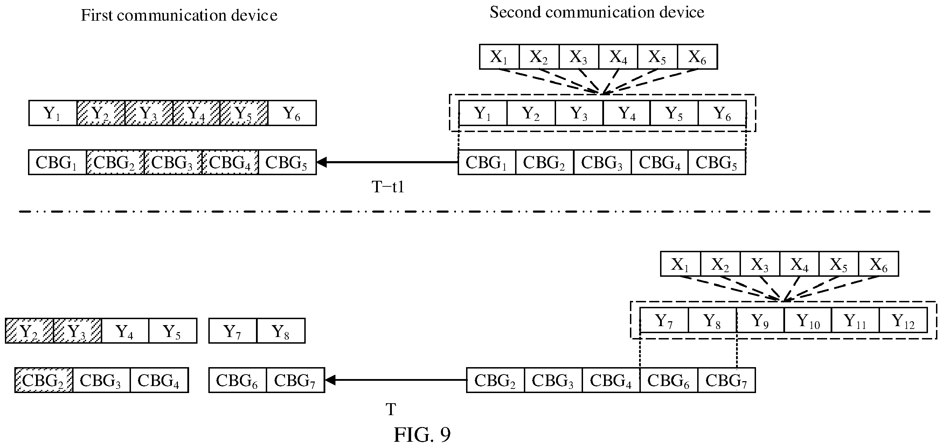

A possible implementation process in the method 400 is described by using a transmission process shown in FIG. 9 as an example.

In FIG. 9, the second communication device encodes six original data units $X_1, X_2, \cdots$, and $X_6$ to obtain six coded data units $Y_1$, $Y_2$, ⋯ , and $Y_6$, and transmits the six coded data units by using five CBGs (a $CBG_1$, a $CBG_2$, a $CBG_3$, a $CBG_4$, and a $CBG_5$). The six original data units $X_1, X_2, \cdots$, and $X_6$ may be included in one data block, or may be included in a plurality of data blocks. In this example, that $X_1$, $X_2$, ... , and $X_6$ are included in one data block is used as an example.

At a moment T-tl, the second communication device sends, to the first communication device, the five CBGs carrying the coded data units $Y_1$, $Y_2$, ⋯ , and $Y_6$. The five CBGs are included in a TB 1. When receiving the five CBGs, the first communication device finds that two CBGs (the $CBG_1$ and the $CBG_5$) are correctly received, and three CBGs (the $CBG_2$, the $CBG_3$, and the $CBG_4$) are incorrectly received (the part that is incorrectly received is shown in shadow in the figure). Because the $CBG_2$, the $CBG_3$, and the $CBG_4$ carry data of $Y_2$, $Y_3$, $Y_4$, and $Y_5$, the four coded data units $Y_2$, $Y_3$, $Y_4$, and $Y_5$ are incorrectly received at the first communication device. Because the $CBG_1$ and the $CBG_5$ carry data of $Y_1$ and $Y_6$, the two coded data units $Y_1$ and $Y_6$ are correctly received at the first communication device, so that a rank of a matrix including coding vectors corresponding to correctly received coded data units corresponding to the data block is 2. For example, a seventh threshold is 0.4. Because a ratio of a quantity of incorrectly received CBGs (that is, 3) in the TB 1 to a quantity of all CBGs (that is, 5) in the TB 1 is 3/5 = 0.6, and is greater than the seventh threshold (that is, 0.4), the first communication device sends, to the second communication device between the moment T-t1 and a moment T, first indication information indicating HARQ retransmission and network coding-based transmission, to indicate the first communication device to perform HARQ retransmission and network coding-based transmission.

The second communication device performs HARQ retransmission on the $CBG_2$, the $CBG_3$, and the $CBG_4$ at the moment T based on content indicated by the first indication information, re-encodes $X_1$, $X_2$, ... , and $X_6$ to obtain six coded data units $Y_7$, $Y_8$, ... , and $Y_{12}$, and sends two coded data units $Y_7$ and $Y_8$ in the six coded data units to the first communication device by using two CBGs (a $CBG_6$ and a $CBG_7$). The $CBG_2$, the $CBG_3$, the $CBG_4$, the $CBG_6$, and the $CBG_7$ are included in a TB 2. It may be understood that when the coded data units $Y_7$ and $Y_8$ are carried by using the $CBG_6$ and the $CBG_7$, an idle resource may exist in the $CBG_6$ and the $CBG_7$. In this case, the $CBG_6$ and the $CBG_7$ may be filled, by padding bits, to a size that meets a transmission requirement. The first communication device does not successfully receive the $CBG_2$, but successfully receives the $CBG_3$, the $CBG_4$, the $CBG_6$, and the $CBG_7$, and successfully obtains four coded data units $Y_4$, $Y_5$, $Y_7$, *and* $Y_8$, so that the rank of the matrix including the coding vectors corresponding to the correctly received coded data units corresponding to the data block changes to 6 (4 is added on the basis of 2 at the moment T-t1), and is equal to the quantity of original data units included in the data block. Therefore, the first communication device can successfully decode the original data units $X_1$, $X_2$, ⋯ , and $X_6$ included in the data block.

A possible implementation process in the method 500 is described by using a transmission process shown in FIG. 9 as an example.

In FIG. 9, the second communication device encodes six original data units $X_1$,$X_2$, ... , *and* $X_6$ to obtain six coded data units $Y_1$, $Y_2$, ⋯ , and $Y_6$, and transmits the six coded data units by using five CBGs (a $CBG_1$, a $CBG_2$, a $CBG_3$, a $CBG_4$, and a $CBG_5$). The six original data units $X_1$,$X_2$, ⋯ , and $X_6$ may be included in one data block, or may be included in a plurality of data blocks. In this example, that $X_1$,$X_2$,⋯, and $X_6$ are included in one data block is used as an example.

At a moment T-tl, the second communication device sends, to the first communication device, the five CBGs carrying the coded data units $Y_1$, $Y_2$, ⋯ , and $Y_6$. The five CBGs are included in a TB 1. When receiving the five CBGs, the first communication device finds that two CBGs (the $CBG_1$ and the $CBG_5$) are correctly received, and three CBGs (the $CBG_2$, the $CBG_3$, and the $CBG_4$) are incorrectly received (the part that is incorrectly received is shown in shadow in the figure). Because the $CBG_2$, the $CBG_3$, and the $CBG_4$ carry data of $Y_2$, $Y_3$, $Y_4$, and $Y_5$, the four coded data units $Y_2$, $Y_3$, $Y_4$, and $Y_5$ are incorrectly received at the first communication device. Because the $CBG_1$ and the $CBG_5$ carry data of $Y_1$ and $Y_6$, the two coded data units $Y_1$ and $Y_6$ are correctly received at the first communication device, so that a rank of a matrix including coding vectors corresponding to correctly received coded data units corresponding to the data block is 2. The first communication device sends second indication information to the second communication device between the moment T-t1 and a moment T, where the second indication information indicates that a quantity of incorrectly received CBGs in the TB 1 is 3.

For example, a seventh threshold is 0.4. Because the second communication device determines, based on the second indication information, that a ratio of the quantity of incorrectly received CBGs (that is, 3) in the TB 1 to a quantity of all CBGs (that is, 5) in the TB 1 is 3/5 = 0.6, and is greater than the seventh threshold (that is, 0.4), the second communication device performs HARQ retransmission on the $CBG_2$, the $CBG_3$, and the $CBG_4$ at the moment T, re-encodes $X_1$,$X_2$,⋯, *and* $X_6$ to obtain six coded data units $Y_7$,$Y_8$,⋯, and $Y_{12}$, and sends two coded data units $Y_7$ and $Y_8$ in the six coded data units to the first communication device by using two CBGs (a $CBG_6$ and a $CBG_7$). The $CBG_2$, the $CBG_3$, the $CBG_4$, the $CBG_6$, and the $CBG_7$ are included in a TB 2. It may be understood that when the coded data units $Y_7$ and $Y_8$ are carried by using the $CBG_6$ and the $CBG_7$, an idle resource may exist in the $CBG_6$ and the $CBG_7$. In this case, the $CBG_6$ and the $CBG_7$ may be filled, by padding bits, to a size that meets a transmission requirement. The first communication device does not successfully receive the $CBG_2$, but successfully receives the $CBG_3$, the $CBG_4$, the $CBG_6$, and the $CBG_7$, and successfully obtains four coded data units $Y_4$, $Y_5$, $Y_7$, and $Y_8$, so that the rank of the matrix including the coding vectors corresponding to the correctly received coded data units corresponding to the data block changes to 6 (4 is added on the basis of 2 at the moment T-t1), and is equal to the quantity of original data units included in the data block. Therefore, the first communication device can successfully decode the original data units $X_1$,$X_2$,⋯, *and* $X_6$ included in the data block.

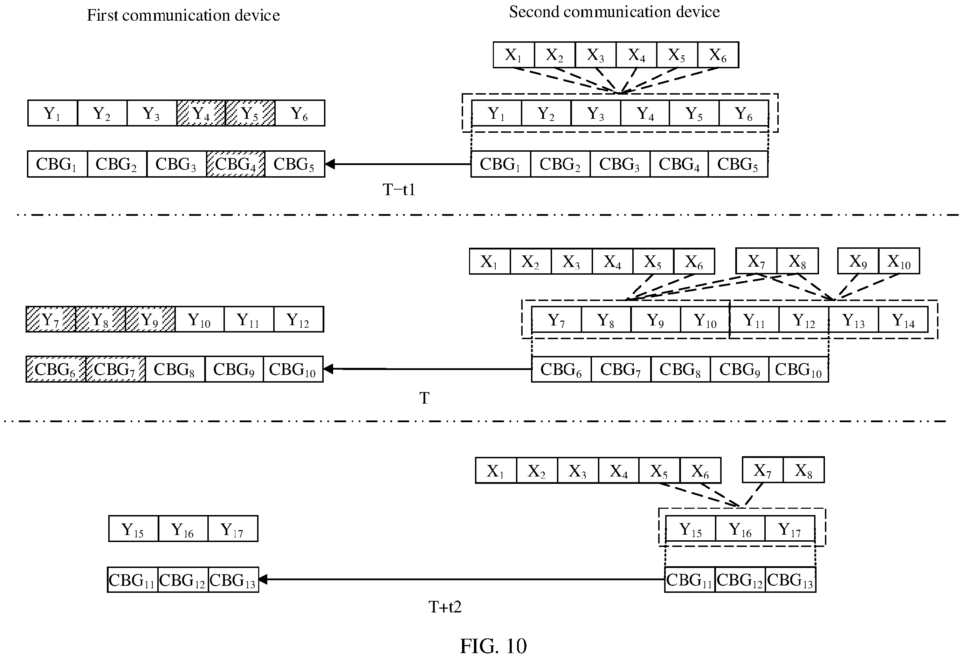

Another possible implementation process of this embodiment of this application is described by using a transmission process shown in FIG. 10 as an example.

In FIG. 10, the second communication device encodes six original data units $X_1$,$X_2$, ..., *and* $X_6$ to obtain six coded data units $Y_1$, $Y_2$, ⋯ , and $Y_6$, and transmits the six coded data units by using five CBGs (a $CBG_1$, a $CBG_2$, a $CBG_3$, a $CBG_4$, and a $CBG_5$). The six original data units $X_1$,$X_2$,⋯, *and* $X_6$ may be included in one data block, or may be included in a plurality of data blocks. In this example, that $X_1$,$X_2$,⋯, and $X_6$ are included in one data block Block 1 is used as an example.

At a moment T-t1, the second communication device sends, to the first communication device, the five CBGs carrying the coded data units $Y_1$,$Y_2$,⋯, and $Y_6$. The five CBGs are included in a TB 1. When receiving the five CBGs, the first communication device finds that

four CBGs (the $CBG_1$, the $CBG_2$, the $CBG_3$, and the $CBG_5$) are correctly received, and one CBG (the $CBG_4$) is incorrectly received (the part that is incorrectly received is shown in shadow in the figure). Because the $CBG_1$, the $CBG_2$, the $CBG_3$, and the CBGs carry data of $Y_1$, $Y_2$, $Y_3$, and $Y_6$, the four coded data units $Y_1$, $Y_2$, $Y_3$, and $Y_6$ are correctly received at the first communication device. Because the $CBG_4$ carries data of $Y_4$ and $Y_5$, the two coded data units $Y_4$ and $Y_5$ are incorrectly received at the first communication device. For example, a fourth threshold is 0.4. Because a ratio of a quantity of incorrectly received CBGs (that is, 1) in the TB 1 to a quantity of all CBGs (that is, 5) in the TB 1 is 1/5 = 0.2, and is less than the fourth threshold (that is, 0.4), the second communication device determines that at least network coding-based retransmission needs to be performed at a moment T. In addition, when preparing for network coding-based retransmission at the moment T, the second communication device determines that a quantity of physical resources that can carry network-coded retransmission data is greater than a quantity of physical resources required for to-be-transmitted network-coded retransmission data. Therefore, the second communication device may determine to perform network coding-based retransmission and network coding-based new transmission at the moment T, that is, on the basis of network coding-based retransmission, use a remaining physical resource to additionally carry network-coded new transmission data.

For example, when preparing for network coding-based retransmission and network coding-based new transmission at the moment T, the second communication device determines, based on a rank (that is, 4) of a matrix including coding vectors corresponding to correctly received coded data units corresponding to the data block Block 1 at the moment T-t1 and a quantity of original data units (that is, 6) in the data block Block 1, that two (that is, 6 - 4 = 2) original data units $X_5$ and $X_6$ in the old data block Block 1 need to be retransmitted at the moment T. For example, a maximum quantity of original data units input into an encoder is 4. In this case, two original data units $X_7$ and $X_8$ from a new data block Block 2 may be additionally added. The second communication device performs joint coding (for example, convolutional network coding) on the two original data units $X_5$ *and* $X_6$ in the old data block Block 1 and the two original data units $X_7$ *and* $X_8$ in the new data block Block 2 (which may be understood as network-coded new transmission data), to obtain four coded data units $Y_7$, $Y_8$, ⋯ , and $Y_{10}$ The coded data units $Y_7$ *and* $Y_8$ correspond to the network-coded retransmission data, and the coded data units $Y_9$ *and* $Y_{10}$ correspond to the network-coded new transmission data (which may be understood as $X_7$ *and* $X_8$). In this case, if a remaining physical resource still exists, the second communication device may further additionally add two original data units $X_9$ *and* $X_{10}$ from a new data block Block 3, and perform joint coding (for example, convolutional network coding) on the two original data units $X_7$ *and* $X_8$ in the new data block Block 2 (which may be understood as the network-coded new transmission data) and the two original data units $X_9$ *and* $X_{10}$ in the new data block Block 3 (which may also be understood as network-coded new transmission data), to obtain another four coded data units $Y_{11}$, $Y_{12}$, ⋯ , *and* $Y_{14}$, where the coded data units $Y_{11}$ and $Y_{12}$ correspond to the network-coded new transmission data (which may be understood as $X_9$ *and* $X_{10}$).

At the moment T, the second communication device sends six coded data units $Y_7$, $Y_8$, $Y_9$, $Y_{10}$, $Y_{11}$, and $Y_{12}$ in the foregoing eight coded data units $Y_7$, $Y_8$, $Y_9$, $Y_{10}$, $Y_{11}$, $Y_{12}$, $Y_{13}$, and $Y_{14}$ to the first communication device by using five CBGs (a $CBG_6$, a $CBG_7$, a $CBG_8$, a $CBG_9$, and a $CBG_{10}$). The first communication device successfully receives the $CBG_8$, the $CBG_9$, and the $CBG_{10}$, but does not successfully receive the CBGs and the $CBG_7$ Because the $CBG_8$, the $CBG_9$, and the $CBG_{10}$ carry data of $Y_{10}$, $Y_{11}$, *and* $Y_{12}$, the three coded data units $Y_{10}$, $Y_{11}$, and $Y_{12}$ are correctly received at the first communication device. Because the $CBG_6$ and the $CBG_7$ carry data of $Y_7$, $Y_8$, *and* $Y_9$, the three coded data units $Y_7$, $Y_8$, *and* $Y_9$ are incorrectly received at the first communication device.

The coded data units $Y_7$ *and* $Y_8$ corresponding to the old data block Block 1 are both incorrectly received at the moment T, so that the rank of the matrix including the coding vectors corresponding to the correctly received coded data units corresponding to the old data block Block 1 is still 4, and a difference between the rank and the quantity 6 of all original data units included in the old data block Block 1 is still 2. Therefore, the second communication device determines that the two original data units $X_5$ *and* $X_6$ in the old data block Block 1 need to be transmitted at a moment T+t2. In addition, the coded data units $Y_9$ and $Y_{10}$ corresponding to the new data block Block 2 are incorrectly received and correctly received at the moment T respectively, a rank of a matrix including a coding vector corresponding to a correctly received coded data unit corresponding to the new data block Block 2 is 1, and a difference between the rank and the quantity 2 of all original data units included in the new data block Block 2 is 1. Therefore, the second communication device determines that the one original data unit $X_7$ in the new data block Block 2 needs to be transmitted at the moment T+t2.

The second communication device performs joint coding (for example, convolutional network coding) on the two original data units $X_5$ *and* $X_6$ in the old data block Block 1 and the one original data unit $X_7$ in the new data block Block 2 to obtain three coded data units $Y_{15}$, $Y_{16}$, *and* $Y_{17}$, and sends $Y_{15}$, $Y_{16}$, *and* $Y_{17}$ to the first communication device at the moment T+t2 by using three CBGs (a $CBG_{11}$, a $CBG_{12}$, and a $CBG_{13}$). The first communication device successfully receives the $CBG_{11}$, the $CBG_{12}$, and the $CBG_{13}$, and successfully obtains $Y_{15}$, $Y_{16}$, *and* $Y_{17}$, so that the rank of the matrix including the coding vectors corresponding to the correctly received coded data units corresponding to the old data block Block 1 changes to 6, and is equal to the quantity 6 of original data units included in the old data block Block 1. Therefore, the first communication device can successfully decode the original data units $X_1$, $X_2$, $\cdots$ , *and* $X_6$ included in the old data block Block 1.

In correspondence to the methods provided in the foregoing method embodiments, an embodiment of this application further provides a corresponding apparatus. The apparatus includes corresponding modules configured to perform the foregoing embodiments. The module may be software, hardware, or a combination of software and hardware.

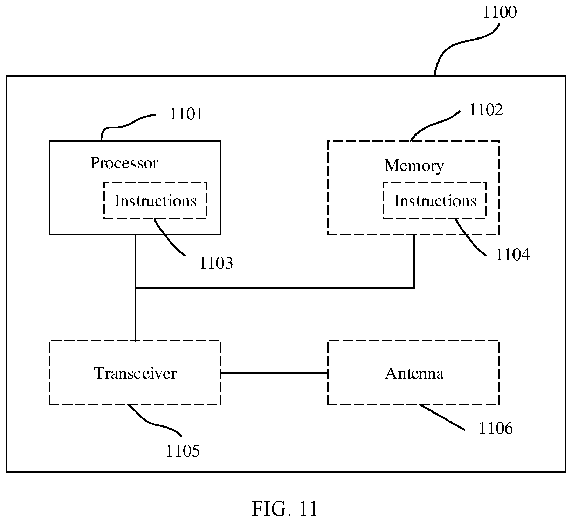

FIG. 11 is a schematic diagram of a structure of an apparatus 1100. The apparatus 1100 may be a network device, may be a terminal device, may be a chip, a chip system, a processor, or the like that supports a network device in implementing the foregoing methods, or may be a chip, a chip system, a processor, or the like that supports a terminal device in implementing the foregoing methods. The apparatus may be configured to implement the methods described in the foregoing method embodiments. For details, refer to the descriptions in the foregoing method embodiments.

The apparatus 1100 may include one or more processors 1101. The processor 1101 may also be referred to as a processing unit, and may implement a control function. The processor 1101 may be a general-purpose processor, a dedicated processor, or the like. For example, the processor may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program.

In an optional design, the processor 1101 may also store instructions and/or data 1103, and the instructions and/or data 1103 may be run on the processor, so that the apparatus 1100 performs the methods described in the foregoing method embodiments.

In another optional design, the processor 1101 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1100 may include a circuit. The circuit may implement the sending, receiving, or communication function in the foregoing method embodiments.

Optionally, the apparatus 1100 may include one or more memories 1102. The memory stores instructions 1104, and the instructions may be run on the processor, so that the apparatus 1100 performs the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1100 may further include a transceiver 1105 and/or an antenna 1106. The processor 1101 may be referred to as a processing unit, and control the apparatus 1100. The transceiver 1105 may be referred to as a transceiver unit, a transceiver machine, a transceiver circuit, a transceiver apparatus, a transceiver module, or the like, and is configured to implement a transceiver function.

Optionally, the apparatus 1100 in this embodiment of this application may be configured to perform the method described in FIG. 4, FIG. 5, or FIG. 6 in embodiments of this application.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be a network device or a terminal device. However, a range of the apparatus described in this application is not limited thereto, and a structure of the apparatus may not be limited to FIG. 11. The apparatus may be an independent device, or may be a part of a large device. For example, the apparatus may be:

(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) another device, or the like.

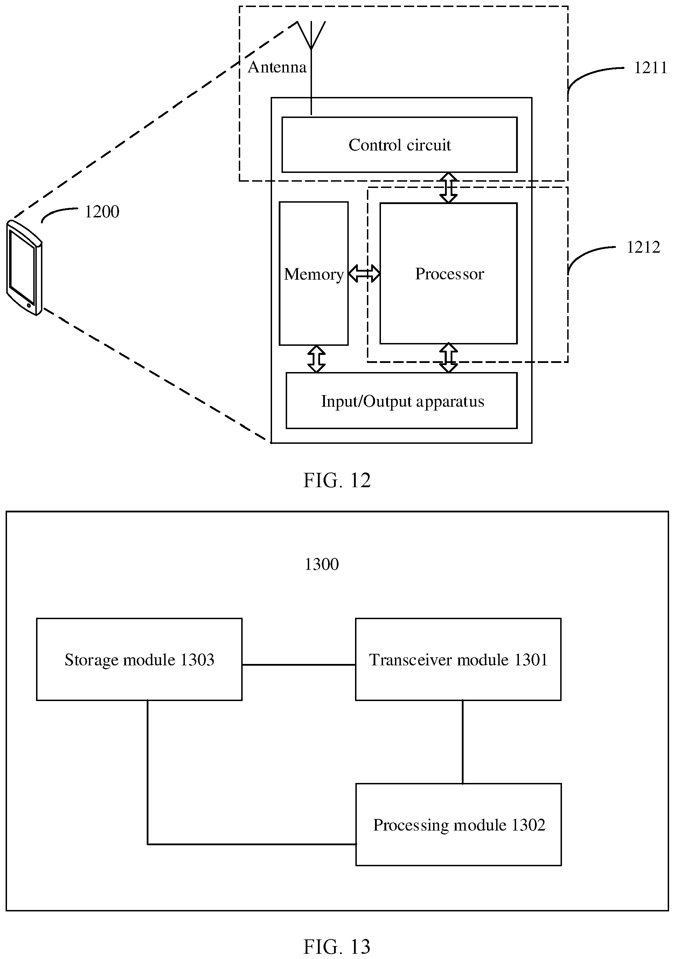

FIG. 12 is a schematic diagram of a structure of a terminal device 1200. The terminal device is applicable to the scenario shown in FIG. 1. For ease of description, FIG. 12 shows only main components of the terminal device. As shown in FIG. 12, the terminal device 1200 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in a form of an electromagnetic wave through the antenna. When data is sent to the terminal device, the radio frequency circuit receives a radio frequency signal through the antenna, further converts the radio frequency signal into a baseband signal, and outputs the baseband signal to the processor. The processor converts the baseband signal into data, and processes the data.

For ease of description, FIG. 12 shows only one memory and one processor. In an actual terminal device, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 12. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, an antenna and a control circuit that have a transceiver function may be considered as a transceiver unit 1211 of the terminal device 1200, and a processor that has a processing function may be considered as a processing unit 1212 of the terminal device 1200. As shown in FIG. 12, the terminal device 1200 includes the transceiver unit 1211 and the processing unit 1212. The transceiver unit may also be referred to as a transceiver machine, a transceiver, a transceiver apparatus, or the like. Optionally, a component that is in the transceiver unit 1211 and that is configured to implement a receiving function may be considered as a receiving unit, and a component that is in the transceiver unit 1211 and that is configured to implement a sending function may be considered as a sending unit. In other words, the transceiver unit 1211 includes the receiving unit and the sending unit. For example, the receiving unit may also be referred to as a receiver, a receiver machine, or a receiver circuit, and the sending unit may also be referred to as a transmitter, a transmitter machine, or a transmitter circuit. Optionally, the receiving unit and the sending unit may be one integrated unit, or may be a plurality of independent units. The receiving unit and the sending unit may be in one geographical position, or may be distributed in a plurality of geographical positions.

As shown in FIG. 13, still another embodiment of this application provides an apparatus 1300. The apparatus may be a terminal, or may be a component (for example, an integrated circuit or a chip) of a terminal. Alternatively, the apparatus may be a network device, or may be a component (for example, an integrated circuit or a chip) of a network device. Alternatively, the apparatus may be another communication module configured to implement the methods in the method embodiments of this application. The apparatus 1300 may include a processing module 1302 (or referred to as a processing unit). Optionally, the apparatus 1300 may further include a transceiver module 1301 (or referred to as a transceiver unit) and a storage module 1303 (or referred to as a storage unit).

In a possible design, one or more modules in FIG. 13 may be implemented by one or more processors, or may be implemented by one or more processors and memories, or may be implemented by one or more processors and transceivers, or may be implemented by one or more processors, memories, and transceivers. This is not limited in this embodiment of this application. The processor, the memory, and the transceiver may be disposed separately, or may be integrated.

The apparatus has a function of implementing the terminal described in embodiments of this application. For example, the apparatus includes a corresponding module, unit, or means (means) used for the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments. Alternatively, the apparatus has a function of implementing the network device described in embodiments of this application. For example, the apparatus includes a corresponding module, unit, or means (means) used for the network device to perform the steps that are related to the network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

Optionally, the modules in the apparatus 1300 in this embodiment of this application may be configured to perform the method described in FIG. 4, FIG. 5, or FIG. 6 in embodiments of this application.

In a possible design, the apparatus 1300 may include the processing module 1302 and the transceiver module 1301. The transceiver module 1301 is configured to receive first indication information from a first communication device. When the first indication information indicates HARQ retransmission, the processing module 1302 controls the transceiver module 1301 to send first data to the first communication device through a HARQ operation, where the first data includes HARQ retransmission data. When the first indication information indicates network coding-based transmission, the processing module 1302 controls the transceiver module 1301 to send first data to the first communication device through network coding, where the first data includes network-coded data. Optionally, when the first indication information indicates HARQ retransmission and network coding-based transmission, the processing module 1302 controls the transceiver module 1301 to send first data to the first communication device through a HARQ operation and network coding, where the first data includes HARQ retransmission data and network-coded data. Optionally, the network-coded data includes network-coded retransmission data and/or network-coded new transmission data.

In some possible implementations of the apparatus 1300, the first indication information is carried in one or more newly added indication fields.

In some possible implementations of the apparatus 1300, the first indication information may be implemented by using an ACK/a NACK. The ACK/NACK may be transmitted on a control channel or a data channel.

In another possible design, the apparatus 1300 may include the processing module 1302 and the transceiver module 1301. The transceiver module 1301 is configured to receive second data from a second communication device. When a reception status of the second data meets a first condition, the processing module 1302 controls the transceiver module 1301 to send, to the second communication device, first indication information used for transmitting first data, where the first indication information indicates HARQ retransmission, and the first data includes HARQ retransmission data. When a reception status of the second data meets a second condition, the processing module 1302 controls the transceiver module 1301 to send, to the second communication device, first indication information used for transmitting first data, where the first indication information indicates network coding-based transmission, and the first data includes network-coded data. The transceiver module 1301 is further configured to receive the first data from the second communication device. Optionally, the network-coded data includes network-coded retransmission data and/or network-coded new transmission data.

In some possible implementations of the apparatus 1300, the first indication information is carried in one or more newly added indication fields.

In some possible implementations of the apparatus 1300, the first indication information may be implemented by using an ACK/a NACK. The ACK/NACK may be transmitted on a control channel or a data channel.

In some possible implementations of the apparatus 1300, there may be a plurality of different implementations in which the reception status of the second data meets the first condition or the second condition. For details, refer to the implementations 1-1 to 1-15 in the method embodiments. Details are not described herein again.

In another possible design, the apparatus 1300 may include the processing module 1302 and the transceiver module 1301. The transceiver module 1301 is configured to receive second data from a second communication device. When a reception status of the second data meets a third condition, the processing module 1302 controls the transceiver module 1301 to send, to the second communication device, first indication information used for transmitting first data, where the first indication information indicates HARQ retransmission and network coding-based transmission, and the first data includes HARQ retransmission data and network-coded data. When a reception status of the second data meets a fourth condition, the processing module 1302 controls the transceiver module 1301 to send, to the second communication device, first indication information used for transmitting first data, where the first indication information indicates HARQ retransmission, and the first data includes HARQ retransmission data. When a reception status of the second data meets a fifth condition, the processing module 1302 controls the transceiver module 1301 to send, to the second communication device, first indication information used for transmitting first data, where the first indication information indicates network coding-based transmission, and the first data includes network-coded data. Optionally, the network-coded data includes network-coded retransmission data and/or network-coded new transmission data.

In some possible implementations of the apparatus 1300, the first indication information is carried in one or more newly added indication fields.

In some possible implementations of the apparatus 1300, the first indication information may be implemented by using an ACK/a NACK. The ACK/NACK may be transmitted on a control channel or a data channel.

In some possible implementations of the apparatus 1300, there may be a plurality of different implementations in which the reception status of the second data meets the third condition, the fourth condition, or the fifth condition. For details, refer to the implementations 1-16 to 1-30 in the method embodiments. Details are not described herein again.

In another possible design, the apparatus 1300 may include the processing module 1302 and the transceiver module 1301. The transceiver module 1301 is configured to: send second data to a first communication device, and receive second indication information from the first communication device, where the second indication information indicates a reception status of the second data. When the reception status of the second data meets a first condition, the processing module 1302 controls the transceiver module 1301 to send first data to the first communication device through a HARQ operation, where the first data includes HARQ retransmission data. When the reception status of the second data meets a second condition, the processing module 1302 controls the transceiver module 1301 to send first data to the first communication device through network coding, where the first data includes network-coded data. Optionally, the network-coded data includes network-coded retransmission data and/or network-coded new transmission data.

In some possible implementations of the apparatus 1300, there may be a plurality of different implementations in which the reception status of the second data meets the first condition or the second condition. For details, refer to the implementations 1-1 to 1-15 in the method embodiments. Details are not described herein again.

In another possible design, the apparatus 1300 may include the processing module 1302 and the transceiver module 1301. The transceiver module 1301 is configured to: send second data to a first communication device, and receive second indication information from the first communication device, where the second indication information indicates a reception status of the second data. When the reception status of the second data meets a third condition, the processing module 1302 controls the transceiver module 1301 to send first data to the first communication device through a HARQ operation and network coding, where the first data includes HARQ retransmission data and network-coded data. When the reception status of the second data meets a fourth condition, the processing module 1302 controls the transceiver module 1301 to send first data to the first communication device through a HARQ operation, where the first data includes HARQ retransmission data. When the reception status of the second data meets a fifth condition, the processing module 1302 controls the transceiver module 1301 to send first data to the first communication device through network coding, where the first data includes network-coded data. Optionally, the network-coded data includes network-coded retransmission data and/or network-coded new transmission data.

In some possible implementations of the apparatus 1300, there may be a plurality of different implementations in which the reception status of the second data meets the third condition, the fourth condition, or the fifth condition. For details, refer to the implementations 1-16 to 1-30 in the method embodiments. Details are not described herein again.

In another possible design, the apparatus 1300 may include the transceiver module 1301. The transceiver module 1301 is configured to: receive second data from a second communication device, and send, to the second communication device, second indication information used for transmitting first data, where the second indication information indicates a reception status of the second data. The transceiver module 1301 is further configured to receive the first data from the second communication device. When the reception status of the second data meets a first condition, the first data includes HARQ retransmission data. When the reception status of the second data meets a second condition, the first data includes network-coded data. Optionally, the network-coded data includes network-coded retransmission data and/or network-coded new transmission data.

In some possible implementations of the apparatus 1300, there may be a plurality of different implementations in which the reception status of the second data meets the first condition or the second condition. For details, refer to the implementations 1-1 to 1-15 in the method embodiments. Details are not described herein again.

In another possible design, the apparatus 1300 may include the transceiver module 1301. The transceiver module 1301 is configured to: receive second data from a second communication device, and send, to the second communication device, second indication information used for transmitting first data, where the second indication information indicates a reception status of the second data. The transceiver module 1301 is further configured to receive the first data from the second communication device. When the reception status of the second data meets a third condition, the first data includes HARQ retransmission data and network-coded data. When the reception status of the second data meets a fourth condition, the first data includes HARQ retransmission data. When the reception status of the second data meets a fifth condition, the first data includes network-coded data. Optionally, the network-coded data includes network-coded retransmission data and/or network-coded new transmission data.

In some possible implementations of the apparatus 1300, there may be a plurality of different implementations in which the reception status of the second data meets the third condition, the fourth condition, or the fifth condition. For details, refer to the implementations 1-16 to 1-30 in the method embodiments. Details are not described herein again.

In another possible design, the apparatus 1300 may include the processing module 1302 and the transceiver module 1301. The transceiver module 1301 is configured to receive third indication information from a first communication device, where the third indication information indicates channel quality. When the channel quality meets a sixth condition, the processing module 1302 controls the transceiver module 1301 to send first data to the first communication device through a HARQ operation, where the first data includes HARQ retransmission data. When the channel quality meets a seventh condition, the processing module 1302 controls the transceiver module 1301 to send first data to the first communication device through network coding, where the first data includes network-coded data. Optionally, the network-coded data includes network-coded retransmission data and/or network-coded new transmission data.

In some possible implementations of the apparatus 1300, there may be a plurality of different implementations in which the channel quality meets the sixth condition or the seventh condition. For details, refer to the implementation 2-1 in the method embodiments. Details are not described herein again.

In another possible design, the apparatus 1300 may include the processing module 1302 and the transceiver module 1301. The transceiver module 1301 is configured to receive third indication information from a first communication device, where the third indication information indicates channel quality. When the channel quality meets an eighth condition, the processing module 1302 controls the transceiver module 1301 to send first data to the first communication device through a HARQ operation and network coding, where the first data includes HARQ retransmission data and network-coded data. When the channel quality meets a ninth condition, the processing module 1302 controls the transceiver module 1301 to send first data to the first communication device through a HARQ operation, where the first data includes HARQ retransmission data. When the channel quality meets a tenth condition, the processing module 1302 controls the transceiver module 1301 to send first data to the first communication device through network coding, where the first data includes network-coded data. Optionally, the network-coded data includes network-coded retransmission data and/or network-coded new transmission data.

In some possible implementations of the apparatus 1300, there may be a plurality of different implementations in which the channel quality meets the eighth condition, the ninth condition, or the tenth condition. For details, refer to the implementation 2-2 in the method embodiments. Details are not described herein again.

In another possible design, the apparatus 1300 may include the processing module 1302 and the transceiver module 1301. The processing module 1302 is configured to obtain channel quality. The transceiver module 1301 is configured to: send, to a second communication device, third indication information used for transmitting first data, and receive the first data from the second communication device, where the third indication information indicates the channel quality. When the channel quality meets a sixth condition, the first data includes HARQ retransmission data. When the channel quality meets a seventh condition, the first data includes network-coded data. Optionally, the network-coded data includes network-coded retransmission data and/or network-coded new transmission data.

In some possible implementations of the apparatus 1300, there may be a plurality of different implementations in which the channel quality meets the sixth condition or the seventh condition. For details, refer to the implementation 2-1 in the method embodiments. Details are not described herein again.

In another possible design, the apparatus 1300 may include the processing module 1302 and the transceiver module 1301. The processing module 1302 is configured to obtain channel quality. The transceiver module 1301 is configured to: send, to a second communication device, third indication information used for transmitting first data, and receive the first data from the second communication device, where the third indication information indicates the channel quality. When the channel quality meets an eighth condition, the first data includes HARQ retransmission data and network-coded data. When the channel quality meets a ninth condition, the first data includes HARQ retransmission data. When the channel quality meets a tenth condition, the first data includes network-coded data. Optionally, the network-coded data includes network-coded retransmission data and/or network-coded new transmission data.

In some possible implementations of the apparatus 1300, there may be a plurality of different implementations in which the channel quality meets the eighth condition, the ninth condition, or the tenth condition. For details, refer to the implementation 2-2 in the method embodiments. Details are not described herein again.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on requirements. Correspondingly, the apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the functions for corresponding application, but it should not be considered that the implementation goes beyond the scope of embodiments of this application.

It may be understood that, the processor in embodiments of this application may be an integrated circuit chip, and has a signal processing capability. In an implementation process, steps in the foregoing method embodiments may be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

The solutions described in this application may be implemented in various manners. For example, the technologies may be implemented by hardware, software, or a combination thereof. For hardware implementation, a processing unit configured to perform these technologies at a communication apparatus (for example, a base station, a terminal, a network entity, or a chip) may be implemented in one or more general-purpose processors, a DSP, a digital signal processor, an ASIC, a programmable logic device, an FPGA or another programmable logic apparatus, a discrete gate or transistor logic device, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

It may be understood that the memory in embodiments of this application may be a transitory memory or a non-transitory memory, or may include a transitory memory and a non-transitory memory. The non-transitory memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The transitory memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another proper type.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It may be understood that, in this application, "when" and "if" mean that an apparatus performs corresponding processing in an objective situation, but do not constitute a limitation on time, do not require that the apparatus has a determining action during implementation, and do not mean any other limitation.

" Simultaneously" in this application may be understood as being at a same time point, may be understood as being within a time period, or may be understood as being within a same periodicity.

A person skilled in the art may understand that various numerals such as first and second in this application are only for distinguishing for ease of description, but are not for limiting the scope of embodiments of this application. A specific value of a numeral (which may also be referred to as an index), a specific value of a quantity, and a position in this application are only used as examples, but are not unique representation forms, and are not for limiting the scope of embodiments of this application. Various numerals such as first and second in this application are also only for distinguishing for ease of description, but are not for limiting the scope of embodiments of this application.

In this application, an element represented in a singular form is intended to indicate "one or more", but does not indicate "only one", unless otherwise specified. In this application, unless otherwise specified, "at least one" is intended to indicate "one or more", and "a plurality of" is intended to indicate "two or more".

In addition, the terms "system" and "network" may be used interchangeably in this specification. The term "and/or" in this specification describes only an association relationship for describing associated objects and indicates that three relationships may exist. For example, A and/or B may indicate the following three cases: only A exists, both A and B exist, and only B exists. A may be singular or plural, and B may be singular or plural. The character "/" generally indicates an "or" relationship between the associated objects.

The term "at least one of" in this specification indicates all or any combination of listed items. For example, "at least one of A, B, and C" may indicate the following six cases: Only A exists, only B exists, only C exists, both A and B exist, both B and C exist, and A, B, and C exist. A may be singular or plural, B may be singular or plural, and C may be singular or plural.

It may be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

The correspondences shown in the tables in this application may be configured, or may be predefined. Values of the information in the tables are merely examples, and other values may be configured. This is not limited in this application. When a correspondence between information and each parameter is configured, not all correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in this application may be understood as "define", "pre-define", "store", "pre-store", "pre-negotiate", "pre-configure", "solidify", or "pre-burn".

A person of ordinary skill in the art may understand that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that, for a purpose of convenient and brief descriptions, for a detailed working process of the foregoing system, apparatus, and unit, refer to a corresponding process in the foregoing method embodiments. Details are not described herein again.

It may be understood that the system, apparatus, and method described in this application may alternatively be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

For same or similar parts in embodiments of this application, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:

   receiving first indication information from a first communication device; and
   when the first indication information indicates hybrid automatic repeat request HARQ retransmission, sending first data to the first communication device through a HARQ operation, wherein the first data comprises HARQ retransmission data; or
   when the first indication information indicates network coding-based transmission, sending first data to the first communication device through network coding, wherein the first data comprises network-coded data

2. The method according to claim 1, wherein the method further comprises:
   when the first indication information indicates HARQ retransmission and network coding-based transmission, sending first data to the first communication device through a HARQ operation and network coding, wherein the first data comprises HARQ retransmission data and network-coded data.

3. A communication method, comprising:

   sending second data to a first communication device;
receiving second indication information from the first communication device, wherein the second indication information indicates a reception status of the second data; and
when the reception status of the second data meets a first condition, sending first data to the first communication device through a hybrid automatic repeat request HARQ operation, wherein the first data comprises HARQ retransmission data; or
when the reception status of the second data meets a second condition, sending first data to the first communication device through network coding, wherein the first data comprises network-coded data

4. The method according to claim 3, wherein a part or all of the second data is carried in a transport block TB, and the TB comprises one or more code blocks CBs;

   that the reception status of the second data meets the first condition comprises:
   a ratio of a quantity of incorrectly received CBs in the TB to a quantity of all CBs in the TB is greater than a first threshold; and
   that the reception status of the second data meets the second condition comprises:
   a ratio of a quantity of incorrectly received CBs in the TB to a quantity of all CBs in the TB is less than a second threshold.

5. The method according to claim 3, wherein a part or all of the second data is carried in a transport block TB, and the TB comprises one or more code block groups CBGs;

   that the reception status of the second data meets the first condition comprises:
   a ratio of a quantity of incorrectly received CBGs in the TB to a quantity of all CBGs in the TB is greater than a third threshold; and
   that the reception status of the second data meets the second condition comprises:
   a ratio of a quantity of incorrectly received CBGs in the TB to a quantity of all CBGs in the TB is less than a fourth threshold.

6. A communication method, comprising:

   sending second data to a first communication device;
   receiving second indication information from the first communication device, wherein the second indication information indicates a reception status of the second data; and
   when the reception status of the second data meets a third condition, sending first data to the first communication device through a hybrid automatic repeat request HARQ operation and network coding, wherein the first data comprises HARQ retransmission data and network-coded data;
   when the reception status of the second data meets a fourth condition, sending first data to the first communication device through a HARQ operation, wherein the first data comprises HARQ retransmission data; or
   when the reception status of the second data meets a fifth condition, sending first data to the first communication device through network coding, wherein the first data comprises network-coded data

7. The method according to claim 6, wherein a part or all of the second data is carried in a transport block TB, and the TB comprises one or more code blocks CBs;

   that the reception status of the second data meets the third condition comprises:
   a ratio of a quantity of incorrectly received CBs in the TB to a quantity of all CBs in the TB is greater than a fifth threshold;
   that the reception status of the second data meets the fourth condition comprises:
   a ratio of a quantity of incorrectly received CBs in the TB to a quantity of all CBs in the TB falls within a first value interval; and
   that the reception status of the second data meets the fifth condition comprises:
   a ratio of a quantity of incorrectly received CBs in the TB to a quantity of all CBs in the TB is less than a sixth threshold.

8. The method according to claim 6, wherein a part or all of the second data is carried in a transport block TB, and the TB comprises one or more code block groups CBGs;

   that the reception status of the second data meets the third condition comprises:
   a ratio of a quantity of incorrectly received CBGs in the TB to a quantity of all CBGs in the TB is greater than a seventh threshold;
   that the reception status of the second data meets the fourth condition comprises:
   a ratio of a quantity of incorrectly received CBGs in the TB to a quantity of all CBGs in the TB falls within a second value interval; and
   that the reception status of the second data meets the fifth condition comprises:
   a ratio of a quantity of incorrectly received CBGs in the TB to a quantity of all CBGs in the TB is less than an eighth threshold.

**9.** A communication method, comprising:

receiving third indication information from a first communication device, wherein the third indication information indicates channel quality; and
when the channel quality meets a sixth condition, sending first data to the first communication device through a hybrid automatic repeat request HARQ operation, wherein the first data comprises HARQ retransmission data; or
when the channel quality meets a seventh condition, sending first data to the first communication device through network coding, wherein the first data comprises network-coded data

**10.** The method according to claim 9, wherein the channel quality is represented by a signal to interference plus noise ratio SINR, a channel quality indicator CQI, reference signal received power RSRP, a received signal strength indicator RSSI, or reference signal received quality RSRQ;

that the channel quality meets the sixth condition comprises:
the SINR, the CQI, the RSRP, the RSSI, or the RSRQ is less than a ninth threshold; and
that the channel quality meets the seventh condition comprises:
the SINR, the CQI, the RSRP, the RSSI, or the RSRQ is greater than a tenth threshold.

**11.** A communication method, comprising:

receiving third indication information from a first communication device, wherein the third indication information indicates channel quality; and
when the channel quality meets an eighth condition, sending first data to the first communication device through a hybrid automatic repeat request HARQ operation and network coding, wherein the first data comprises HARQ retransmission data and network-coded data;
when the channel quality meets a ninth condition, sending first data to the first communication device through a HARQ operation, wherein the first data comprises HARQ retransmission data; or
when the channel quality meets a tenth condition, sending first data to the first communication device through network coding, wherein the first data comprises network-coded data

**12.** The method according to claim 11, wherein the channel quality is represented by a signal to interference plus noise ratio SINR, a channel quality indicator CQI, reference signal received power RSRP, a received signal strength indicator RSSI, or reference signal received quality RSRQ;

that the channel quality meets the eighth condition comprises:
the SINR, the CQI, the RSRP, the RSSI, or the RSRQ is less than an eleventh threshold;
that the channel quality meets the ninth condition comprises:
the SINR, the CQI, the RSRP, the RSSI, or the RSRQ falls within a third value interval; and
that the channel quality meets the tenth condition comprises:
the SINR, the CQI, the RSRP, the RSSI, or the RSRQ is greater than a twelfth threshold.

**13.** The method according to any one of claims 1 to 12, wherein the network-coded data comprises network-coded retransmission data and/or network-coded new transmission data

**14.** A communication method, comprising:

receiving second data from a second communication device;
sending, to the second communication device, first indication information used for transmitting first data; and
receiving the first data from the second communication device, wherein
when a reception status of the second data meets a first condition, the first indication information indicates hybrid automatic repeat request HARQ retransmission, and the first data comprises HARQ retransmission data; or
when a reception status of the second data meets a second condition, the first indication information indicates network coding-based transmission, and the first data comprises network-coded data

**15.** The method according to claim 14, wherein a part or all of the second data is carried in a transport block TB, and the TB comprises one or more code blocks CBs;

that the reception status of the second data meets the first condition comprises:
a ratio of a quantity of incorrectly received CBs in the TB to a quantity of all CBs in the TB is greater than a first threshold; and
that the reception status of the second data meets the second condition comprises:
a ratio of a quantity of incorrectly received CBs in the TB to a quantity of all CBs in the TB is less than a second threshold.

**16.** The method according to claim 14, wherein a part or all of the second data is carried in a transport block TB, and the TB comprises one or more code block groups CBGs;

that the reception status of the second data meets the first condition comprises:
a ratio of a quantity of incorrectly received CBGs in the TB to a quantity of all CBGs in the TB is greater than a third threshold; and
that the reception status of the second data meets the second condition comprises:
a ratio of a quantity of incorrectly received CBGs in the TB to a quantity of all CBGs in the TB is less than a fourth threshold.

**17.** A communication method, comprising:

receiving second data from a second communication device;
sending, to the second communication device, first indication information used for transmitting first data; and
receiving the first data from the second communication device, wherein
when a reception status of the second data meets a third condition, the first indication information indicates hybrid automatic repeat request HARQ retransmission and network coding-based transmission, and the first data comprises HARQ retransmission data and network-coded data;
when a reception status of the second data meets a fourth condition, the first indication information indicates HARQ retransmission, and the first data comprises HARQ retransmission data; or
when a reception status of the second data meets a fifth condition, the first indication information indicates network coding-based transmission, and the first data comprises network-coded data

**18.** The method according to claim 17, wherein a part or all of the second data is carried in a transport block TB, and the TB comprises one or more code blocks CBs;

that the reception status of the second data meets the third condition comprises:
a ratio of a quantity of incorrectly received CBs in the TB to a quantity of all CBs in the TB is greater than a fifth threshold;
that the reception status of the second data meets the fourth condition comprises:
a ratio of a quantity of incorrectly received CBs in the TB to a quantity of all CBs in the TB falls within a first value interval; and
that the reception status of the second data meets the fifth condition comprises:
a ratio of a quantity of incorrectly received CBs in the TB to a quantity of all CBs in the TB is less than a sixth threshold.

**19.** The method according to claim 17, wherein a part or all of the second data is carried in a transport block TB, and the TB comprises one or more code block groups CBGs;

that the reception status of the second data meets the third condition comprises:
a ratio of a quantity of incorrectly received CBGs in the TB to a quantity of all CBGs in the TB is greater than a seventh threshold;
that the reception status of the second data meets the fourth condition comprises:
a ratio of a quantity of incorrectly received CBGs in the TB to a quantity of all CBGs in the TB falls within a second value interval; and
that the reception status of the second data meets the fifth condition comprises:
a ratio of a quantity of incorrectly received CBGs in the TB to a quantity of all CBGs in the TB is less than an eighth threshold.

**20.** A communication method, comprising:

receiving second data from a second communication device;
sending, to the second communication device, second indication information used for transmitting first data, wherein the second indication information indicates a reception status of the second data; and
receiving the first data from the second communication device, wherein
when the reception status of the second data meets a first condition, the first data comprises hybrid automatic repeat request HARQ retransmission data; or
when the reception status of the second data meets a second condition, the first data comprises network-coded data

**21.** The method according to claim 20, wherein a part or all of the second data is carried in a transport block TB, and the TB comprises one or more code blocks CBs;

that the reception status of the second data meets the first condition comprises:
a ratio of a quantity of incorrectly received CBs in the TB to a quantity of all CBs in the TB is greater than a first threshold; and
that the reception status of the second data meets the second condition comprises:
a ratio of a quantity of incorrectly received CBs in the TB to a quantity of all CBs in the TB is less than a second threshold.

**22.** The method according to claim 20, wherein a part or all of the second data is carried in a transport block TB, and the TB comprises one or more code block groups CBGs;

that the reception status of the second data meets the first condition comprises:
a ratio of a quantity of incorrectly received CBGs in the TB to a quantity of all CBGs in the TB is greater than a third threshold; and
that the reception status of the second data meets the second condition comprises:
a ratio of a quantity of incorrectly received CBGs in the TB to a quantity of all CBGs in the TB is less than a fourth threshold.

**23.** A communication method, comprising:

receiving second data from a second communication device;
sending, to the second communication device, second indication information used for transmitting first data, wherein the second indication information indicates a reception status of the second data; and
receiving the first data from the second communication device, wherein
when the reception status of the second data meets a third condition, the first data comprises hybrid automatic repeat request HARQ retransmission data and network-coded data;
when the reception status of the second data meets a fourth condition, the first data comprises HARQ retransmission data; or
when the reception status of the second data meets a fifth condition, the first data comprises network-coded data

**24.** The method according to claim 23, wherein a part or all of the second data is carried in a transport block TB, and the TB comprises one or more code blocks CBs;

that the reception status of the second data meets the third condition comprises:
a ratio of a quantity of incorrectly received CBs in the TB to a quantity of all CBs in the TB is greater than a fifth threshold;
that the reception status of the second data meets the fourth condition comprises:
a ratio of a quantity of incorrectly received CBs in the TB to a quantity of all CBs in the TB falls within a first value interval; and
that the reception status of the second data meets the fifth condition comprises:
a ratio of a quantity of incorrectly received CBs in the TB to a quantity of all CBs in the TB is less than a sixth threshold.

**25.** The method according to claim 23, wherein a part or all of the second data is carried in a transport block TB, and the TB comprises one or more code block groups CBGs;

that the reception status of the second data meets the third condition comprises:
a ratio of a quantity of incorrectly received CBGs in the TB to a quantity of all CBGs in the TB is greater than a seventh threshold;
that the reception status of the second data meets the fourth condition comprises:
a ratio of a quantity of incorrectly received CBGs in the TB to a quantity of all CBGs in the TB falls within a second value interval; and
that the reception status of the second data meets the fifth condition comprises:
a ratio of a quantity of incorrectly received CBGs in the TB to a quantity of all CBGs in the TB is less than an eighth threshold.

**26.** A communication method, comprising:

obtaining channel quality;
sending, to a second communication device, third indication information used for transmitting first data, wherein the third indication information indicates the channel quality; and
receiving the first data from the second communication device, wherein
when the channel quality meets a sixth condition, the first data comprises hybrid automatic repeat request HARQ retransmission data; or
when the channel quality meets a seventh condition, the first data comprises network-coded data.

**27.** The method according to claim 26, wherein the channel quality is represented by a signal to interference plus noise ratio SINR, a channel quality indicator CQI, reference signal received power RSRP, a received signal strength indicator RSSI, or reference signal received quality RSRQ;

that the channel quality meets the sixth condition comprises:
the SINR, the CQI, the RSRP, the RSSI, or the RSRQ is less than a ninth threshold; and
that the channel quality meets the seventh condition comprises:
the SINR, the CQI, the RSRP, the RSSI, or the RSRQ is greater than a tenth threshold.

**28.** A communication method, comprising:

obtaining channel quality;
sending, to a second communication device, third indication information used for transmitting first data, wherein the third indication information indicates the channel quality; and
receiving the first data from the second communication device, wherein
when the channel quality meets an eighth condition, the first data comprises hybrid automatic repeat request HARQ retransmission data and network-coded data;
when the channel quality meets a ninth condition, the first data comprises HARQ retransmission data; or
when the channel quality meets a tenth condition, the first data comprises network-coded data

**29.** The method according to claim 28, wherein the channel quality is represented by a signal to interference plus noise ratio SINR, a channel quality indicator CQI, reference signal received power RSRP, a received signal strength indicator RSSI, or reference signal received quality RSRQ;

that the channel quality meets the eighth condition comprises:
the SINR, the CQI, the RSRP, the RSSI, or the RSRQ is less than an eleventh threshold;
that the channel quality meets the ninth condition comprises:
the SINR, the CQI, the RSRP, the RSSI, or the RSRQ falls within a third value interval; and
that the channel quality meets the tenth condition comprises:
the SINR, the CQI, the RSRP, the RSSI, or the RSRQ is greater than a twelfth threshold.

**30.** The method according to any one of claims 14 to 29, wherein the network-coded data comprises network-coded retransmission data and/or network-coded new transmission data

**31.** A communication apparatus, comprising a processor, wherein the processor is coupled to a memory, the memory is configured to store a program or instructions, and when the program or the instructions is or are executed by the processor, the apparatus is enabled to perform the method according to any one of claims 1 to 13, or the apparatus is enabled to perform the method according to any one of claims 14 to 30.

**32.** A computer-readable storage medium, wherein the computer-readable storage medium stores a computer program or instructions, and when the computer program or the instructions is or are executed, a computer is enabled to perform the method according to any one of claims 1 to 13, or a computer is enabled to perform the method according to any one of claims 14 to 30.

**33.** A communication apparatus, wherein the apparatus is configured to perform the method according to any one of claims 1 to 13, or is configured to perform the method according to any one of claims 14 to 30.

**34.** A computer program product, wherein the computer program product comprises computer program code, and when the computer program code is run on a computer, the computer is enabled to implement the method according to any one of claims 1 to 13 or implement the method according to any one of claims 14 to 30.

**35.** A chip, comprising a processor, wherein the processor is coupled to a memory, the memory is configured to store a program or instructions, and when the program or the instructions is or are executed by the processor, the apparatus is enabled to perform the method according to any one of claims 1 to 13 or the method according to any one of claims 14 to 30.

118
128
110
120
114
124
100

FIG. 1

Core network
RAN
gNB
CU
gNB
CU
DU
DU
DU
DU

FIG. 2

N original data units
X1
X2
...
XN
K coded data units
Y1
Y2
Y3
Y4
...
YK

FIG. 3

400
First communication device
Second communication device
410
Second data
420
First indication information
430
First data

FIG. 4

500
First communication device
Second communication device
510
Second data
520
Second indication information
530
First data

FIG. 5

600
First communication device
Second communication device
610
Obtain channel quality
620
Third indication information
630
First data

FIG. 6

First communication device
Second communication device
X1 X2 X3 X4 X5 X6
Y1 Y2 Y3 Y4 Y5 Y6
Y1 Y2 Y3 Y4 Y5 Y6
CBG1 CBG2 CBG3 CBG4 CBG5
CBG1 CBG2 CBG3 CBG4 CBG5
T−t1
Y2 Y3 Y4 Y5
CBG2 CBG3 CBG4
CBG2 CBG3 CBG4
T
X1 X2 X3 X4 X5 X6
Y7 Y8
Y7 Y8 Y9 Y10 Y11 Y12
CBG6 CBG7
CBG6 CBG7
T+t2

FIG. 7

First communication device
Second communication device
X1 X2 X3 X4 X5 X6
Y1 Y2 Y3 Y4 Y5 Y6
CBG1 CBG2 CBG3 CBG4 CBG5
Y1 Y2 Y3 Y4 Y5 Y6
CBG1 CBG2 CBG3 CBG4 CBG5
T−t1
Y2 Y3 Y4 Y5
CBG2 CBG3 CBG4
CBG2 CBG3 CBG4
T
X1 X2 X3 X4 X5 X6 X7 X8
Y7 Y8 Y9 Y10
Y7 Y8 Y9 Y10
CBG6 CBG7 CBG8 CBG9
CBG6 CBG7 CBG8 CBG9
T+t2

FIG. 8

Second communication device
$X_1$ $X_2$ $X_3$ $X_4$ $X_5$ $X_6$
$Y_1$ $Y_2$ $Y_3$ $Y_4$ $Y_5$ $Y_6$
$CBG_1$ $CBG_2$ $CBG_3$ $CBG_4$ $CBG_5$
T−t1
First communication device
$Y_1$ $Y_2$ $Y_3$ $Y_4$ $Y_5$ $Y_6$
$CBG_1$ $CBG_2$ $CBG_3$ $CBG_4$ $CBG_5$
$X_1$ $X_2$ $X_3$ $X_4$ $X_5$ $X_6$
$Y_7$ $Y_8$ $Y_9$ $Y_{10}$ $Y_{11}$ $Y_{12}$
$CBG_2$ $CBG_3$ $CBG_4$ $CBG_6$ $CBG_7$
T
$Y_2$ $Y_3$ $Y_4$ $Y_5$
$CBG_2$ $CBG_3$ $CBG_4$
$Y_7$ $Y_8$
$CBG_6$ $CBG_7$

FIG. 9

First communication device
Second communication device
$X_1$ $X_2$ $X_3$ $X_4$ $X_5$ $X_6$
$Y_1$ $Y_2$ $Y_3$ $Y_4$ $Y_5$ $Y_6$
$CBG_1$ $CBG_2$ $CBG_3$ $CBG_4$ $CBG_5$
T−t1
$X_1$ $X_2$ $X_3$ $X_4$ $X_5$ $X_6$ $X_7$ $X_8$ $X_9$ $X_{10}$
$Y_7$ $Y_8$ $Y_9$ $Y_{10}$ $Y_{11}$ $Y_{12}$ $Y_{13}$ $Y_{14}$
$CBG_6$ $CBG_7$ $CBG_8$ $CBG_9$ $CBG_{10}$
T
$X_1$ $X_2$ $X_3$ $X_4$ $X_5$ $X_6$ $X_7$ $X_8$
$Y_{15}$ $Y_{16}$ $Y_{17}$
$CBG_{11}$ $CBG_{12}$ $CBG_{13}$
T+t2

FIG. 10

1100
1101
Processor
Instructions
1103
1102
Memory
Instructions
1104
Transceiver
Antenna
1105
1106

FIG. 11

Antenna
1211
Control circuit
1200
1212
Memory
Processor
Input/Output apparatus

FIG. 12

1300
Storage module 1303
Transceiver module 1301
Processing module 1302

FIG. 13

**INTERNATIONAL SEARCH REPORT**

International application No. **PCT/CN2020/102819**

**A. CLASSIFICATION OF SUBJECT MATTER**

H04W 72/12(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 混合自动重传请求, 传输块, 编码块, 指示信息, 信道指示, 信道质量, 网络编码, 减少重传, HARQ, TB, transport block, CB, code block, indication information, DCI, downlink control indication, reduce retransmission

**C. DOCUMENTS CONSIDERED TO BE RELEVANT**

| Category* | Citation of document, with indication, where appropriate, of the relevant passages | Relevant to claim No. |
|---|---|---|
| X | CN 109152071 A (RESEARCH INSTITUTE OF CHINA MOBILE COMMUNICATIONS CORPORATION et al.) 04 January 2019 (2019-01-04) description, paragraphs [0002]-[0028] | 1-35 |
| X | WO 2018027914 A1 (NOKIA SOLUTIONS AND NETWORKS OY et al.) 15 February 2018 (2018-02-15) description, pages 10-21 | 1-35 |
| A | CN 105102084 A (HUAWEI TECHNOLOGIES CO., LTD.) 25 November 2015 (2015-11-25) entire document | 1-35 |
| A | 3GPP. "3rd Generation Partnership Project; Technical Specification Group Radio Access Network; NR; Physical Layer Procedures for Control (Release 15)" *3GPP TS 38.213 V1.0.1 (2017-09),* 30 September 2017 (2017-09-30), entire document | 1-35 |

☐ Further documents are listed in the continuation of Box C. ☑ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **02 April 2021** | **20 April 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2020/102819**

| Patent document cited in search report | | | Publication date (day/month/year) | Patent family member(s) | | | Publication date (day/month/year) |
|---|---|---|---|---|---|---|---|
| CN | 109152071 | A | 04 January 2019 | None | | | |
| WO | 2018027914 | A1 | 15 February 2018 | MX | 2019001753 | A | 17 June 2019 |
| | | | | TW | 201810984 | A | 16 March 2018 |
| | | | | CA | 3033528 | A1 | 15 February 2018 |
| | | | | CN | 109792322 | A | 21 May 2019 |
| | | | | KR | 20190034661 | A | 02 April 2019 |
| | | | | AU | 2016418887 | A1 | 28 February 2019 |
| | | | | SG | 11201901132 | A1 | 28 March 2019 |
| | | | | EP | 3497841 | A1 | 19 June 2019 |
| | | | | IN | 201947005517 | A | 22 March 2019 |
| | | | | VN | 63419 | A | 27 May 2019 |
| CN | 105102084 | A | 25 November 2015 | WO | 2015139277 | A1 | 24 September 2015 |

Form PCT/ISA/210 (patent family annex) (January 2015)